# EUROPEAN PATENT SPECIFICATION

(11) **EP 3 919 446 B1**
(45) Date of publication and mention of the grant of the patent: **06.08.2025**
(21) Application number: 20748407.2
(22) Date of filing: 20.01.2020
(51) Int. Cl.: C02F 1/72, B09B 3/00, B09B 5/00, B01J 19/24, B01J 3/04, B02C 23/08, B02C 23/18, B02C 18/14, C02F 101/30, C02F 11/08, B09B 3/40, C02F 1/04, C02F 101/00

(54) **TREATMENT OF RADIOACTIVE ORGANIC SOLID WASTE BY SUPERCRITICAL WATER OXIDATION**
BEHANDLUNG VON RADIOAKTIVEN ORGANISCHEN FESTSTOFFABFÄLLEN DURCH SUPERKRITISCHE WASSEROXIDATION
TRAITEMENT DE DÉCHETS SOLIDES ORGANIQUES RADIOACTIFS PAR OXYDATION EN EAU SUPERCRITIQUE

(30) Priority: 03.02.2019 CN 201910108862; 03.02.2019 CN 201910109483; 03.02.2019 CN 201910108898; 03.02.2019 CN 201910108896; 03.02.2019 CN 201910108890
(43) Date of publication of application: 08.12.2021
(73) Proprietor: China Institute of Atomic Energy, Beijing 102413 (CN)
(72) Inventor: ZHANG, Zhentao, Beijing 102413 (CN); CHEN, Yan, Beijing 102413 (CN); LIU, Yi, Beijing 102413 (CN); PENG, Lin, Beijing 102413 (CN); LONG, Bokang, Beijing 102413 (CN); ZHANG, Yu, Beijing 102413 (CN); REN, Ren, Beijing 102413 (CN); SUN, Runjie, Beijing 102413 (CN); LI, Ruizhi, Beijing 102413 (CN); LI, Zhenyi, Beijing 102413 (CN); ZHANG, Lijun, Beijing 102413 (CN); ZHANG, Xingwang, Beijing 102413 (CN); LUO, Yongzhi, Beijing 102413 (CN); NIE, Peng, Beijing 102413 (CN); ZHANG, Weiting, Beijing 102413 (CN); ZHANG, Jianguo, Beijing 102413 (CN); WANG, Haiyun, Beijing 102413 (CN); QIU, Wenping, Beijing 102413 (CN)
(74) Representative: Isarpatent
(86) International application number: PCT/CN2020/073313
(87) International publication number: WO 2020/156336

(56) References cited:
- WO-A1-2013/058653
- WO-A1-2013/058653
- WO-A1-2018/109390
- CN-A- 101 629 028
- CN-A- 103 350 103
- CN-A- 103 350 103
- CN-A- 103 708 599
- CN-A- 105 152 509
- CN-A- 105 782 995
- CN-A- 106 050 416
- CN-A- 106 050 416
- CN-A- 107 930 538
- CN-A- 108 751 383
- CN-A- 109 647 319
- CN-A- 109 772 543
- CN-A- 109 848 182
- CN-A- 109 851 029
- CN-A- 109 851 030
- CN-A- 109 851 130
- CN-U- 207 872 358
- CN-U- 207 981 332
- CN-U- 207 981 332
- JP-A- H11 226 584
- US-A- 4 968 009
- US-A1- 2008 135 496
- US-A1- 2009 127 209
- US-A1- 2014 151 277
- US-A1- 2015 352 391
- CALZAVARA, Y. ET AL.: ""A New Reactor Concept for Hydrothermal Oxidation"", JOURNAL OF SUPERCRITICAL FLUIDS, vol. 31, no. 2, 31 August 2004 (2004-08-31), XP004576497, ISSN: 0896-8446, DOI: 20200413174024Y

## Description

### TECHNICAL FIELD

The present disclosure relates to a field of solid waste treatment, and in particular to a supercritical water oxidation system and a method of treating a solid waste.

### BACKGROUND

With a development of a nuclear energy industry and an increasing application of radioisotopes, radioactive wastes are increasing. If the radioactive wastes are discharged without treatment or with improper treatment, the environment may be exposed to a radioactive pollution, which not only affects a growth of animals and plants and deteriorates water bodies, but also endangers human health and even has adverse effects on future generations.

A supercritical water oxidation method is a new type of wet oxidation technology. By taking advantage of a complete miscibility of organic waste, water and oxygen in a supercritical water system, the organic waste is oxidized and decomposed into water, carbon dioxide, nitrogen and other gases, and radionuclide contained therein is converted into inorganic salts, thereby achieving the treatment of an organic solvent distillation residue. Generally, the supercritical water refers to water in a special state with a temperature exceeding 374 °C and a pressure exceeding 22 MPa. In the supercritical water state, the organic waste and the oxygen are completely miscible in the supercritical water system. When a temperature of the supercritical water exceeds 550 °C, a solubility of inorganic salts therein is zero. It is possible to convert an organic matter into carbon dioxide, water and inorganic salts by using this property of the supercritical water, and a separation of radioactive elements may be achieved by using a zero solubility of inorganic salts at a temperature above 550 °C.

Water is a common solvent, and various pollutants generally contain water. Therefore, supercritical water oxidation technology may be applied to various fields such as environmental protection, chemical industry, coal gasification, nuclear power and thermal power, new material synthesis, etc., to treat pollutants such as sewage and sludge.

In recent years, relevant nuclear research units in the United States, France, Russia, Japan and other countries have actively carried out researches on supercritical water treatment of organic waste, established experimental devices, and part of works has reached a scale of pilot tests. Upon researches, it is believed that the supercritical water oxidation method has high decomposition efficiency, short treatment cycle, no open flame and less secondary waste and is environmentally friendly. The supercritical water oxidation method is suitable for treating a variety of organic wastes, and is a treatment technology with great potential.

However, in a process of realizing a concept of the present disclosure, the inventor found that at least following problems exist in a related art.

Generally, in the related art, the treatment process of the supercritical water oxidation reactor is to directly mix an oxidant and a waste in the reactor. The reaction will not occur until a temperature of the oxidant and the waste reaches a certain temperature. In this case, the waste may not only lower a temperature in a reaction zone, but also results in a long reaction time of the waste in the supercritical water oxidation reactor and reduce the reaction efficiency.

At present, radioactive solid waste is generally treated and disposed by the way of concentration, volume reduction and isolation from the environment (such as burial). Although the use of supercritical water oxidation and decomposition technology has become a hot topic in the research of organic waste treatment, the supercritical water oxidation has not been applied to the solid waste at home and abroad. A first reason is that the radioactive organic waste cannot be shredded to a sufficiently small particle size. At present, due to a limitation of a shredding process for solid combustibles at home and abroad, the pieces obtained generally have a dimension greater than 5 mm. Moreover, due to the radioactive pollution from the radioactive organic waste, there is substantially no shredding and milling process for the radioactive solid organic waste. This will undoubtedly affect a subsequent implementation of the supercritical water oxidation treatment technology. A second reason is a lack of protection technology for a high-temperature and high-pressure apparatus. Therefore, it is very important to develop the protection technology applicable to the high-temperature and high-pressure reaction apparatus.

In the related art, the supercritical water oxidation reactor is used to treat a liquid waste and is difficult to perform the supercritical water oxidation treatment on the solid waste. The supercritical water oxidation reactor in the related art cannot solve problems of reducing a volume and a harmfulness of the radioactive solid combustible wastes in nuclear power plants and other nuclear facilities.

A supercritical water apparatus system has not been formed as an integrated machine, supercritical water oxidation, effluence purification and protective apparatus are implemented by different apparatus, and the system integration is insufficient, which results in that the supercritical water apparatus is not promoted and applied in the form of industrial products. Furthermore, a reaction temperature for conventional supercritical water technology is generally 500 °C to 600 °C, which is lower than a minimum temperature required for a complete pyrolysis and gasification of the organic matter (about 700 °C), and at which a refractory organic matter (such as amines) cannot be completely inorganicized, so that the advantages of supercritical water oxidation are not fully utilized.

US2015352391A1 discloses a hydrothermal oxidation device for treatment of a material in a supercritical medium including a main body, an internal tube installed inside the main body to form an annular zone along the main body, a stirring mechanism installed in an internal zone of the internal tube and actuated by a rotating shaft, a cooling mechanism to cool the treated material located in the internal zone of the internal tube, an inlet for water and oxidant mix, an effluents outlet, an inlet for material to be treated, located at one end of the main body, this inlet opening up into the internal tube. The oxidation device includes an inlet for a diluted effluent, located in the flange and connected to a preheating coil arranged along an internal wall of the main body and extending from its first end to its second end, the preheating coil opening up into the internal tube.

CN108751383A relates to the field of supercritical water oxidation, and in particular to a countercurrent type supercritical water oxidation kettle type reactor as well as a preparation method and application thereof. The reactor comprises a barrel, an upper end enclosure, a lower end enclosure, and an external sleeve, the upper end enclosure and the lower end enclosure are respectively tightly arranged on the top and bottom of the barrel, and the external sleeve is arranged on the outside of the barrel; a closed gap is arranged between the barrel and the external sleeve; a cold wastewater inlet pipe is connected to the lower part of the sidewall of the external sleeve, and a subcritical wastewater outlet pipe is connected to the upper part of the sidewall; an oxidant preheating pipe anda wastewater preheating pipe are arranged along the direction of the central axis of the barrel in the barrel, the upper ends of the oxidant preheating pipe and the wastewater preheating pipe extend out of the top of the upper end enclosure and are respectively connected to an oxidant inlet pipe and a subcritical wastewater inlet pipe, and after the lower ends are jointed, the opening is downward; the subcritical wastewater outlet pipe is connected to the subcritical wastewater inlet pipe; an after-reaction wastewater outlet pipe is connected to the sidewall of the upper end enclosure, and an impurity discharge pipe is connected to the bottom of the lower end enclosure. According to the invention, wastewater is preheated and transferred into the reactor, and thereby the problem that a preheating heat exchanger can be blocked and corroded is solved.

CN105782995A provides a jet combustion device and method for super-critical water oxidization of organic matter. The device comprises an inner sleeve and an outer sleeve which are arranged together in a coaxial sleeving manner; a coaxial jet combustor extending into the reactor inner sleeve is coaxially installed at the top of the reactor inner sleeve; the coaxial jet combustor is of a three-layer coaxial sleeve structure, an auxiliary heat source access channel is located on the innermost layer, an oxidant access annular channel is located on the middle layer, and a waste liquid access annular channel is located on the outermost layer; and a process water jacket region, a super-critical water oxidization region and a subcritical water region capable of dissolving inorganic salt are formed in a reactor.

US2009127209A1 discloses a reactor for treating with pressurized water a material in a fluid reaction medium. It comprises a body (2) delimiting a reaction area (10), an inlet (48) for the material to be treated in the reaction area (10), a point (46) for introducing an oxidant into the reaction area (10), at least one outlet for the treated material outside the reaction area (10), the material to be treated follows a path defined in the reaction area between its inlet and its outlet. The point (46) for introducing the oxidant in the reaction area (10) is located downstream from the inlet (48) for the material and is spaced apart from the latter by a certain distance so as to define an anoxic area (20) comprised between the inlet for the material to be treated and the point for introducing the oxidant, an area in which the fluid medium is in anoxia.

US2014151277A1 discloses a fluid purification system including a reaction tank which purifies a purification target fluid by decomposing an organic substance in a purification target fluid with an oxidation reaction while heating and pressurizing a mixed fluid of the purification target fluid and an oxidant; a crusher which crushes an organic solid waste so as to obtain an organic crushed product; and a mixer which mixes the organic crushed product and liquid so as to obtain high concentration organic slurry.

### SUMMARY

The invention is set out by the appended set of claims. In order to solve the above and other problems in a related art, embodiments of the present disclosure provide a supercritical water oxidation system and a method of treating a solid waste.

An aspect of the present disclosure provides a supercritical water oxidation reactor, including: a housing provided with at least a slurry inlet, an oxidant inlet and a discharge port, wherein a chamber for providing a reaction zone is formed inside the housing; a heating device configured to increase a temperature in the chamber; a spiral circulation pipe arranged in the chamber and having an end connected to the slurry inlet, wherein a slurry is introduced from the slurry inlet into the spiral circulation pipe, flows along a pipeline of the spiral circulation pipe, and flows out from another end of the spiral circulation pipe; wherein after flowing out from the another end of the spiral circulation pipe, the slurry is mixed with an oxidant flowing into the chamber from the oxidant inlet, and an oxidation reaction of the slurry and the oxidant occurs, the reactor further comprising
a turn-back tube arranged inside the chamber, the turn-back tube includes an inner tube with both ends open and an outer tube with one end open, the outer tube is sleeved outside the inner tube, and the inner tube is in communication with the oxidant inlet, wherein the turn-back tube is arranged at a central axis of the chamber, the reactor further comprising
a stirrer including a rotating shaft, the rotating shaft penetrates the housing and extends into the chamber, and/or the rotating shaft passes through the discharge port and extends into the chamber.

According to the embodiments of the present disclosure, the housing includes a first end wall, a side wall, and a second end wall opposite to the first end wall, wherein the slurry inlet is arranged on the side wall, the oxidant inlet is arranged on the first end wall, and the stirrer and the discharge port are arranged on the second end wall.

According to the embodiments of the present disclosure, the supercritical water oxidation reactor further includes a liner arranged in the chamber, wherein the spiral circulation tube is wound along an outer wall of the liner, and the liner is processed by aluminizing, shot peening, and spraying a thermal barrier coating including a plurality of aluminum layers and a plurality of aluminum oxide layers alternately arranged.

According to the embodiments of the present disclosure, the supercritical water oxidation reactor further includes a cooling device arranged on the side wall and used to cool a reaction product generated in the chamber; wherein the heating device and the cooling device are arranged side by side on the side wall, and a distance between the heating device and the first end wall is less than that between the cooling device and the first end wall.

Another aspect of the present disclosure provides a method of treating a radioactive organic waste by using a supercritical water oxidation reactor, including: pre-heating the chamber by using the heating device; feeding a target solution into the chamber through the slurry inlet in response to the temperature in the chamber reaching a first temperature, and continuously heating the chamber until the temperature in the chamber reaches a second temperature; feeding a slurry of the radioactive organic waste into the spiral circulation pipe through the slurry inlet, so that the slurry of the radioactive organic waste flows along the pipeline of the spiral circulation pipe, and flows out from another end of the spiral circulation pipe; in response to the slurry of the radioactive organic waste flowing out from the another end of the spiral circulation pipe, mixing the slurry of the radioactive organic waste with the oxidant entering the chamber from the oxidant inlet so that an oxidation reaction of the slurry of the radioactive organic waste and the oxidant occurs.

Further described is a method which further includes: in a case that the supercritical water oxidation reactor includes the turn-back tube, causing the oxidant to enter the turn-back tube from the oxidant inlet, pass through an inner tube of the turn-back tube and an outer tube of the turn-back tube in turn, and enter the chamber from an opening of the outer tube of the turn-back tube.

In a case that the supercritical water oxidation reactor includes a stirrer, the stirrer is used to stir an oxidation product obtained after the oxidation reaction.

The oxidation product may be discharged from the discharge port, wherein a temperature of the oxidation product at the discharge port is within a range of 150 °C to 300 °C, and the second temperature is greater than or equal to 600 °C.

Also described herein is a solid material shredder. The solid material shredder includes a material introduction box, a shredding device, a material container and a colloid mill that are interconnected and that are arranged sequentially. The material introduction box is used to introduce a solid material and allow the solid material to fall in an axial direction of the material introduction box. The shredding device includes a cutter rotatable when driven by an external force, and the shredding device is used to cut the solid material falling into the shredding device in the axial direction of the material introduction box into pieces by using the cutter. The material container is used to drive, by using a flowing liquid introduced into the material container, the pieces falling into the material container from the shredding device to move. A sieve plate including a plurality of sieve holes are provided at a bottom of the material container to filter out a part of the liquid and pieces with a dimension smaller than that of the plurality of sieve holes from the material container. The colloid mill is arranged under the sieve plate, and is used to mill the pieces filtered out from the material container into a slurry.

The shredding device described above may include a dicing assembly including a fixed cylinder, a rolling cylinder, and a plurality of first cutters. An axial direction of the fixed cylinder is perpendicular to the axial direction of the material introduction box, and the fixed cylinder includes a first side wall provided with a first opening in communication with the material introduction box and a second opening in communication with the material container. The rolling cylinder is arranged in the fixed cylinder in the axial direction of the fixed cylinder and includes a second side wall, and a distance between the second side wall and the first side wall corresponds to a dimension of the solid material. The plurality of first cutters are evenly arranged on an outer surface of the second side wall in a circumferential direction of the rolling cylinder so as to form a first cutter array used to cut the solid material falling between the first side wall and the second side wall in the axial direction of the material introduction box into blocks. A distance between two adjacent first cutters in the first cutter array is set to correspond to a dimension of the block.

The shredding device further may include a crushing assembly. The crushing assembly is arranged between the rolling cylinder in the fixed cylinder and the material container, and the crushing assembly includes a second cutter used to cut the falling blocks into pieces. A distance between the crushing assembly and the first side wall is greater than a preset distance, so as to allow the pieces to fall into the material container.

The second cutter may include an axial cutter and a radial cutter. The axial cutter is arranged in the axial direction of the material introduction box; and the radial cutter is arranged in a direction perpendicular to the axial direction of the material introduction box and the axial direction of the fixed cylinder. The radial cutter is coaxial with the axial direction, and the radial cutter is located between the axial cutter and the material container. The axial cutter and the radial cutter are configured to rotate around a common central axis under an action of a first external force.

The dicing assembly may further include a plurality of third cutters. The plurality of third cutters are evenly arranged on an inner surface of the first side wall in a circumferential direction of the fixed cylinder so as to form a second cutter array. The rolling cylinder is rotatable around the central axis under an action of a second external force, so that the solid material falling between the first side wall and the second side wall in the axial direction of the material introduction box is cut into blocks under an action of the first cutter array and the second cutter array.

The rolling cylinder may include at least one set of rollers. Each set of rollers in the at least one set of rollers includes two opposite rollers. The first cutter array is formed on a side wall of each of the two opposite rollers, and the two opposite rollers are rotatable in opposite directions when driven by the second external force. A distance between the two opposite rollers is less than the dimension of the solid material.

The plurality of first cutters and/or the plurality of second cutters are multi-edge cutters; and/or a distance between two adjacent first cutters in the first cutter array and/or a distance between two adjacent second cutters in the second cutter array are/is in the order of decimeters.

The material introduction box may include a pair of third side walls oppositely arranged. Each third side wall of the pair of third side walls is provided with a plurality of nozzles used to introduce a liquid, so that the solid material falls in the axial direction of the material introduction box under the action of the liquid introduced by the plurality of nozzles of the pair of third side walls. Each third side wall is arranged parallel to the axial direction of the fixed cylinder and the axial direction of the material introduction box.

The solid material shredder may further include a diversion device. The diversion device is used to drive a flowing liquid introduced into the material container to flow, and divert the liquid and the pieces not filtered out of the material container to the material introduction box.

The pieces may have a width less than 5 mm in any direction; and/or the slurry has a particle size less than 50 µm.

Also described herein is a protective device for a reaction apparatus, and the device may include a pair of protective end plates oppositely arranged and a protective assembly. The protective assembly is arranged between the pair of protective end plates, and the protective assembly includes an outer protective layer, an inner protective layer and a cooling layer. The outer protective layer and the pair of protective end plates enclose to form a first space, and the inner protective layer is arranged in the first space. The inner protective layer and the pair of protective end plates enclose to form a second space for accommodating the reaction apparatus. The inner protective layer is provided with a plurality of diversion holes in a direction of a connecting line between the pair of protective end plates, which are used to introduce a released matter of the reaction apparatus to between the outer protective layer and the inner protective layer. The cooling layer is interposed between the inner protective layer and the outer protective layer, and the cooling layer includes a liquid pipeline allowed to store a liquid. The protective assembly is configured so that liquid is stored in the liquid pipeline and the first space is a closed space in a case that the reaction apparatus accommodated in the second space is in an operating state.

The pair of protective end plates may include a first protective end plate and a second protective end plate. The first protective end plate includes a first liquid inlet, a first liquid outlet, and a first liquid passage connecting the first liquid inlet and the first liquid outlet, the first liquid inlet is openable or closable under the action of an external force, and the first liquid outlet is in communication with a liquid pipeline; the first protective end plate is configured to allow a liquid introduced from the first liquid inlet to flow through the first liquid passage and flow into the liquid pipeline from the first liquid outlet when the first liquid inlet is opened. The second protective end plate includes a second liquid inlet, a second liquid outlet, and a second liquid passage connecting the second liquid inlet and the second liquid outlet, the second liquid inlet is openable or closable under the action of an external force, and the second liquid inlet is in communication with the liquid pipeline; the second protective end plate is configured to allow the liquid in the liquid pipeline to flow out of the liquid pipeline through a second cooling liquid inlet, flow through the second liquid passage and flow out from a second cooling liquid outlet when the second liquid outlet is opened. The protective device is configured so that the first liquid inlet and the second liquid outlet are closed and a liquid is stored in the first liquid passage and the second liquid passage in a case that the reaction apparatus accommodated in the second space is in an operating state.

The first protective end plate of the pair of protective end plates may include a first liquid inlet, a first liquid outlet, and a first liquid passage connecting the first liquid inlet and the first liquid outlet; the second protective end plate of the pair of protective end plates includes a second liquid inlet, a second liquid outlet, and a second liquid passage connecting the second liquid inlet and the second liquid outlet; and the liquid pipeline includes a plurality of first pipelines extending in a direction of a connecting line between the pair of protective end plates, wherein the plurality of first pipelines are periodically arranged in a direction perpendicular to an inner protective layer and in a circumferential direction of the inner protective layer. The plurality of first pipelines have a first end and a second end that are oppositely arranged, the first end is in communication with the first liquid outlet, and the second end is in communication with the second liquid inlet.

The liquid pipeline may further include a plurality of second pipelines. The plurality of second pipelines extend in the circumferential direction of the inner protective layer, and the plurality of second pipelines are periodically arranged in the direction of the connecting line between the pair of protective end plates and the direction perpendicular to the inner protective layer. The plurality of second pipelines are in communication with the plurality of first pipelines via a plurality of pipeline connectors, and the protective device is configured to allow the liquid introduced from the first liquid inlet to flow into the first liquid passage, the first pipelines and the second pipelines sequentially.

The first protective end plate may include a first end plate, a second end plate and a first cylinder. The first cylinder is arranged between the first end plate and the second end plate so as to form a first liquid passage between the first end plate and the second end plate, the first liquid inlet is arranged on the first cylinder, the first liquid outlet is arranged on the second end plate, and the second end plate is arranged closer to the second protective end plate than the first end plate.

The second protective end plate may include a third end plate, a fourth end plate and a second cylinder. The second cylinder is arranged between the third end plate and the fourth end plate so as to form a second liquid passage between the third end plate and the fourth end plate, the second liquid outlet is arranged on the second cylinder, the second liquid inlet is arranged on the third end plate, and the third end plate is closer to the first protective end plate than the fourth end plate.

The first end plate and/or the second end plate may have/has a thickness within a range of 30 mm to 70 mm, and the second cylinder may have a height within a range of 30 mm to 70 mm; and/or the third end plate and/or the fourth end plate have/has a thickness within a range of 30 mm to 70 mm, and the second cylinder has a height within a range of 30 mm to 70 mm.

The plurality of diversion holes are periodically arranged on the inner protective layer.

The inner protective layer may have a thickness within a range of 30 mm to 50 mm; the outer protective layer has a thickness within a range of 30 mm to 50 mm; and/or a material of a main body of the inner protective layer and/or a material of a main body of the outer protective layer contain/contains steel.

Described herein is a reaction system including the protective device for a reaction apparatus and the reaction apparatus. The reaction apparatus is placed in the second space enclosed by the inner protective layer and the pair of protective end plates of the protective device.

The reaction apparatus described above includes a supercritical water reaction apparatus.

Another aspect of the present disclosure provides a supercritical water oxidation system including: a water supply device used to provide water and a target solution; an oxidant supply device used to provide an oxidant for a supercritical water oxidation reaction; a solid combustibles shredding refiner used to mill a solid combustible to a slurry; a supercritical water oxidation reactor used to receive a slurry obtained by milling the solid combustible, the oxidant, the water and the target solution, and provide a reaction zone for the supercritical water oxidation reaction; and a separation apparatus used to separate an effluence from the supercritical water oxidation reactor.

The supercritical water oxidation reactor may include: a first housing provided with at least a slurry inlet, an oxidant inlet and a discharge port, wherein a chamber for providing the reaction zone is formed inside the first housing; a heating device configured to increase a temperature in the chamber; a spiral circulation pipe arranged in the chamber and having an end connected to the slurry inlet, wherein the spiral circulation pipe is configured to allow the slurry introduced into the spiral circulation pipe from the slurry inlet to flow along a pipeline of the spiral circulation pipe and flow out from another end of the spiral circulation pipe, so that the slurry is mixed with an oxidant flowing into the chamber from the oxidant inlet, and an oxidation reaction occurs.

The supercritical water oxidation reactor may further include a turn-back tube arranged inside the chamber, the turn-back tube includes an inner tube with both ends open and an outer tube with one end open, the outer tube is sleeved outside the inner tube, and the inner tube is in communication with the oxidant inlet.

The turn-back tube may be arranged at a central axis of the chamber.

The supercritical water oxidation reactor may further include: a stirrer including a rotating shaft, the rotating shaft penetrates the first housing and extends into the chamber, and/or the rotating shaft passes through the discharge port and extends into the chamber; a liner arranged in the chamber, wherein the spiral circulation pipe is wound along an outer wall of the liner.

The separation apparatus may include: an evaporation tank used to receive the effluence from the supercritical water oxidation reactor, wherein the effluence is a multi-phase mixture, the evaporation tank is provided with a first cooling coil and a slag discharge port, the first cooling coil is used to stabilize a temperature of a solution in the evaporation tank within a target temperature range after the multi-phase mixture flows into the evaporation tank, and the slag discharge port is used to discharge a solid matter in the multi-phase mixture; an inner cooling barrel including a second cooling coil and a condensation water tank, wherein the second cooling coil is used to cool a steam evaporated in the evaporation tank, the condensation water tank is used to receive a liquid matter obtained after the steam is cooled by the second cooling coil, the condensation water tank is provided with a draining port for discharging the liquid matter; wherein a plurality of holes are provided on a barrel wall of the inner cooling barrel to allow the steam evaporated in the evaporation tank to enter the inner cooling barrel; wherein the evaporation tank and the inner cooling barrel are enclosed in a second housing, the evaporation tank is arranged under the inner cooling barrel, and an exhaust port is provided on a top of the second housing to exhaust a gaseous matter in the multi-phase mixture.

A sleeve for receiving the multi-phase mixture may be provided in the evaporation tank, a plurality of small apertures are distributed on a wall of the sleeve, and the multi-phase mixture is dispersedly discharged into the evaporation tank through the plurality of small apertures.

The separation apparatus may further include a back pressure valve, wherein the back pressure valve has an end connected to the sleeve through a pipeline and another end connected to the discharge port of the supercritical water oxidation reactor through a pipeline; and/or an online volatile organic compound monitor is provided at the exhaust port; and/or a level gauge is provided in the evaporation tank; and/or a pH meter is provided in the evaporation tank; and/or an online chemical-oxygen-demand monitor is provided at the draining port.

Another aspect of the present disclosure provides a method of treating a solid combustible by using a supercritical water oxidation system, including: increasing a temperature in a chamber of the supercritical water oxidation reactor to a first temperature; feeding an oxidant into the chamber through the oxidant supply device; feeding a target solution into the chamber through the water supply device, and continuously heating the chamber until the temperature in the chamber reaches a second temperature; milling the solid combustible into a slurry by using the solid combustibles shredding refiner, and feeding the slurry into the chamber so that an oxidation reaction occurs to obtain an effluence; feeding the effluence into the separation apparatus through the discharge port of the supercritical water oxidation reactor; and separating the effluence by using the separation apparatus.

In the process of separating the effluence by using the separation apparatus, the method may further include: monitoring a COD value of a discharged liquid matter by using the online chemical oxygen demand monitor provided on the separation apparatus; and/or monitoring a VOC value of a discharged gaseous matter by using the online volatile organic compound monitor provided on the separation apparatus; and/or monitoring a pH value of the solution in the evaporation tank of the separation apparatus by using the pH meter provided on the separation apparatus; and/or monitoring a temperature of a solution in the evaporation tank of the separation apparatus and/or a temperature in the inner cooling barrel by using a thermometer provided on the separation apparatus.

Another aspect of the present disclosure provides a supercritical water oxidation system. The system includes a reactor, a protective device, an oxidant supply device and an organic matter supply device. The reactor includes a reactor housing provided with an oxidant feed port, an organic matter feed port and a discharge port, and a reaction product is discharged from the reactor via the discharge port. The protective device includes an outer protective layer, a cooling layer and an inner protective layer, a first space and a second space are enclosed by the inner protective layer and the outer protective layer, the cooling layer includes a liquid pipeline allowed to store a liquid, and the liquid pipeline is arranged in the first space; the reactor is arranged in the second space, and the discharge port of the reactor extends to a region in the first space other than a region where the liquid pipeline is located, so that a reaction product discharged from the discharge port is cooled by the liquid stored in the liquid pipeline. The oxidant supply device is in communication with the oxidant feed port, and the organic matter supply device is in communication with the organic matter feed port.

The outer protective layer may include an outer casing and a pair of sidewall end plates oppositely arranged, the inner protective layer includes a first cylinder and a pair of second cylinders oppositely arranged, the first cylinder is arranged between the pair of second cylinders and is coaxial with the pair of second cylinders. The first cylinder includes a first cylinder side wall, and the first cylinder is a structure with both ends open. Each second cylinder of the pair of second cylinders includes a first end plate and a second cylinder side wall, the first end plate has an annular plate structure with an inner ring dimension matching a dimension of the first cylinder, and the pair of second cylinders are fixedly connected to the first cylinder via the first end plate. The first cylinder side wall, the first end plate and the outer casing enclose to form the first space, and the first cylinder, the second cylinder and the pair of sidewall end plates enclose to form the second space. The liquid pipeline includes a plurality of double-layer sleeves extending in a direction of a connecting line between the pair of sidewall end plates, the plurality of double-layer sleeves are periodically arranged in a radial direction of the outer casing and a circumferential direction of the outer casing, and each double-layer sleeve includes an outer sleeve and an inner sleeve. The first end plate is provided with a plurality of first interfaces connected to the outer sleeves of the plurality of double-layer sleeves, respectively.

A second side wall of each second cylinder of the pair of second cylinders may include a first opening, the first opening of the second side wall of one second cylinder in the pair of second cylinders is used as a first liquid inlet, and the first opening of the second side wall of another second cylinder in the pair of second cylinders is used as a first liquid outlet. The protective device is configured such that when the reactor provided in the second space is in an operating state, the liquid is cyclically introduced from the first liquid inlet, flows through the outer sleeves of the plurality of double-layer sleeves, and flows out of the first liquid outlet, so as to cool the reaction product discharged from the discharge port.

Each second cylinder of the pair of second cylinders further may include a second end plate arranged opposite to the first end plate, and a boundary plate arranged between the first end plate and the second end plate. The first opening is arranged on a side wall between the first end plate and the boundary plate. The boundary plate is provided with a plurality of second interfaces in communication with the inner sleeves of the plurality of double-layer sleeves, respectively. The inner sleeve has a length greater than that of the outer sleeve, and the second end plate is provided with a plurality of communication holes so that the inner sleeve is in communication with the second space. The second end plate and the boundary plate have a same annular plate structure as that of the first end plate.

The cooling layer may further include a plurality of gas pipelines and a condensate collecting tray. The condensate collecting tray is arranged between two adjacent sets of double-layer sleeves periodically arranged in the radial direction of the outer casing in the first space, and the condensate collecting tray includes a first tray surface with a closed structure close to the discharge port and a second tray surface with an open structure away from the discharge port. The condensate collecting tray includes a plurality of grooves periodically arranged in the axial direction of the outer casing, and the plurality of grooves extend in a direction perpendicular to a connecting line between the first tray surface and the second tray surface. The plurality of gas pipelines extend from the plurality of grooves in the direction of the connecting line between the first tray surface and the second tray surface, the plurality of gas pipelines has a first end closed to the first tray surface and a second end close to the second tray surface, the first end has an open structure, and the second end has a closed structure, the second end of the plurality of gas pipelines is arranged higher than the second tray surface, and the plurality of gas pipelines include a plurality of air nozzles on a side wall of the plurality of gas pipelines higher than the second tray surface. The outer protective layer is provided with a slag discharge port for discharging residues in the reaction product, a draining port for discharging a condensate obtained by cooling the reaction product, and an exhaust port for discharging waste gases obtained by cooling the reaction product, and the draining port is in communication with the condensate collecting tray.

The reactor housing may include a first end wall, a housing side wall, and a second end wall opposite to the first end wall. The oxidant feed port is provided on the first end wall, the discharge port is provided on the second end wall, and the organic matter feed port is provided on the housing side wall close to the second end wall. The reactor further includes a plurality of organic matter delivery pipes and an end loop pipe. The plurality of organic matter delivery pipes are arranged in the reactor housing and extend in a direction of the connecting line between the first end wall and the second end wall. The plurality of organic matter delivery pipes include a first end and a second end opposite to the first end, and the first end of the organic matter delivery pipe is in communication with the organic matter feed port. The end loop pipe is arranged in a region in the reactor housing close to the first end wall, and the end loop pipe is in communication with the second end of the plurality of organic matter delivery pipes. The end loop pipe is provided with a plurality of first discharge holes on the side wall close to the second end wall; and/or the plurality of organic matter delivery pipes are provided with a plurality of second discharge holes on a side wall close to the central axis of the reactor and close to the side wall of the first end wall.

The reaction further may include a third cylinder and a feed plate. The third cylinder is sleeved outside the plurality of organic matter delivery pipes and the end loop pipe, and the third cylinder includes a third end plate and a third cylinder side wall. The third end plate includes a first feed hole corresponding to the oxidant feed port. The feed plate is arranged between the third end plate and the end loop pipe so as to form an oxidant delivery channel between the feed plate and the third cylinder, and a plurality of second feed holes are provided on the feed plate.

The housing side wall may be further provided with a second liquid inlet and a second liquid outlet. The reactor further includes a liner and a circulation sleeve, the liner is arranged between the housing side wall and the third cylinder side wall, and the circulation sleeve is spirally wound between the liner and the housing side wall along the liner. The circulation sleeve includes a third end and a fourth end opposite to the third end. The third end is in communication with the second liquid inlet, and the fourth end is in communication with the second liquid outlet.

The reactor may further include a stirring assembly including a rotating shaft, and the rotating shaft penetrates the reactor housing and passes through the discharge port; and/or the space enclosed by the reactor housing is divided into a first region close to the oxidant feed port and a second region close to the organic matter feed port and the discharge port. The reactor further includes a heating assembly and/or a cooling assembly, the heating assembly is arranged outside the first region to increase a temperature in the reactor housing, and the cooling assembly is arranged outside the second region to cool a reaction product of the oxidant and organic matter; and/or a center temperature in the first region is 700 °C to 800 °C when the reactor is in the operating state.

The organic matter supply device may include an organic matter supply assembly, a lye container, a first peristaltic pump, a first high-pressure pump, and a first one-way valve. The first peristaltic pump is in communication with the lye container, the first high-pressure pump is in communication with the lye container and the first peristaltic pump, and the first one-way valve is arranged between the first high-pressure pump and the organic matter feed port. The organic matter supply device further includes: a sucrose solution container, a water container, a second peristaltic pump, a second high-pressure pump and a second one-way valve, the second peristaltic pump is in communication with the sucrose solution container, the second high-pressure pump is in communication with the water container and the second peristaltic pump, and the second one-way valve is arranged between the second high-pressure pump and the organic matter feed port.

The organic matter supply assembly may include an organic matter shredding refiner used to shred and mill a solid organic matter into slurry. The organic matter shredding refiner includes a material introduction box, a shear cutter and a colloid mill that are interconnected and that are arranged in sequence. The material introduction box is used to introduce a solid organic matter and a liquid, and a diversion hole is provided at a bottom of the material introduction box. The shear cutter is arranged above the diversion hole at the bottom of the material introduction box, and is used to cut the falling solid organic matter into pieces of 1 mm to 5mm. The colloid mill is used to mill the pieces flowing out of the diversion hole into slurry. The shear cutter is coaxial with the colloid mill so that the shear cutter and the colloid mill are rotatable synchronously under the action of an external force. And/or the shear cutter includes a primary shear cutter and a secondary shear cutter. The primary shear cutter is used to cut the solid organic matter into blocks of 10 mm to 50 mm, and the secondary shear cutter is used to cut the blocks into pieces of 1 mm to 5mm. The secondary shear cutter is arranged under the primary shear cutter.

In the related art, the oxidant and the waste material are generally mixed directly in the supercritical water oxidation reactor, and the reaction will not completely occur until the temperature of the oxidant and the waste material reaches a certain temperature. However, due to a large molecular weight and a stable molecular space structure, the organic matter slurry is difficult to be oxidized in a short period of time. Moreover, in this case, the waste material fed from the outside may not only lower the temperature of the reaction zone, but also cause a long reaction time of the waste material in the supercritical water oxidation reactor and reduce the reaction efficiency. Through the embodiments of the present disclosure, the spiral circulation pipe is arranged in the chamber of the supercritical water oxidation reactor. When the temperature in the chamber of the supercritical water oxidation reactor reaches a certain temperature, the slurry may be fully preheated and even thermally decomposed in the process of flowing in the spiral circulation pipe, thereby ensuring the pyrolysis time of the organic matter slurry, ensuring the completeness of the supercritical water oxidation of the organic matter slurry, and improving the reaction efficiency.

The solid material shredder provided by the present disclosure has following beneficial effects.

The functions of introducing, shredding and milling the solid material are integrated, and the solid material may be converted directly into a slurry, and the solid material shredder has the beneficial effects of large processing capacity and high integration. In addition, in a case of treatment of radioactive matters, radioactive operation links may be reduced.

By introducing the liquid into the material introduction box, the solid material may be shredded in a liquid environment, so that a generation of aerosols may be avoided. Further, the solid material may fall in the axial direction under the drive of the introduced fluid, that is, the solid material may be fed by the flow of liquid without an external force. Therefore, the space may be fully used, and an overall size of the apparatus may be reduced.

Blocks of materials may be cut into pieces by using the cutter array on the roller, and the small pieces of materials may be shredded by the third cutter rotating at a high speed, so that the solid material may be shredded to the millimeter level, which solves a technical bottleneck in a related art that the solid material cannot be shredded to the millimeter level. In addition, the pieces filtered out may be milled by the colloid mill, which may achieve the beneficial effects of small and uniform particle size of the slurry.

The protective device for the reaction apparatus and the reaction system provided by the present disclosure have following beneficial effects.

With the arrangement of the protective assembly, a released matter sprayed by the explosion of the reaction apparatus may be introduced between the outer protective sleeve and the inner protective sleeve. When the released matter comes into contact with the liquid pipeline in which the liquid is stored, the released matter may burst the liquid pipeline under the action of a pressure difference, and the liquid may flow out, so that a temperature and a pressure of the released matter may be reduced, which avoids a damage to the environment in a case that the released matter is sprayed directly to the external environment.

In the cooling layer, through the connection of the first pipeline and the second pipeline, the cooling layer may be entirely formed as a dense pipeline cage. Therefore, when the released matter is introduced into the cooling layer, a contact area between the pipeline and the released matter may be increased, so that a speed of reducing the temperature and the pressure of the released matter may be increased. In this way, an entire process of reducing the temperature and the pressure may be controlled within 100s, which effectively prevents an impact of the released matter to the outer protective layer.

Through the diversion holes periodically arranged on the inner protective layer, the released matter may be evenly dispersed so as to avoid a concentrated impact of the released matter, which further improves an efficiency of reducing the temperature and the pressured.

According to the embodiment of the present disclosure, the supercritical water oxidation system of the present disclosure may be used to treat the solid combustible slurry. Generally speaking, if solids are directly fed into the supercritical water oxidation reactor, they may cause blockage in the supercritical water oxidation reactor. The present disclosure breaks through the technical bottleneck of liquid feed or gas feed at home and abroad, and solids may be shredded and milled to slurry with a particle size less than 50 µm, and the slurry is pumped into the supercritical water oxidation reactor, which prevents large particles from depositing inside the supercritical water reactor, and solves the problem of reducing a volume and a harmfulness of radioactive solid combustible waste from, for example, nuclear power plants and other nuclear facilities.

The supercritical water oxidation system provided by the present disclosure has following beneficial effects.

With the arrangement of the protective device, the reaction product may be effectively cooled, and residues, condensates and waste gases may be separated from the reaction product. Therefore, the supercritical water oxidation system according to the embodiments of the present disclosure has an integrated machine that integrates the function of supercritical reaction and the function of cooling and separating the reaction product. There is no need to provide an additional separator, which is conducive to the promotion and application of the supercritical water oxidation technology.

The liquid pipeline is implemented by a double-layer sleeve, and a space of the inner sleeve and a space of the outer sleeve of the double-layer sleeve may be isolated through the design of the inner protective layer. The cooling liquid flows in the outer sleeve, and the inner sleeve is connected to the second space where the reactor is located. When the reactor explodes abnormally and high-temperature and high-pressure organic release is ejected, the release may be introduced into the inner sleeve through the inner protective layer and isolated from the environment outside the protective device, and may be cooled through the liquid flowing in the outer sleeve. Therefore, the supercritical water oxidation system according to the embodiments of the present disclosure further has a protective function and may effectively prevent abnormal releases from spraying out of the protective device, and thus has a high integration and may effectively avoid the damage of abnormal releases to the external environment.

With the design of the organic matter delivery pipe and the end loop pipe in the reactor, the organic matter may be uniformly introduced into a center chamber of the reactor from the end and the side wall. Moreover, with the design of the feed plate and the third cylinder, the oxidant may be uniformly introduced into the center chamber of the reactor from the end and the side wall. In this way, the organic matter and the oxidant may be fully contacted and mixed, so that the temperature in the central chamber of the reactor may reach 700 °C to 800 °C. Therefore, the advantages of supercritical water oxidation reaction may be fully utilized, and it is conducive to the complete pyrolysis and gasification of the organic matter.

### BRIEF DESCRIPTION OF THE DRAWINGS

For a more complete understanding of the present disclosure and advantages thereof, reference will now be made to the following description in conjunction with the accompany drawings.
FIG. 1 schematically shows a schematic diagram of a supercritical water oxidation reactor according to the embodiments of the present disclosure.
FIG. 2 schematically shows a schematic diagram of a supercritical water oxidation reactor according to the embodiments of the present disclosure.
FIG. 3 schematically shows a schematic diagram of a supercritical water oxidation reactor according to the embodiments of the present disclosure.
FIG. 4 schematically shows a schematic diagram of a supercritical water oxidation reactor according to the embodiments of the present disclosure.
FIG. 5 schematically shows a schematic diagram of a cooling device according to the embodiments of the present disclosure.
FIG. 6 schematically shows a flowchart of a method of treating a radioactive organic waste by using a supercritical water oxidation reactor according to the embodiments of the present disclosure.
FIG. 7 schematically shows a front cross-sectional view of a solid material shredder according to a first embodiment of the present disclosure.
FIG. 8 schematically shows a side cross-sectional view of the solid material shredder according to the first embodiment of the present disclosure.
FIG. 9 schematically shows a structural diagram of a shredding device according to the embodiments of the present disclosure.
FIG. 10A to FIG. 10B schematically show structural diagrams of a first cutter and a third cutter according to the embodiments of the present disclosure.
FIG. 11A to FIG. 11B schematically show structural diagrams of a second cutter according to the embodiments of the present disclosure.
FIG. 12 schematically shows a front cross-sectional view of a solid material shredder according to a second embodiment of the present disclosure.
FIG. 13 schematically shows a front cross-sectional view of a solid material shredder according to a third embodiment of the present disclosure.
FIG. 14 schematically shows a structural diagram of a protective device for a reaction apparatus according to the first embodiment of the present disclosure.
FIG. 15A schematically shows a structural diagram of a first protective end plate in a pair of protective end plates according to the embodiments of the present disclosure.
FIG. 15B schematically shows a structural diagram of a second protective end plate in a pair of protective end plates according to the embodiments of the present disclosure.
FIG. 16 schematically shows a structural diagram of a protective device for a reaction apparatus according to a second embodiment of the present disclosure.
FIG. 17A schematically shows a front cross-sectional view of the protective device for the reaction apparatus with reference to FIG. 16.
FIG. 17B schematically shows a side cross-sectional view of the protective device for the reaction apparatus with reference to FIG. 16.
FIG. 18 shows a schematic diagram of a supercritical water oxidation system according to the embodiments of the present disclosure.
FIG. 19 schematically shows a flowchart of a method of treating a solid combustible by using a supercritical water oxidation system according to the embodiments of the present disclosure.
FIG. 20 schematically shows a schematic diagram of a supercritical water oxidation reactor according to the embodiments of the present disclosure.
FIG. 21 schematically shows a schematic diagram of a supercritical water oxidation reactor according to the embodiments of the present disclosure.
FIG. 22 schematically shows a schematic diagram of a supercritical water oxidation reactor according to the embodiments of the present disclosure.
FIG. 23 schematically shows a schematic diagram of a cooling device 2206 according to the embodiments of the present disclosure.
FIG. 24 schematically shows a schematic diagram of a separation apparatus according to the embodiments of the present disclosure.
FIG. 25 schematically shows a schematic diagram of an inner cooling barrel according to the embodiments of the present disclosure.
FIG. 26 schematically shows a schematic diagram of a sleeve according to the embodiments of the present disclosure.
FIG. 27 schematically shows a schematic diagram of a supercritical water oxidation system according to the embodiments of the present disclosure.
FIG. 28 schematically shows a cross-sectional view taken along line A-A in FIG. 27.
FIG. 29 schematically shows a structural diagram of the inner protective layer in FIG. 27.
FIG. 30 schematically shows a front cross-sectional view of a reactor according to the embodiments of the present disclosure.
FIG. 31 schematically shows an enlarged view of a structure of a dashed frame region in FIG. 30.
FIG. 32A schematically shows a left cross-sectional view taken along line B-B in FIG. 31.
FIG. 32B schematically shows a right cross-sectional view taken along line B-B in FIG. 31.
FIG. 33 schematically shows a structural diagram of an organic matter supply device according to the embodiments of the present disclosure.
FIG. 34 schematically shows a structural diagram of a rotary cutting refiner according to the embodiments of the present disclosure.
FIG. 35 schematically shows a top view of the rotary cutting refiner shown in FIG. 34.

### DETAILED DESCRIPTION OF EMBODIMENTS

Embodiments of the present disclosure will be described below with reference to the accompanying drawings. It should be understood that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The present invention is defined in the appended claims.

The terms used herein are for the purpose of describing specific embodiments only and are not intended to limit the present disclosure. The terms "comprising", "including", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C).

The embodiments of the present disclosure provide a supercritical water oxidation reactor, including: a housing provided with at least a slurry inlet, an oxidant inlet and a discharge port, wherein a chamber for providing a reaction zone is formed inside the housing; a heating device used to increase a temperature in the chamber; a spiral circulation pipe arranged in the chamber and having an end connected to the slurry inlet, wherein a slurry is introduced into the spiral circulation pipe from the slurry inlet, flows along a pipeline of the spiral circulation pipe, and flows out from the other end of the spiral circulation pipe; wherein, after flowing out from the other end of the spiral circulation pipe, the slurry is mixed with an oxidant flowing into the chamber from the oxidant inlet, and an oxidation reaction of the slurry and the oxidant occurs.

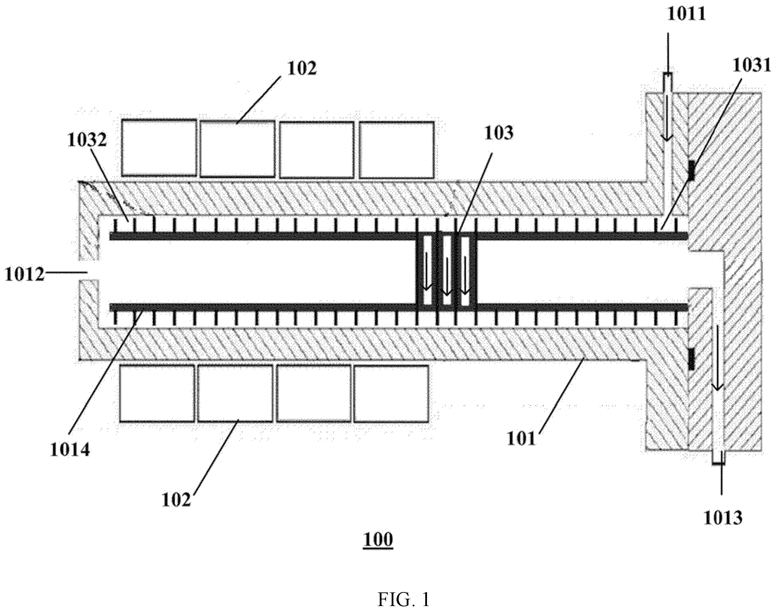

FIG. 1 schematically shows a schematic diagram of a supercritical water oxidation reactor according to the embodiments of the present disclosure. It should be noted that FIG. 1 only shows an example of the supercritical water oxidation reactor according to the embodiments of the present disclosure to help those skilled in the art understand the technical content of the present disclosure. It does not mean that the supercritical water oxidation reactor of the present disclosure may not be constructed in other ways.

As shown in FIG. 1, a supercritical water oxidation reactor 100 includes a housing 101, a heating device 102 and a spiral circulation pipe 103.

A chamber for providing a reaction zone is formed inside the housing 101. The housing 101 is provided with at least a slurry inlet 1011, an oxidant inlet 1012 and a discharge port 1013.

The housing 101 may include an outer housing and an inner housing (for example, the inner housing may be a liner 1014 in FIG. 1). A shape, a material and a dimension of the outer housing and the inner housing are not limited. For example, a main part of the housing 101 may be cylindrical, an inner diameter of the outer housing may be within a range of 80 mm to 219 mm, and a length of the outer housing may be within a range of 1000 mm to 9000 mm, and an inner diameter of the inner housing may be within a range of 40 mm to 133 mm, and a length of the inner housing may be within a range of 1000 mm to 9000 mm.

The heating device 102 is used to increase a temperature in the chamber. According to the embodiments of the present disclosure, a type of the heating device 102 is not limited. For example, the heating device 102 may be a heating jacket. In the present disclosure, the heating jacket may be sleeved on an outer wall of the housing 101 to transfer heat to the chamber inside the housing 101 by means of heat conduction. The heating manner is not limited in the present disclosure. According to the embodiments of the present disclosure, the outer housing of the supercritical water oxidation reactor 100 may be provided with pressure gauges at both ends, the inner housing may be provided with temperature probes at both ends and in the middle, and temperature probes may be provided between the heating jacket and the outer wall of the outer housing.

The heating device 102 may cover a part of the outer wall of the housing 101. For example, the heating device 102 may be arranged on a part of the outer wall corresponding to a predetermined region where a slurry outlet of the spiral circulation pipe 103 is located, so as to cover a part of the housing 101. Specifically, as shown in FIG. 1, the heating device 102 includes four heating jackets that cover a region between the middle of the housing 101 and the slurry outlet of the spiral circulation pipe 103.

The spiral circulation pipe 103 is arranged in the chamber, and has an end 1031 in communication with the slurry inlet 1011. After entering the spiral circulation pipe 103 from the slurry inlet 1011, the slurry flows along the pipeline of the spiral circulation pipe 103 and flows out from another end 1032 of the spiral circulation pipe 103. After flowing out from the spiral circulation pipe 1032, the slurry is mixed with the oxidant flowing into the chamber from the oxidant inlet 1012, and an oxidation reaction of the slurry and the oxidant occurs. It should be noted that the spiral circulation pipe 103 in FIG. 1 is only exemplary, and a length and a number of turns of the circulation pipe are not limited in the present disclosure.

According to the embodiments of the present disclosure, the organic slurry may flow along the spiral circulation pipe. On the one hand, a degree of flow of the organic slurry may be increased, and on the other hand, a flow rate of the organic slurry may be increased, so that a pyrolysis efficiency of the organic slurry may be increased.

According to the embodiments of the present disclosure, the spiral circulation pipe 103 may be arranged close to an inner wall of the housing 101. Specifically, in a case that the housing 101 includes the outer housing and the inner housing, the spiral circulation pipe 103 may be arranged between the outer housing and the inner housing. In order to increase the degree of flow of the organic slurry, the spiral circulation pipe 103 may be wound around the inner housing. According to the embodiments of the present disclosure, the inner housing may also be referred to as a liner, which may be arranged as shown in FIG. 1.

According to the embodiments of the present disclosure, the supercritical water oxidation reactor 100 of the present disclosure may be used to treat slurry of solid combustibles. A solid combustible may be shredded and milled and directly introduced into the spiral circulation pipe 103, and a thermal decomposition of the solid combustible may be performed in the spiral circulation pipe 103. After the slurry flows out of the spiral circulation pipe 103, the supercritical water oxidation reaction may proceed. When an average temperature of supercritical water is 600 °C, the pyrolysis of the organic matter generally takes about 1 second, and when the flow rate of the organic matter is 10 L/h, a residence time of the organic matter is at least 8 seconds, of which the effect is better than that theoretically required.

In the related art, if the organic matter is directly fed, the organic matter may cool the reaction zone and reduce the reaction effect. When the reaction temperature is 600 °C, the pyrolysis of the organic matter takes about 1 second, while when the reaction temperature is 550 °C, the pyrolysis of the organic matter takes 5 min, which may reduce the reaction efficiency. Therefore, compared with the related art, the present disclosure has a very short reaction time and improves the treatment efficiency.

In the related art, generally, the oxidant and the waste are mixed directly in the supercritical water oxidation reactor, and the reaction may not completely occur until the temperature of the oxidant and the waste reaches a certain temperature. However, due to a large molecular weight and a stable molecular space structure, the organic slurry is difficult to be oxidized in a short period of time. Moreover, in this case, the waste fed from the outside may reduce the temperature in the reaction zone, which may cause a long reaction time of the waste in the supercritical water oxidation reactor and reduce the reaction efficiency. According to the embodiments of the present disclosure, the spiral circulation pipe is provided in the chamber of the supercritical water oxidation reactor. When the temperature in the chamber of the supercritical water oxidation reactor reaches a certain temperature, the slurry may be fully preheated and even thermally decomposed in the process of flowing in the spiral circulation pipe, which ensures the pyrolysis time of the organic slurry and the completeness of the supercritical water oxidation of the organic slurry, so that the reaction efficiency may be improved.

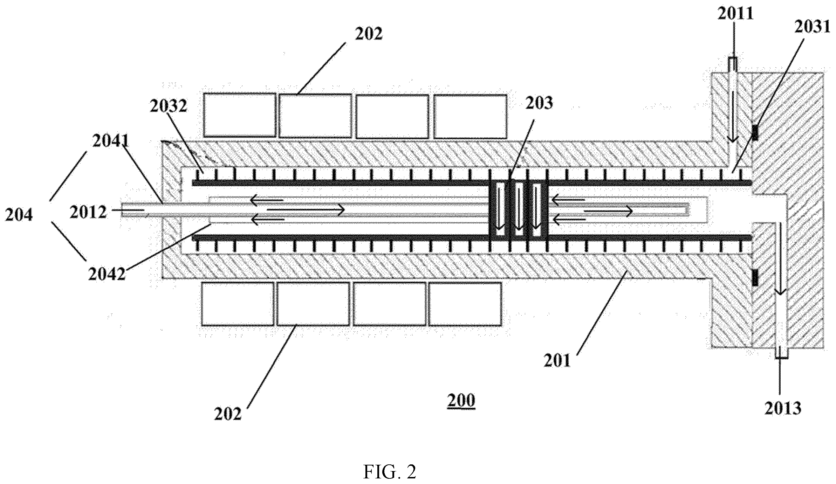

The reactor shown in FIG. 1 will be further described with reference to FIG. 2 to FIG. 5 in combination with specific embodiments.

FIG. 2 schematically shows a schematic diagram of a supercritical water oxidation reactor according to another embodiment of the present disclosure.

As shown in FIG. 2, a supercritical water oxidation reactor 200 includes a housing 201, a heating device 202, a spiral circulation pipe 203, and a turn-back tube 204.

The housing 201 is provided with a slurry inlet 2011, an oxidant inlet 2012 and a discharge port 2013. The spiral circulation pipe 203 includes an end 2031 and another end 2032.

It should be noted that the housing 201, the heating device 202 and the spiral circulation pipe 203 in the embodiment of the present disclosure may refer to the description for FIG. 1 in the present disclosure. For the sake of brevity of the description, the details are not repeated here.

According to the embodiments of the present disclosure, the turn-back tube 204 is arranged in the chamber. The turn-back tube 204 includes an inner tube 2041 with both ends open and an outer tube 2042 with one end open. The outer tube 2042 is sleeved outside the inner tube 2041, and the inner tube 2041 is in communication with the oxidant inlet 2012.

According to the embodiments of the present disclosure, the oxidant is introduced from the oxidant inlet 2012, passes through the inner tube 2041, then enters the outer tube 2042, and finally exits from an opening at one end of the outer tube 2042.

According to the embodiments of the present disclosure, the turn-back tube 204 may be arranged at a central axis of the chamber.

A shape, a material and a dimension of the inner tube 2041 and the outer tube 2042 are not limited. For example, a diameter of the inner tube 2041 may be within a range of φ25 to φ42 mm, a wall thickness of the inner tube 2041 may be within a range of 4 mm to 6 mm, and a length of the inner tube 2041 may be within a range of 3000 mm to 6000 mm. The outer tube may have a diameter of 42 mm or more, a wall thickness of the outer tube may be within a range of 4 mm to 6 mm, and a length of the outer tube may be within a range of 3000 mm to 6000 mm. According to the embodiments of the present disclosure, the turn-back tube 204 has a moderate size, which may effectively reduce a production cost and is beneficial to market applications.

The turn-back tube is provided so that the oxidant in the tube is heated up as much as possible, and the preheating time is increased. Furthermore, the turn-back tube is arranged at the central axis of the supercritical water reactor, so that the heating temperature of the turn-back tube may reach the highest.

A type of the oxidant is not limited. For example, the oxidant may be liquid oxygen, hydrogen peroxide and so on.

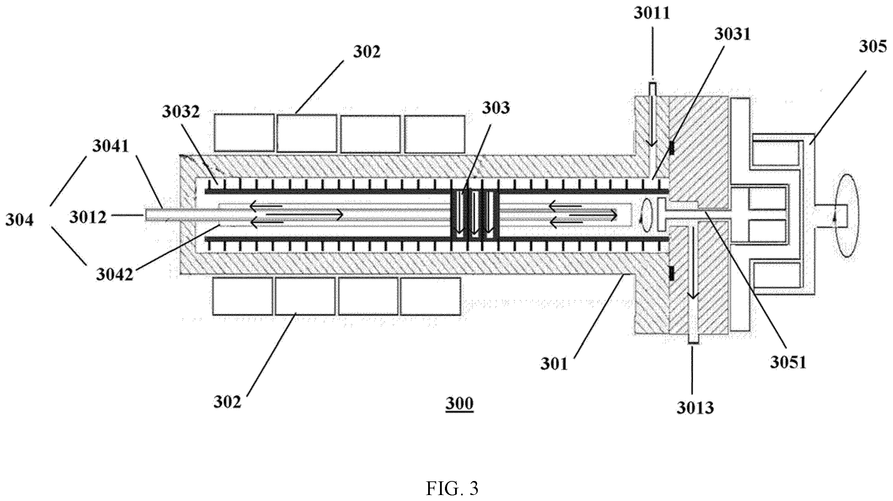

FIG. 3 schematically shows a schematic diagram of a supercritical water oxidation reactor according to the embodiments of the present disclosure.

As shown in FIG. 3, a supercritical water oxidation reactor 300 includes a housing 301, a heating device 302, a spiral circulation pipe 303, a turn-back tube 304, and a stirrer 305.

The housing 301 is provided with a slurry inlet 3011, an oxidant inlet 3012 and a discharge port 3013. The spiral circulation pipe 303 includes an end 3031 and another end 3032. The turn-back tube 304 includes an inner tube 3041 with both ends open and an outer tube 3042 with one end open.

It should be noted that the housing 301, the heating device 302, the spiral circulation pipe 303 and the turn-back tube 304 in the embodiment of the present disclosure may refer to the description for FIG. 1 and/or FIG. 2 in the present disclosure. For the sake of brevity of the description, the details are not repeated here.

According to the embodiments of the present disclosure, the stirrer 305 includes a rotating shaft 3051. The rotating shaft 3051 penetrates the housing 301 and extends into the chamber, and/or the rotating shaft 3051 passes through the discharge port 3013 and extends into the chamber.

The stirrer 305 may further include a rotor, an isolation sleeve, a magnetic block, and other components required by the stirrer (not shown in FIG. 3).

Positions of the slurry inlet 3011, the oxidant inlet 3012 and the discharge port 3013 are not limited.

According to the embodiments of the present disclosure, the housing 301 includes a first end wall, a side wall, and a second end wall opposite to the first end wall. The slurry inlet 3011 is provided on the side wall, the oxidant inlet 3012 is provided on the first end wall, and the stirrer 305 and the discharge port 3013 are provided on the second end wall. Optionally, the discharge port 3013 may also be provided on the side wall.

The stirrer 305 may be a magnetic stirrer. In a case that the supercritical water oxidation reactor 300 is installed vertically, the stirrer 305 may be installed at the bottom of the supercritical water oxidation reactor 300, and mainly used to stir a deposition at the bottom of the reactor so as to prevent solid particles from depositing, compacting and blocking the discharge port.

According to the embodiments of the present disclosure, the supercritical water oxidation reactor 300 of the present disclosure may be used to treat slurry of solid combustibles. Generally speaking, if solids are directly fed into the supercritical water oxidation reactor, the solids may cause a blockage in the supercritical water oxidation reactor. The present disclosure breaks through the technical bottleneck at home and abroad that the feed may only be liquid or gas. In the present disclosure, solids may be shredded and milled to a slurry with a particle size less than 50 µm, and the slurry may be pumped into the supercritical water oxidation reactor, which prevents the deposition of large particles inside the supercritical water reactor. Moreover, a spiral circulation channel is provided on a slurry delivery channel of the supercritical water reactor, so that the flow rate of the slurry is locally increased, and the deposition of the slurry is avoided. Furthermore, the stirrer is arranged in the supercritical water oxidation reactor and extends into the chamber so as to avoid the deposition of slurry particles in the supercritical water reactor. In this way, the solid particles may be oxidized completely, and the blockage in the supercritical water oxidation reactor may be avoided.

According to the embodiments of the present disclosure, the supercritical water oxidation reactor may further include a liner. The liner may be equivalent to the inner housing of the supercritical water oxidation reactor.

According to the embodiments of the present disclosure, the liner may be arranged in the chamber, and the spiral circulation pipe may be wound along the outer wall of the liner. The liner may be processed by aluminizing, shot peening, and spraying a thermal barrier coating including a plurality of aluminum layers and a plurality of aluminum oxide layers alternately arranged.

According to the embodiments of the present disclosure, after the liner is processed by aluminizing, shot peening, and spraying a thermal barrier coating including a plurality of aluminum layers and a plurality of aluminum oxide layers alternately arranged, it is equivalent to forming an anticorrosive coating on the liner, and under a high temperature effect of supercritical water, a dense gel layer may be formed on an inner wall of the liner to prevent the supercritical water from contacting and corroding a metal of the liner.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2 to 3 mm is formed on the surfaces of the metal. After the thermal barrier coating encounters the supercritical water, the thermal barrier coating may transform into the dense gel layer. The gel layer may prevent the supercritical water from contacting and corroding the metal of the liner.

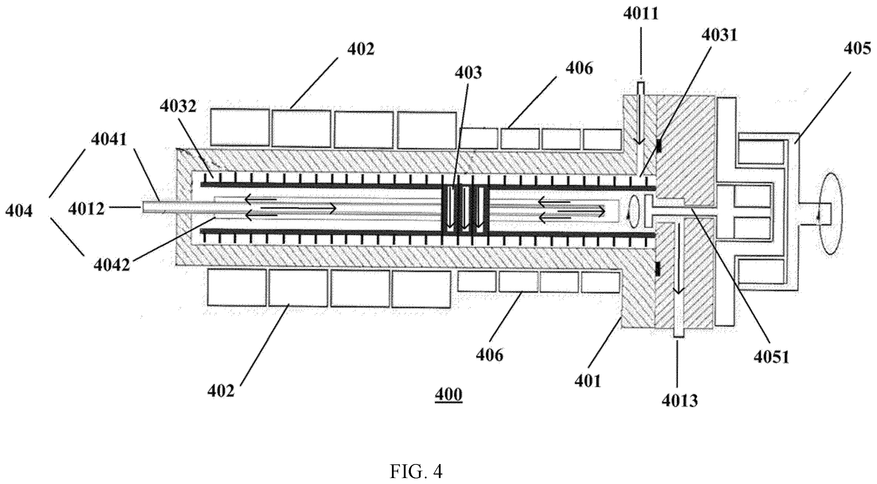

FIG. 4 schematically shows a schematic diagram of a supercritical water oxidation reactor according to the embodiments of the present disclosure.

As shown in FIG. 4, a supercritical water oxidation reactor 400 includes a housing 401, a heating device 402, a spiral circulation pipe 403, a turn-back tube 404, a stirrer 405, and a cooling device 406.

The housing 401 is provided with a slurry inlet 4011, an oxidant inlet 4012, and a discharge port 4013. The spiral circulation pipe 403 includes an end 4031 and another end 4032. The turn-back tube 404 includes an inner tube 4041 with both ends open and an outer tube 4042 with one end open. The stirrer 405 includes a rotating shaft 4051.

It should be noted that the housing 401, the heating device 402, the spiral circulation pipe 403, the turn-back tube 404 and the stirrer 405 in the embodiment of the present disclosure may refer to the description for FIG. 1, FIG. 2 and FIG. 3 in the present disclosure. For the sake of brevity of the description, the details are not repeated here.

The cooling device 406 is arranged on the side wall and is used to cool a reaction product generated in the chamber. The heating device 402 and the cooling device 406 may be arranged side by side on the side wall, and a distance between the heating device 402 and the first end wall is less than that between the cooling device 406 and the first end wall.

According to the embodiments of the present disclosure, as shown in FIG. 4, the distance between the heating device 402 and the first end wall is less than that between the cooling device 406 and the first end wall, that is, the heating device 402 is closer to the first end wall, and the cooling device 406 is away from the first end wall. Since the reaction of the slurry and the oxidant occurs at a position close to the first end wall, the heating device 402 may be arranged close to the first end wall, and the cooling device 406 may be arranged close to the second end wall.

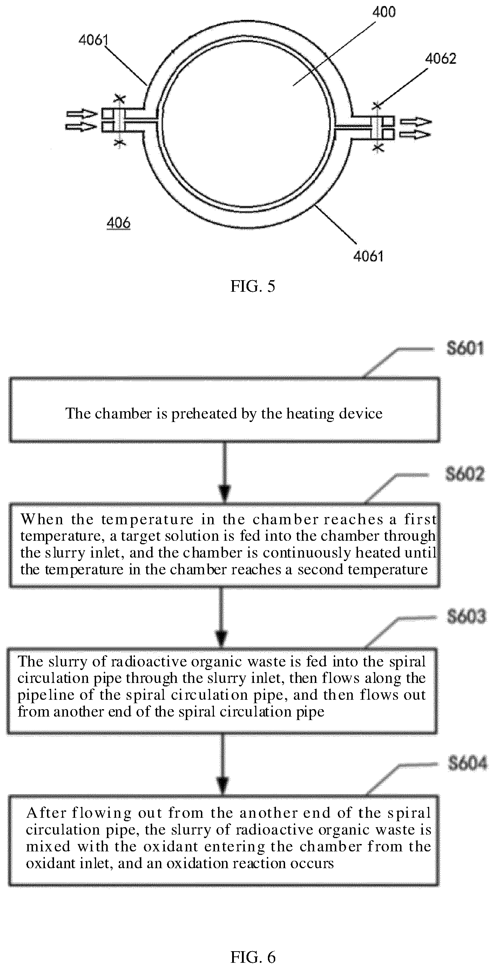

FIG. 5 schematically shows a schematic diagram of the cooling device 406 according to the embodiments of the present disclosure.

As shown in FIG 5, the cooling device 406 may include sets of cooling jackets that cover the outer wall of the supercritical water oxidation reactor 400. Each set of cooling jackets includes two semi-cooling jackets 4061 that may be fixed by fixing holes and bolts 4062. The semi-cooling jacket 4061 may be filled with cooling water. For example, as indicated by arrows in FIG. 5, water may be filled from an end of the two semi-cooling jackets 4061 and discharged from another end of the two semi-cooling jackets 4061.

According to the embodiments of the present disclosure, it should be noted that when the reaction product generated in the chamber is cooled by the cooling device 406, a temperature of the reaction product is generally not reduced to a normal temperature. The temperature of the reaction product may be reduced to be higher than the normal temperature, and even higher than the boiling temperature of water, for example, reduced from 500 °C to 300 °C. With such a design, since the discharged reaction product has a high temperature, a cooling burden of the supercritical water reactor may be reduced. In addition, by increasing the temperature of the effluence of the supercritical water oxidation reactor, the heat of the reaction product may be fully utilized to create necessary conditions of spontaneous evaporation for a subsequent reaction product separation apparatus. It should be noted that another function of the cooling device 406 is to prevent a too high temperature of the chamber, so as to avoid an overheating reaction.

According to the embodiments of the present disclosure, there is further provided a method of treating a radioactive organic waste by using a supercritical water oxidation reactor. According to the embodiments of the present disclosure, the supercritical water oxidation reactor required for treating the radioactive organic waste may be the supercritical water oxidation reactor described in any one of FIG. 1 to FIG. 4 of the present disclosure.

In the related art, generally, the oxidant and the waste are mixed directly in the supercritical water oxidation reactor, and the reaction may not completely occur until the temperature of the oxidant and the waste reaches a certain temperature. However, due to a large molecular weight and a stable molecular space structure, the organic slurry is difficult to be oxidized in a short period of time. Moreover, in this case, the waste fed from the outside may reduce the temperature in the reaction zone, which may cause a long reaction time of the waste in the supercritical water oxidation reactor and reduce the reaction efficiency. According to the embodiments of the present disclosure, the spiral circulation pipe is provided in the chamber of the supercritical water oxidation reactor. When the temperature in the chamber of the supercritical water oxidation reactor reaches a certain temperature, the slurry may be fully preheated and even thermally decomposed in the process of flowing in the spiral circulation pipe, which extends the pyrolysis time of the radioactive organic waste and ensures the completeness of the supercritical water oxidation of the radioactive organic waste, so that the reaction efficiency may be improved.

FIG. 6 schematically shows a flowchart of a method of treating a radioactive organic waste by using a supercritical water oxidation reactor according to the embodiments of the present disclosure.

As shown in FIG. 6, the method of treating the radioactive organic waste by using the supercritical water oxidation reactor includes steps S601 to S604.

In step S601, the chamber is preheated by the heating device.

In step S602, when a temperature in the chamber reaches a first temperature, a target solution is fed into the chamber through the slurry inlet, and the chamber is continuously heated until the temperature in the chamber reaches a second temperature.

For example, the reactor may be preheated by an electric heating jacket so that the temperature in the chamber of the reactor reaches the first temperature that may be, for example, 300 °C. According to the embodiments of the present disclosure, the target solution may be a sucrose solution. A sucrose solution supply pump may be activated to feed the sucrose solution into the chamber through the slurry inlet. The temperature of the reactor may be heated to the second temperature that may be greater than or equal to 600 °C, for example, 650°C or higher.

According to the embodiments of the present disclosure, the oxidant may firstly enter the turn-back tube from the oxidant inlet, then pass through the inner tube and the outer tube of the turn-back tube in turn, and then enters the chamber from the opening of the outer tube.

In step S603, the slurry of the radioactive organic waste is fed into the spiral circulation pipe through the slurry inlet, then flows along the pipeline of the spiral circulation pipe, and then flows out from another end of the spiral circulation pipe.

When the reaction conditions are met, for example, when the supercritical water oxidation temperature is maintained at 650 °C to 750 °C and the pressure is maintained at 20 MPa to 25 MPa, an organic waste supply pump may be activated to feed the slurry of the organic waste to the spiral circulation pipe through the slurry inlet. Under normal conditions, a temperature of a portion of the inner housing of the reactor close to a nozzle is 650 °C to 800 °C, and a temperature of a corresponding portion of the outer housing does not exceed 600 °C. After double cooling of the sleeve of the inner housing and the sleeve of the outer housing, the temperature of the reaction product may be reduced to below 120 °C to 300 °C. The temperature should not be too low, and there may be enough heat to completely evaporate the reaction product.

In step S604, after flowing out from another end of the spiral circulation pipe, the slurry of the radioactive organic waste is mixed with the oxidant entering the chamber from the oxidant inlet, and an oxidation reaction of the slurry of the radioactive organic waste and the oxidant occurs.

According to the embodiments of the present disclosure, in a case that the supercritical water oxidation reactor includes the stirrer, the oxidation product obtained after the oxidation reaction may be stirred by the stirrer.

When the oxidation product is discharged from the discharge port, the temperature of the oxidation product at the discharge port may be within a range of 120 °C to 300 °C, and optionally, within a range of 150 °C to 300 °C.

The reaction temperature in the related art is generally 600 °C. Compared with other supercritical water reactions, the reaction temperature in the present disclosure is higher, and the reaction rate is effectively improved. Furthermore, the temperature of the oxidation product at the discharge port is high, which may be 300 °C, so that the burden of the supercritical water reactor may be reduced. The processing capacity of the supercritical water reactor for solid combustibles may reach 20 kg/h to 200 kg/h, or even higher.

The supercritical water oxidation reactor of the present disclosure may be used to treat the slurry of solid combustibles. The solid combustible may be shredded and milled and directly introduced into the spiral circulation pipe, and a thermal decomposition of the slurry of solid combustibles may be performed in the spiral circulation pipe. After the slurry flows out of the spiral circulation pipe, the supercritical water oxidation reaction may proceed. When an average temperature of supercritical water is 600 °C, the pyrolysis of the organic matter generally takes about 1 second, and when the flow rate of the solid combustible is 10 L/h, a residence time of the organic matter is at least 8 seconds, of which the effect is better than that theoretically required.

A solid material shredder may be used. The solid material shredder includes a material introduction box, a shredding device, a material container and a colloid mill that are interconnected and that are arranged in sequence. The material introduction box is used to introduce a solid material and make the solid material fall in an axial direction of the material introduction box. The shredding device includes a cutter that is rotatable when driven by an external force, and the shredding device is used to cut the solid material falling into the shredding device in the axial direction of the material introduction box into pieces by using the cutter. The material container is used to drive, through a flowing liquid introduced into the material container, the pieces falling from the shredding device to move. A bottom of the material container is provided with a sieve plate including a plurality of sieve holes used to filter out a part of the liquid and pieces having dimensions smaller than that of the sieve holes from the material container. The colloid mill is provided under the sieve plate, and is used to mill the pieces filtered out from the material container into slurry.

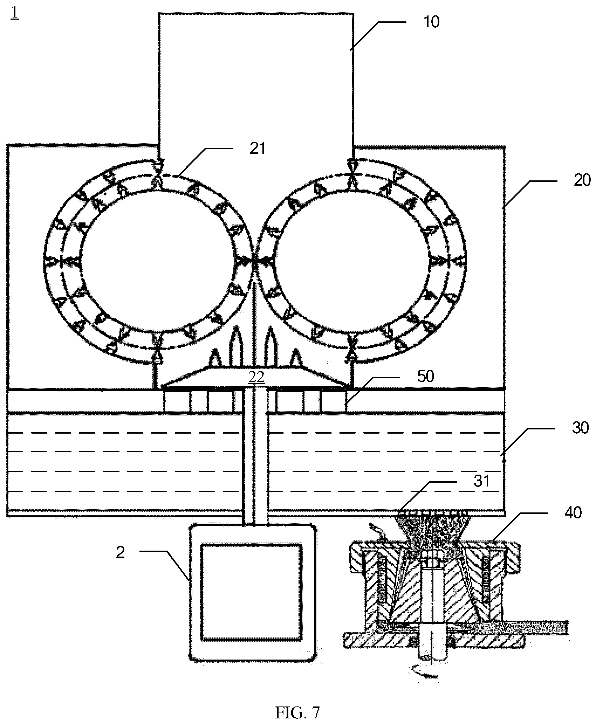

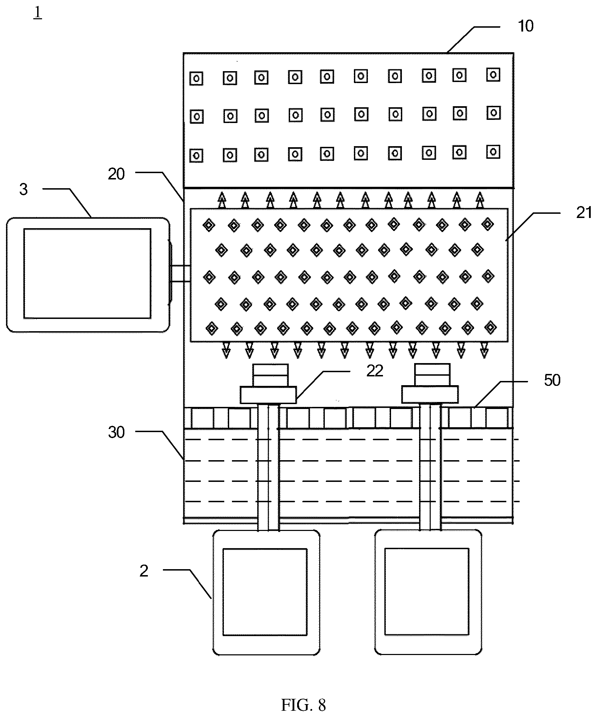

FIG. 7 and FIG. 8 schematically show a structural diagram of a solid material shredder according to a first embodiment of the present disclosure. FIG. 7 shows a front cross-sectional view of the solid material shredder, and FIG. 8 shows a side (left or right) cross-sectional view of the solid material shredder.

As shown in FIG. 7, a solid material shredder 1 of the embodiment of the present disclosure includes a material introduction box 10, a shredding device 20, a material container 30 and a colloid mill 40 that are interconnected and that are arranged sequentially.

The material introduction box 10 is used to introduce the solid material and allow the solid material to fall in an axial direction of the material introduction box 10 (that is, a vertical direction in FIG. 7). According to the embodiments of the present disclosure, the material introduction box may have a shape of, for example, a cuboid. An end of the material introduction box close to the shredding device 20 in the axial direction may be, for example, an open structure, so that the solid material may fall into the shredding device.

The shredding device 20 includes a cutter that is rotatable when driven by an external force, and the shredding device 20 is used to cut the solid material falling in the axial direction of the material introduction box 10 into pieces by using the cutter. According to the embodiments of the present disclosure, as shown in FIG. 7 and FIG. 8, the external force may be, for example, provided by a first motor 2 and/or a second motor 3.

As shown in FIG. 7 and FIG. 8, the shredding device 20 may include, for example, a dicing assembly 21 used to cut the solid material into blocks. According to the embodiments of the present disclosure, the dicing assembly 21 may include the cutter described above that is rotatable when driven by an external force. In this case, the external force is provided by the second motor 3.

The shredding device 20 may further include, for example, a crushing assembly 22 used to further cut the blocks cut by the dicing component 21 so as to obtain pieces. According to the embodiments of the present disclosure, the crushing assembly 22 may further include a cutter that is rotatable when driven by an external force as the cutter described above. In this case, the external force is provided not only by the second motor 3, but also by the first motor 2. The second motor 3 is used to drive the cutter included in the dicing assembly 21 to rotate, and the first motor 2 is used to drive the cutter included in the crushing assembly 22 to rotate.

The shredding device 20 may include, for example, a housing, and the dicing assembly 21 and the crushing assembly 22 are arranged in the housing. The housing may be integrally formed with the material introduction box 10 and the material container 30.

The material container 30 is specifically used to drive, through the flowing liquid introduced into the material container 30, the pieces falling from the shredding device 20 to move. Furthermore, a bottom of the material container 30 is provided with a sieve plate 31 including a plurality of sieve holes. The flowing liquid may drive the falling pieces to move to a region where the sieve plate 31 is located. Then, pieces having dimensions smaller than that of the plurality of sieve holes may be filtered out of the material container 30 along with part of the liquid, so as to be milled by using the colloid mill 40. According to the embodiments of the present disclosure, the dimension of the sieve hole of the sieve plate 31 may be specifically set according to the requirements of the colloid mill 40, for example, may be less than 5 mm. Accordingly, at least part of the pieces obtained by shredding of the shredding device 20 may meet the requirement that a width thereof in any direction is less than 5 mm.

For example, a piece material diversion hole 50 may be provided between the shredding device 20 and the material container 30 to smoothly introduce the pieces shredded in the shredding device 20 into the material container 30.

The colloid mill 40 is arranged under the sieve plate 31 provided at the bottom of the material container 30 so as to mill the pieces filtered out from the material container 30. Considering that the liquid flowing in the material container is also filtered out with the pieces, there is no need to add more liquid when the colloid mill 40 is milling the pieces. Under the milling action of the colloid mill 40, the pieces may become slurry, and specifically for example, may be converted into colloidal particles. According to the embodiments of the present disclosure, a type of the colloid mill 40 may be specifically selected according to actual requirements, so that the particle size of the slurry obtained by milling may meet the actual requirements. The particle size of the slurry obtained by milling may be specifically, for example, less than 50 µm.

In summary, the solid material shredder of the embodiments of the present disclosure may directly shred and mill the solid material into slurry, and thus has high integration and high processing efficiency. In addition, the solid material shredder includes the shredding device and the colloid mill and thus may integrate shredding function and milling functions. Therefore, when the solid material is a radioactive combustible waste, radioactive operation links may be effectively reduced, and the radioactive pollution may be reduced.

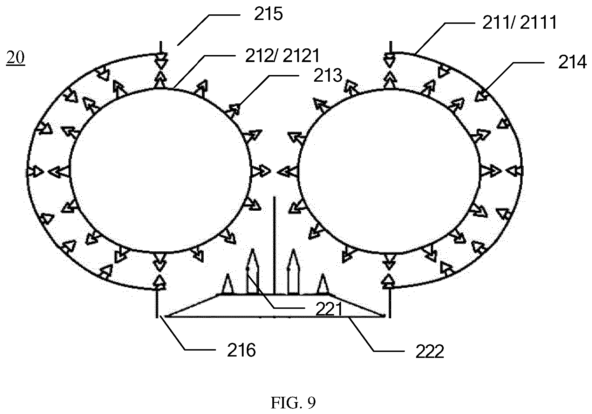

FIG. 9 schematically shows a structural diagram of a shredding device according to the embodiments of the present disclosure.

As shown in FIG. 9, the shredding device 20 of the embodiments of the present disclosure specifically includes a dicing assembly 21 and a crushing assembly 22.

The dicing assembly 21 includes a fixed cylinder 211, a rolling cylinder 212 and a plurality of first cutters 213.

An axial direction of the fixed cylinder 211 is perpendicular to the axial direction of the material introduction box 10. Specifically, the axial direction of the fixed cylinder 211 may be, for example, perpendicular to both the vertical direction in FIG. 1 and a width direction of the material introduction box 10. As shown in FIG. 9, the fixed cylinder 211 includes a first side wall 2111 provided with a first opening 215 and a second opening 216 in communicate with the material introduction box 10 and the material container 30, respectively. Specifically, a portion of the first side wall 2111 where the first opening 215 is arranged may be connected to the side wall of the opening structure of the material introduction box 10, so that the material introduction box 10 may be in communication with the dicing assembly 21 via the first opening 215 and the opening structure. In this way, the solid material introduced from the material introduction box 10 may fall into the fixed cylinder 211.

The rolling cylinder 212 is arranged inside the fixed cylinder 211 in the axial direction of the fixed cylinder 211. The rolling cylinder 212 includes a second side wall 2121. A distance between the second side wall 2121 and the first side wall 2111 may specifically correspond to the dimension of the solid material, so that the solid material falling from the material introduction box 10 may fall between the rolling cylinder 212 and the fixed cylinder 211.

The plurality of first cutters 213 may be specifically arranged on the second side wall 2121 in a circumferential direction of the rolling cylinder 212 (that is, a direction around the central axis of the rolling cylinder 212). Specifically, the plurality of first cutters 213 may be uniformly arranged on the second side wall 2121 to form a first cutter array. When the solid material falls between the rolling cylinder 212 and the fixed cylinder 211 (that is, between the first side wall 2111 and the second side wall 2121), the solid material may be cut into blocks under the cutting action of the first cutter array.

A dimension of the rolling cylinder 212 and a dimension of the fixed cylinder 211 may be set according to the dimension of the solid material, so that the distance between the first side wall 2111 and the second side wall 2121 is not too small to prevent the solid material from falling, and is not too large to allow the solid material falling directly along a gap between the first side wall 2111 and the first cutter array without being cut.

Aa distance between two adjacent first cutters 213 in the first cutter array may be specifically set according to the cutting requirements, that is, the distance corresponds to the dimension of the blocks obtained after cutting. When the solid material needs to be cut into a small dimension, the distance between two adjacent first cutters may be appropriately reduced. When the solid material needs to be cut into a large dimension, the distance between two adjacent first cutters may be appropriately increased. According to the embodiments of the present disclosure, the distance between the two adjacent first cutters 213 may be in the order of decimeters, for example, 100 mm.

As shown in FIG. 9, the dicing assembly 21 may further include, for example, a plurality of third cutters 214. The plurality of third cutters 214 may be arranged on an inner surface of the first side wall 2111 in the circumferential direction of the fixed cylinder 211 so as to be arranged opposite to the plurality of first cutters 213. Specifically, the plurality of third cutters 214 may be, for example, uniformly arranged on the first side wall 2111 to form a second cutter array.

The rolling cylinder 212 described above may specifically rotate around its central axis under the action of a second external force, so that the solid material falling between the first side wall 2111 and the second side wall 2121 in the axial direction of the material introduction box 10 may be cut into blocks under the action of the first cutter array and the second cutter array. Specifically, when the solid material falls between the first side wall 2111 and the second side wall 2121, the solid material is caught between a plurality of adjacent first cutters 213. As the rolling cylinder 212 rotates, the solid material is rotated and is continuously cut and refined under the action of the third cutters 214 in the second cutter array into blocks having a dimension smaller than the distance between the first side wall 2111 and the second side wall 2121. In this way, the solid material may be effectively cut, and the dimension of the blocks obtained by cutting the solid material may be limited within a certain range (for example, within 100 mm). According to the embodiments of the present disclosure, the distance between two adjacent third cutters 214 in the second cutter array may be, for example, equal to or different from the distance between two adjacent first cutters 213. According to the embodiments of the present disclosure, the distance between the two adjacent third cutters 214 may also be, for example, in the order of decimeters.

The second external force may be provided by the second motor 3 shown in FIG. 8. The rolling cylinder 212 may rotate slowly under the action of the second external force, and a speed of rotation may be specifically 5 R/min to 50 R/min. The speed of rotation of the rolling cylinder 212 is not limited in the present disclosure, and may be specifically set according to a hardness of the solid material and the cutting requirements.

As shown in FIG. 9, the rolling cylinder 212 may specifically include, for example, at least one set of rollers arranged in the axial direction of the fixed cylinder 211. Each set of rollers includes two opposite rollers, and the first cutter array is formed on both side walls of the two opposite rollers. According to the embodiments of the present disclosure, the two opposite rollers may, for example, rotate in opposite directions when driven by the second external force, so that the solid material falling between the two rollers may be brought between the first cutter array and the second cutter array, and the solid material may be cut.

The two opposite rollers may be, for example, arranged symmetrically with respect to the central axis of the material introduction box, and a distance between the two opposite rollers may be less than the dimension of the solid material, so as to prevent the solid material falling in the axial direction of the material introduction box from directly falling into the crushing assembly 22 or the material container 30 along a gap between the two opposite rollers.

As shown in FIG. 9, the crushing assembly 22 described above may be arranged in the fixed cylinder 211 at a position between the rolling cylinder 212 and the material container 30, so as to further cut the blocks obtained by the cutting of the dicing assembly 21 and obtain pieces of the solid material.

A distance between the crushing assembly 22 and the first side wall 2111 of the fixed cylinder 211 may be greater than a preset distance, so that the pieces obtained by the cutting of the crushing assembly 22 may pass through a space between the first side wall 2111 and the crushing assembly 22 and fall into the material container 30. The preset distance may be specifically set according to the dimension of the pieces obtained by the cutting of the crushing assembly 22. The preset distance may not be too large, so as to prevent the blocks obtained by the cutting of the dicing assembly 21 from directly falling into the material container 30 through the space between the crushing assembly 22 and the first side wall 2111. According to the embodiments of the present disclosure, the preset distance may be, for example, 5 mm.

The crushing assembly 22 may include, for example, a second cutter used to cut the blocks into pieces and further reduce the dimension of the pieces entering the material container 30, so as to provide conditions for the milling of the colloid mill 40. The second cutter may rotate at a high speed, for example, under the action of the first external force, so as to ensure effective cutting of the blocks. The first external force may be provided, for example, by the first motor 2 shown in FIG. 7 and FIG. 8. A speed of rotation of the second cutter may be specifically set according to the hardness of the solid material. For example, the speed of rotation of the second cutter may be within a range of 1000 R/min to 3000 R/min.

The second cutter of the crushing assembly 22 may specifically include, for example, an axial cutter 221 and a radial cutter 222. The axial cutter 221 is arranged in the axial direction of the material introduction box 10, and the radial cutter 222 is arranged in a direction perpendicular to both the axial direction of the material introduction box 10 and the axial direction of the fixed cylinder 211. Further, the radial cutter 222 may be, for example, coaxial with the axial cutter 221, so that the radial cutter 222 and the axial cutter 221 may rotate synchronously around the common central axis under the action of the first external force. Specifically, the radial cutter 222 may be located between the axial cutter 221 and the material container 30 to further radially cut the blocks obtained after the axial cutting of the axial cutter 221, so that the pieces finally obtained may have a dimension less than 5 mm, which is ready for the pieces to enter the colloid mill.

In summary, in the shredding device of the embodiments of the present disclosure, the method of cutting the solid material into blocks through a slow-rotating roller cutter array and the method of cutting blocks into pieces through a high-speed rotating cutter are combined. In this way, the dimension of the pieces obtained may be reduced to less than 5 mm, and the pieces obtained have good uniformity, so as to prepare for the pieces to enter the colloid mill and be milled into slurry.

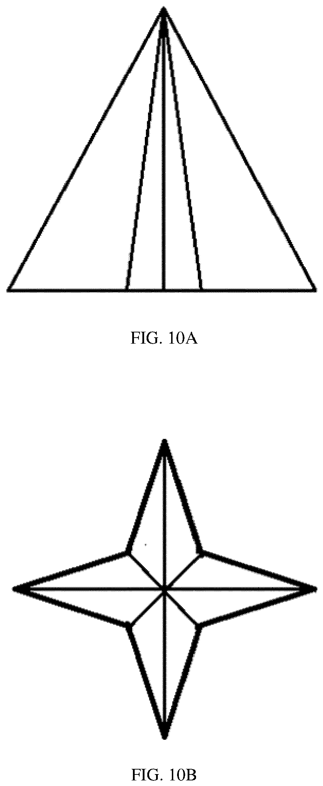

FIG. 10A and FIG. 10B schematically show structural diagrams of the first cutter and the third cutter according to the embodiments of the present disclosure. FIG. 10A shows a front view of the first cutter and the third cutter, and FIG. 10B shows a top view of the first cutter and the third cutter.

The first cutters forming the first cutter array and/or the second cutters forming the second cutter array may, for example, have a multi-edge cutter structure so as to improve stability and sharpness of the first cutter array and the second cutter array and improve the cutting efficiency. Specifically, as shown in FIG. 10A and FIG. 10B, the first cutter and the third cutter are a four-edge cutter.

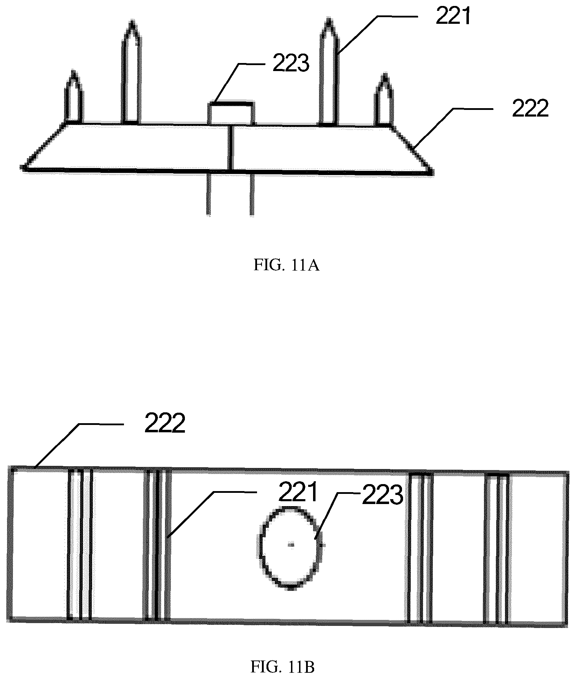

FIG. 11A and FIG. 11B schematically show structural diagrams of the crushing assembly according to the embodiments of the present disclosure. FIG. 11A shows a front view of the second cutter, and FIG. 11B shows a top view of the second cutter.

As shown in FIG. 8, for example, a plurality of crushing assemblies 22 may be periodically arranged along the central axis of the fixed cylinder 211 in FIG 9, so as to cut the blocks falling from different positions along the central axis of the fixed cylinder 211. Each crushing assembly 22 includes a second cutter that includes an axial cutter 221 and a radial cutter 222. Accordingly, the number of the first motors 2 in FIG. 8 may be the same as that of the crushing assemblies 22.

As shown in FIG. 11A and FIG. 11B, the axial cutter 221 of the second cutter may be set as, for example, a plurality of pairs of axial cutters with different heights. Two cutters in each pair of cutters may be symmetrically arranged along the common central axis 223 of the axial cutter 221 and the radial cutter 222 so as to perform stepwise cutting on the blocks. Specifically, the blocks may be firstly cut by a higher axial cutter, and then cut by a lower axial cutter in the process of falling after being cut by the higher axial cutter, so that the blocks may be cut multiple times into pieces with a small dimension.

The radial cutter 222 described above may be specifically an integral structure having cutter structures at both ends in the radial direction (in a direction perpendicular to both the axial direction of the material introduction box and the axial direction of the fixed cylinder). The cutter structure is a structure that gradually becomes thinner in a direction parallel to the axial direction of the material introduction box, so as to perform the radial cutting on the blocks obtained after the axial cutting of the axial cutter.

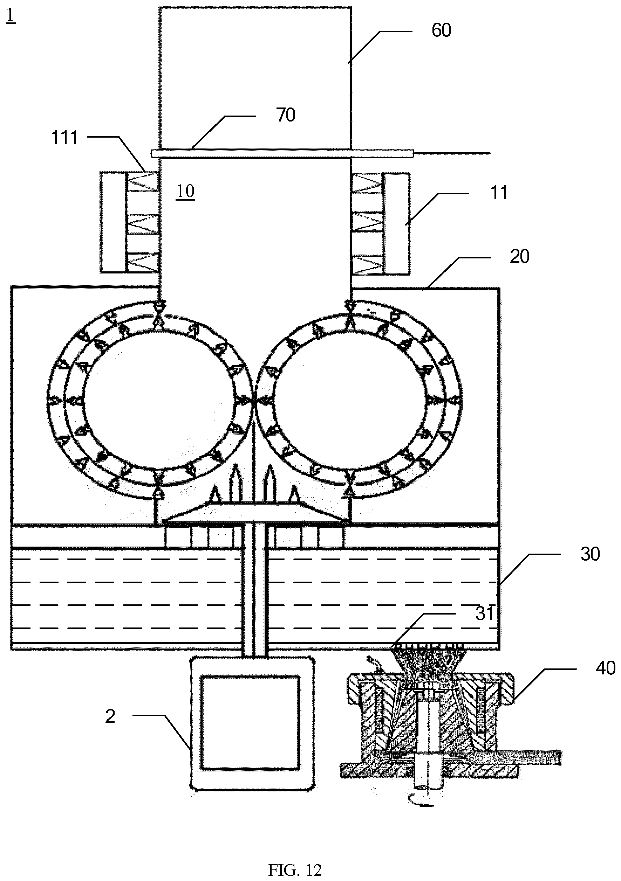

FIG. 12 schematically shows a structural diagram of the solid material shredder according to a second embodiment of the present disclosure.

As shown in FIG. 12, the solid material shredder 1 of the embodiments of the present disclosure may further include, for example, a material receiving box 60 and a gate valve 70. The material receiving box 60 is used to receive and place the solid material. A switch of the gate valve 70 is arranged outside the material receiving box 60, and the gate valve 70 is arranged between the material receiving box 60 and the material introduction box 10. With the switch of the gate valve, the material receiving box 60 and the material introduction box 10 may be connected or isolated. Specifically, when the solid material needs to be shredded and milled, a packaging bag containing the solid material may be opened and put into the material receiving box 60. Then, the gate valve 70 may be opened, and the solid material in the packaging bag may be introduced into the material introduction box 10 from the material receiving box 60.

As shown in FIG. 12, the material introduction box 10 in the solid material shredder 1 of the embodiments of the present disclosure may include, for example, a pair of third side walls 11 that are oppositely arranged. Each third side wall 11 of the pair of third side walls 11 is provided with a plurality of nozzles 111. By connecting the nozzles 111 with a pump and a liquid container, the liquid in the liquid container may be pumped into the nozzles and sprayed into the material introduction box 10. The plurality of nozzles 111 arranged on the pair of third side walls 11 may be arranged evenly and symmetrically to introduce liquid evenly and symmetrically at the side walls of the material introduction box 10, so as to allow the solid material introduced from the material receiving box 60 to fall in the axial direction of the material introduction box 10 under an action of the introduced liquid, so that the solid material may fall between the pair of opposite rollers. In this case, the flowing liquid in the material container may be the liquid introduced by the nozzle, and the flow of the liquid in the material container may be realized by means of external force so as to drive the pieces to the region where the sieve plate is located. Each third side wall 11 is arranged parallel to both the axial direction of the fixed cylinder and the axial direction of the material introduction box.

In addition, since the liquid sprayed from the nozzles 111 falls with the solid material and flows into the shredding device 20 and the material container 30, the interior of the entire solid material shredder of the embodiments of the present disclosure may be in a liquid environment, which may prevent a production of aerosol in the process of shredding the radioactive solid waste, and thus avoid air pollution. Furthermore, self-feeding may be realized by means of the liquid introduced by the nozzles without external force, so that the apparatus dimension of the entire solid material shredder may be reduced to a certain extent.

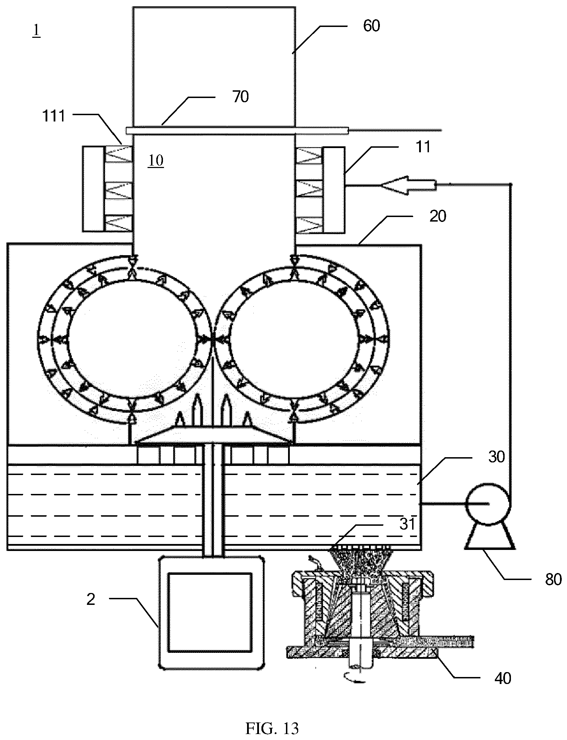

FIG. 13 schematically shows a structural diagram of the solid material shredder according to a third embodiment of the present disclosure.

As shown in FIG. 13, the solid material shredder 1 may be provided with a diversion pump 80 in order to facilitate the flow of liquid in the material container 30. In addition, a pipeline may be provided, for example, between the material container 30 and the nozzles 111 of the material introduction box 10, so that the liquid in the material container 30 may flow into the nozzles 111 via the pipeline and may be sprayed into the material introduction box 10, so as to achieve recycling of the liquid in the material container 30.

In addition, there are still large pieces having a dimension greater than that of the sieve holes of the sieve plate 31 in the material container 30, and these large pieces may pollute the environment if being discharged directly. Considering that the liquid in the material container 30 may flow when driven by the diversion pump 80, these large pieces (that is, the pieces not filtered out from the material container 30) may flow out of the material container 30 via the pipeline under the driving of the flowing liquid, and then flow into the material introduction box 10 via the nozzles 111. Therefore, the large pieces flowing into the material introduction box 10 may be further cut by the shredding device until they have a dimension smaller than that of the sieve holes of the sieve plate 31, and then milled into slurry by the colloid mill 40.

In summary, with the diversion pump 80, the embodiments of the present disclosure may realize the recovery and reuse of liquid and un-milled waste, and thus improve the processing capacity of the solid material shredder.

The embodiments of the present disclosure provide a protective apparatus of a reaction apparatus and a reaction system. The protective device of the reaction apparatus includes a pair of protective end plates oppositely arranged and a protective assembly. The protective assembly is arranged between the pair of protective end plates, and the protective assembly includes an outer protective layer, an inner protective layer and a cooling layer. The outer protective layer and the pair of protective end plates enclose to form a first space. The inner protective layer is arranged in the first space, and the inner protective layer and the pair of protective end plates enclose to form a second space for accommodating the reaction apparatus. The inner protective layer is provided with a plurality of diversion holes in a direction of a connecting line between the pair of protective end plates, which are used to introduce a released matter from the reaction apparatus to between the outer protective layer and the inner protective layer. The cooling layer is interposed between the inner protective layer and the outer protective layer, and the cooling layer includes a liquid pipeline allowed to store a liquid. The protective assembly is used so that liquid is stored in the liquid pipeline and the first space is a closed space in a case that the reaction apparatus accommodated in the second space is in an operating state.

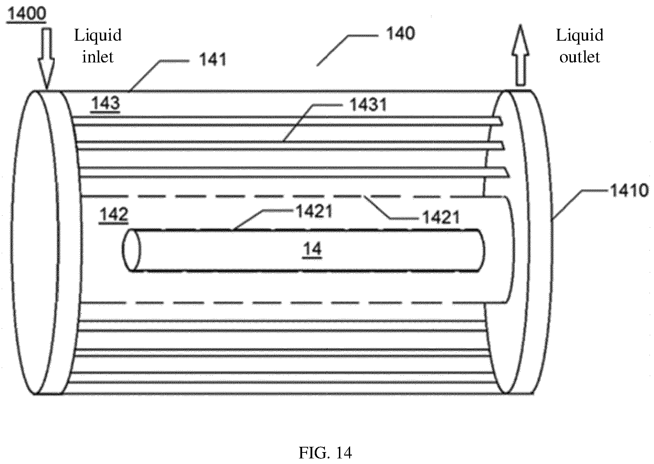

FIG. 14 schematically shows a structural diagram of a protective device of a reaction apparatus according to a first embodiment of the present disclosure.

As shown in FIG. 14, a protective device 1400 of a reaction apparatus 14 of the embodiment of the present disclosure includes a pair of protective end plates1410 oppositely arranged and a protective assembly 140.

The reaction apparatus 14 is an apparatus that may meet high-temperature and high-pressure internal conditions, such as a high-temperature and high-pressure furnace, a reactor, a supercritical water reactor, and the like. It may be understood that a standard for high temperature and high pressure herein may be defined according to actual requirements, or may be defined by standards well-known in the industry, which is not limited in the present disclosure.

The protective assembly 140 is arranged between the pair of protective end plates 1410. As shown in FIG. 14, the protective assembly 140 may specifically include an outer protective layer 141, an inner protective layer 142 and a cooling layer 143.

The outer protective layer 141 and the pair of protective end plates 1410 may enclose to form the first space. The inner protective layer 142 is arranged in the first space. The inner protective layer 142 and the pair of protective end plates 1410 enclose to form a second space for accommodating the reaction apparatus 14. The cooling layer 143 is interposed between the inner protective layer 142 and the outer protective layer 141, and includes a liquid pipeline allowed to store a liquid.

As shown in FIG. 14, the inner protective layer 142 may be provided, for example, with a plurality of diversion holes in a direction of a connecting line between the pair of protective end plates 1410. Each diversion hole is formed by connection of a plurality of small apertures 1421 opened on a side wall of the inner protective layer 142 close to the reaction apparatus and a side wall of the inner protective layer 142 close to the outer protective layer. In a case that the reaction apparatus explodes due to an abnormality, the released matter from the reaction apparatus may be introduced to between the outer protective layer 141 and the inner protective layer 142 through the plurality of diversion holes, that is, the released matter may be introduced into the cooling layer. According to the embodiments of the present disclosure, in order to ensure the balance of different parts of the cooling layer in withstanding impact, the outer protective layer 141, the inner protective layer 142 and the cooling layer 143 of the embodiments of the present disclosure may be coaxially arranged.

The protective assembly 140 may be specifically used so that the liquid is stored in the liquid pipeline in the cooling layer 143 and the first space enclosed by the outer protective layer 141 and the pair of end plates 1410 oppositely arranged is a closed space in a case that the reaction apparatus 14 accommodated in the second space is in an operating state. In this case, when the released matter is introduced into the cooling layer, since the released matter is in high temperature and high pressure while the internal environment of the liquid pipeline is normal temperature and normal pressure or low temperature and normal pressure, the released matter may impact the liquid pipeline and even crack the liquid pipeline due to the difference in internal pressure and external pressure. The liquid in the liquid pipeline may cool the released matter, and the increase of the space for the released matter may cause the pressure of the released matter to reduce. The released material after cooling and decompression may not be released to the outside of the protective device 1400 due to a barrier of the outer protective layer, and may only exist in the first space. In this way, when the released matter is radioactive gas, the released matter may be prevented from polluting the environment and damaging the human body.

In order to improve the efficiency of cooling and decompression, as shown in FIG. 14, the liquid pipeline described above may include a plurality of first pipelines 1431 extending in the direction of the connecting line between the pair of protective end plates 1410, and the plurality of first pipelines may be periodically arranged in a direction perpendicular to the inner protective layer 142 and in a circumferential direction of the inner protective layer 142. With the arrangement of the plurality of first pipelines 1431, a contact area between the released matter and the liquid pipeline may be increased, so that the cooling efficiency may be improved. In addition, more liquid may be stored by the plurality of first pipelines 1431, so that when the released matter impacts and cracks the first pipelines 1431, the space for the released matter is significantly increased, and the pressure of the released matter may be quickly reduced, which may prevent the impact damage of the released matter to the outer protective layer 141.

In order to cause the released matter from the reaction apparatus 14 to be evenly dispersed into the cooling layer 143, the plurality of diversion holes provided on the inner protective layer may be, for example, periodically arranged in the direction of the connecting line between the pair of protective end plates 1410, so as to further avoid a concentrated impact of the released matter on the cooling layer. Moreover, a contact area between the released matter and the cooling layer may be increased, and the efficiency of cooling and decompression may be further improved.

A thickness and a material of the inner protective layer and the outer protective layer may be specifically set according to actual conditions. For example, a body material of the inner protective layer and/or the outer protective layer may contain steel. Specifically, the thickness of the inner protective layer may be within a range of, for example, 30 mm to 50 mm, and the material of the inner protective layer may be, for example, 45# steel. The thickness of the outer protective layer may be within a range of 30 mm to 50 mm, and the material of the outer protective layer may be, for example, stainless steel.

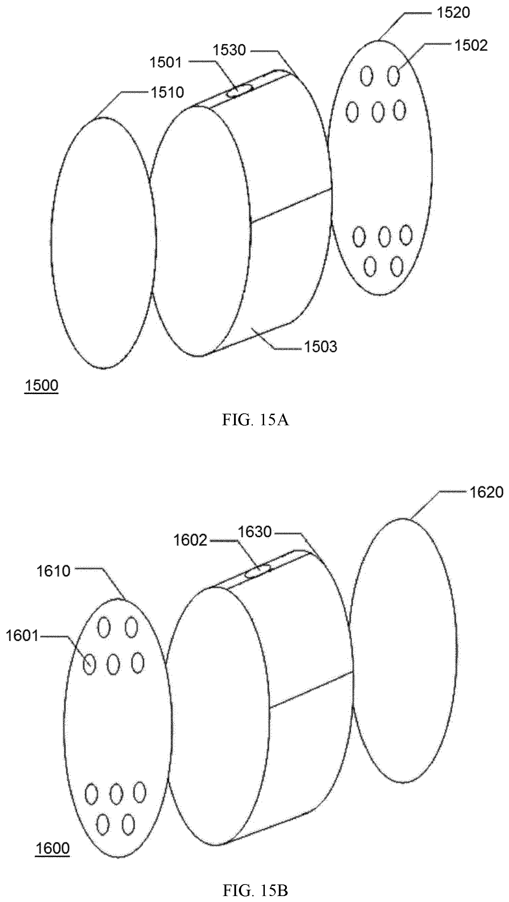

FIG. 15A schematically shows a structural diagram of a first protective end plate in the pair of protective end plates according to the embodiments of the present disclosure. FIG. 15B schematically shows a structural diagram of a second protective end plate in the pair of protective end plates according to the embodiments of the present disclosure.

The pair of protective end plates 1410 oppositely arranged shown in FIG. 14 may specifically include a first protective end plate 1500 and a second protective end plate 1600. In order to introduce liquid into the liquid pipeline of the cooling layer 143, the first protective end plate 1500 and the second protective end plate 1600 may be implemented to have structures shown in FIG. 15A and FIG. 15B, respectively.

As shown in FIG. 15A, the first protective end plate 1500 of the embodiments of the present disclosure may include a first liquid inlet 1501, a first liquid outlet 1502, and a first liquid passage 1503 connecting the first liquid inlet 1501 and the first liquid outlet 1502.

The first liquid outlet 1502 is in communication with the liquid pipeline. The first liquid inlet 1501 may be opened or closed under an action of an external force. For example, the first liquid inlet 1501 may be in an open state when liquid needs to be introduced into the liquid pipeline, and the first liquid inlet 1501 may be in a closed state when no liquid needs to be introduced. Accordingly, the first protective end plate 1500 may be configured so that when the first liquid inlet 1501 is opened, the liquid introduced from the first liquid inlet 1501 flows through the first liquid passage 1503 and flows into the liquid pipeline from the first liquid outlet 1502 in communication with the liquid pipeline, so as to introduce the fluid into the liquid pipeline. According to the embodiments of the present disclosure, when the liquid is introduced from the first liquid inlet 1501, the first liquid inlet 1501 may be specifically, for example, in communication with a liquid outlet of a liquid storage device (such as a water cooler), so as to introduce the liquid stored in the liquid storage device. It may be understood that the first liquid inlet 1501 may also be in an open state when the liquid needs to be discharged, and the first liquid inlet 1501 may also be used as an outlet, as long as the first liquid inlet 1501 is connected to a suction pump and in communication with a liquid inlet of the liquid storage device.

The first protective end plate 1500 may specifically include, for example, a first end plate 1510, a second end plate 1520, and a first cylinder 1530 located between the first end plate 1510 and the second end plate 1520. A dimension of the first cylinder 1530 matches that of the first end plate 1510 and that of the second end plate 1520, or the dimension of the first cylinder 1530 is smaller than that of the first end plate 1510 and that of the second end plate 1520, so that a first liquid passage 1503 is enclosed between the first end plate 1510 and the second end plate 1520. That is, a hollow portion of the first cylinder 1530 is the first liquid passage 1503. In this case, the first liquid inlet 1501 is provided on the first cylinder 1530, and the first liquid outlet 1502 is provided on one of the first end plate 1510 and the second end plate 1520 that is close to the second protective end plate 1600. For example, the first liquid outlet 1502 may be arranged on the second end plate 1520. In this case, the second end plate 1520 is closer to the second protective end plate 1600 than the first end plate 1510.

The first end plate 1510, the second end plate 1520 and the first cylinder 1530 may form the first protective end plate 1500 specifically by welding or the like, or the first end plate 1510, the second end plate 1520 and the first cylinder 1530 may also be integrally formed to form the first protective end plate 1500, which is not limited in the present disclosure.

Similarly, as shown in FIG. 15B, the second protective end plate 1600 of the embodiments of the present disclosure may include a second liquid inlet 1601, a second liquid outlet 1602, and a second liquid passage 1603 connecting the second liquid inlet 1601 and the second liquid outlet 1602.

The second liquid inlet 1601 is in communication with the liquid pipeline. The second liquid outlet 1602 may be opened or closed under an action of an external force. For example, the second liquid outlet 1602 may be in an open state when the liquid stored in the liquid pipeline needs to be discharged, and the second liquid outlet 1602 may be in a closed state when no liquid needs to be discharged. Accordingly, the second protective end plate 1600 may be configured so that when the second liquid outlet 1602 is opened, the liquid in the liquid pipeline flows out of the liquid pipeline through the second liquid inlet 1601 and flows through the second liquid passage 1603 and then exits from the second liquid outlet 1602, so that the fluid stored in the liquid pipeline may exit. According to the embodiments of the present disclosure, when the liquid exits from the second liquid outlet 1602, the second liquid outlet 1602 may be specifically in communication with a liquid inlet of a liquid storage device (such as a water chiller), and the liquid stored in the liquid pipeline may exit under the driving of a motor or other apparatuses capable of providing pumping power (such as a suction pump). It may be understood that the second liquid outlet 1602 may also be in an open state when liquid needs to be introduced, and the second liquid outlet 1602 may also be used as an inlet, as long as the second liquid outlet 1602 is in communication with a liquid outlet of the liquid storage device and connected to the suction pump.

The second protective end plate 1600 may specifically include, for example, a third end plate 1610, a fourth end plate 1620, and a second cylinder 1630 located between the third end plate 1610 and the fourth end plate 1620. A dimension of the second cylinder 1630 matches that of the third end plate 1610 and that of the fourth end plate 1620, or the dimension of the second cylinder 1630 is smaller than that of the third end plate 1610 and that of the fourth end plate 1620, so that a second liquid passage 1603 is enclosed between the third end plate 1610 and the fourth end plate 1620. That is, a hollow portion of the second cylinder 1630 is the second liquid passage 1603. In this case, the second liquid outlet 1602 is arranged on the second cylinder 1630, and the second liquid inlet 1601 is arranged on one of the third end plate 1610 and the fourth end plate 1620 that is close to the first protective end plate 1500. For example, the second liquid inlet 1601 may be arranged on the third end plate 1610. In this case, the third end plate 1610 is closer to the first protective end plate 1500 than the fourth end plate 1620.

The third end plate 1610, the fourth end plate 1620 and the second cylinder 1630 may form the second protective end plate 1600 specifically by welding or the like, or the third end plate 1610, the fourth end plate 1620 and the second cylinder 1630 may also be integrally formed to form the second protective end plate 1600, which is not limited in the present disclosure.

In order to ensure a protection function of the protective device 1400 of the reaction apparatus in a case that the reaction apparatus is placed in the protective device 1400, the protective device 1400 may be in a closed state. Therefore, the protective device 1400 may be configured such that when the reaction apparatus accommodated in the second space is in an operating state, the first liquid inlet 1501 and the second liquid outlet 1602 are closed, and liquid is stored in the first liquid passage 1503 and the second liquid passage 1603. In this way, by storing liquid in the first liquid passage 1503 and the second liquid passage 1603, it may avoid an incomplete protection due to the impact of the released matter from the reaction apparatus on the protective end plate. Furthermore, the released matter released from the reaction apparatus may be completely enclosed in the protective device 1400, so as to prevent the released matter from leaking and polluting the environment.

The plurality of first pipelines 1431 in FIG. 14 may include, for example, a first end and a second end that are oppositely arranged. The plurality of first pipelines 1431 may be in communication with the two protective end plates to facilitate the introduction and discharge of liquid. Specifically, the first end of the plurality of first pipelines 1431 is in communication with the first liquid outlet 1502, and the second end of the plurality of first pipelines 1431 is in communication with the second liquid inlet 1601.

A thickness and a material of the first end plate 1510, the second end plate 1520 and the first cylinder 1530 of the first protective end plate 1500 may be specifically set according to actual requirements. For example, a thickness of a side wall of the first end plate 1510, a side wall of the second end plate 1520 and/or a side wall of the first cylinder 1530 may be within a range of, for example, 30 mm to 70 mm. A material of a main body of the first end plate 1510, a main body of the second end plate 1520 and/or a main body of the first cylinder 1530 may be steel, for example, stainless steel, 45# steel, or the like.

Accordingly, a thickness and a material of the third end plate 1610, the fourth end plate 1620 and the second cylinder 1630 of the second protective end plate 1600 may be specifically set according to actual requirements. For example, a thickness of a side wall of the third end plate 1610, a side wall of the fourth end plate 1620 and/or a side wall of the second cylinder 1630 may be within a range of, for example, 30 mm to 70 mm. A material of a main body of the third end plate 1610, a main body the fourth end plate 1620 and/or a main body the second cylinder 1630 may be steel, for example, stainless steel, 45# steel, or the like.

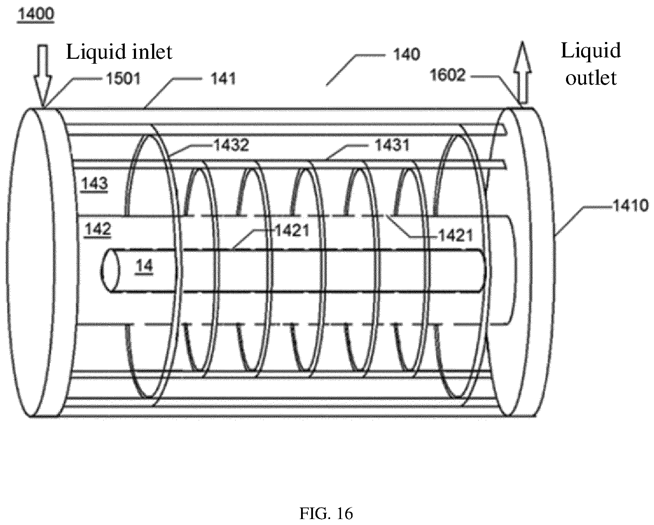

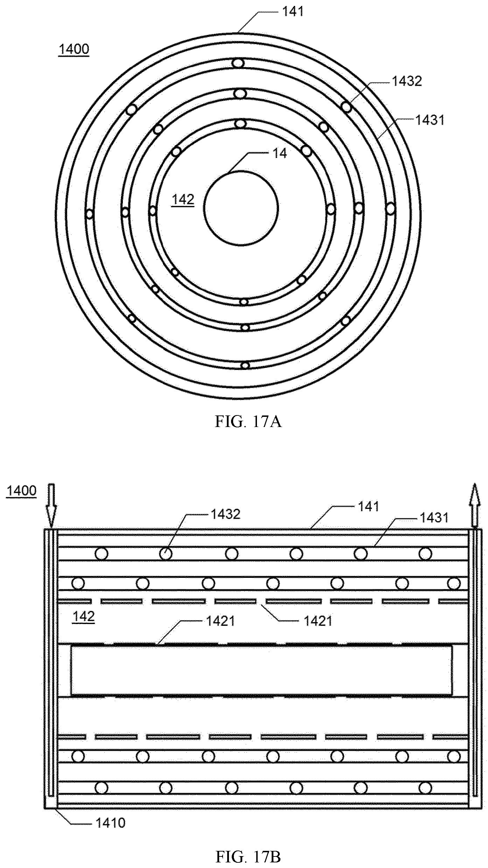

FIG. 16 schematically shows a structural diagram of a protective device of a reaction apparatus according to a second embodiment of the present disclosure. FIG. 17A schematically shows a front cross-sectional view of the protective device of the reaction apparatus in FIG. 16. FIG. 17B schematically shows a side cross-sectional view of the protective device of the reaction apparatus in FIG. 16.

As shown in FIG. 16 to FIG. 17B, the protective device 1400 of the reaction apparatus 14 in the embodiments of the present disclosure differs from the protective device in FIG. 14 in that the liquid pipeline of the cooling layer 143 may further include a plurality of second pipelines 1432 in addition to the plurality of first pipelines 1431.

As shown in FIG. 16, the plurality of second pipelines 1432 extend in a circumferential direction of the inner protective layer 142, and are periodically arranged in the direction of the connecting line between the pair of protective end plates and in a direction perpendicular to the inner protective layer. Specifically, as a distance between the plurality of second pipelines and the inner protective layer increases, a dimension of the second pipelines 1432 periodically arranged in the direction perpendicular to the inner protective layer also gradually increases.

The specific dimension of the plurality of second pipelines 1432 may be determined according to a distance between two first pipelines of the plurality of pairs of first pipelines 1431 arranged opposite to each other with respect to the inner protective layer, so that each second pipeline of the plurality of second pipelines 1432 may be connected with a set of first pipelines 1431 at an equal distance from the inner protective layer through a pipeline connector. In this way, the plurality of second pipelines 1432 and the plurality of first pipelines 1431 may be interconnected to form a cage structure.

Accordingly, since both ends of the first pipeline 1431 are respectively connected to the liquid passages of the two protective end plates, the protective device of the reaction apparatus of the embodiments of the present disclosure may be configured to allow the liquid introduced from the first liquid inlet 1501 to flow into the first liquid passage 1503, the first pipeline 1431 and the second pipeline 1432 in sequence. Therefore, when the liquid is introduced, the liquid may flow into the first pipeline 1431 and the second pipeline 1432, so as to ensure that liquid may be stored in both the first pipeline 1431 and the second pipeline 1432.

In summary, with the cage structure enclosed by the first pipelines 1431 and the second pipelines 1432, the contact area between the released matter and the liquid pipelines may be effectively increased when the released matter is introduced into the cooling layer 143, so that the temperature and the pressure of the released matter may be reduced quickly, and the released matter may be instantly cooled into liquid water and completely dissolved. Moreover, due to the barrier of the outer protective layer 141, even if all the released matters in the reactor are released, the protective device 1400 may not be damaged, so that the released matter may be well confined inside the outer protective layer 141, which effectively avoids environmental pollution.

Another aspect of the present disclosure further provides a reaction system. The reaction system may include a reaction apparatus and a protective device of the reaction apparatus. The reaction apparatus may be a high-temperature and high-pressure apparatus, for example, a supercritical water reaction apparatus, a high-temperature and high-pressure furnace, or a reactor.

The protective device of the reaction apparatus may be any of the protective devices described in reference to FIG. 14 to FIG. 17B. The protective device specifically includes a pair of protective end plates and a protective assembly. The protective assembly includes an outer protective layer, an inner protective layer, and a cooling layer interposed between the outer protective layer and the inner protective layer. The reaction apparatus may be specifically placed in the second space enclosed by the inner protective layer and the pair of protective end plates of the protective device, which will not be repeated here.

According to the embodiments of the present disclosure, the reaction system includes not only the reaction apparatus but also the protective device for the reaction apparatus, which may effectively avoid unforeseen accidents caused by the impact of high-temperature and high-pressure released matter on the external environment in a case that the reaction apparatus explodes due to an accident. According to the embodiments of the present disclosure, the reaction apparatus described above may specifically be a supercritical water reaction apparatus.

According to the embodiments of the present disclosure, in order to reduce the volume and the harmfulness of the radioactive solid combustible (including resin waste) of nuclear power plants and other nuclear facilities, the present disclosure provides a supercritical water oxidation system and a supercritical water oxidation method, with which a solid combustible may be converted into an inorganic matter through supercritical water oxidation, and radioactive metal elements in the organic matter may be recovered, thus achieving the purpose of minimizing waste. In practice, the processing capacity of treating the radioactive solid combustible waste by using the supercritical water oxidation system and the supercritical water oxidation method may reach at least 20 kg/h to 200 kg/h, which reaches the scale of engineering application. A volume reduction ratio of fiber fabrics (working clothes, absorbent paper, gloves, air suit, etc.) may reach 100 to 150, a volume reduction ratio of plastics and rubber may reach 60 to 90, a volume reduction ratio of resin waste may reach 30 to 90, and a volume reduction ratio of wood waste may reach 80 to 120.

The supercritical water oxidation system provided by the embodiments of the present disclosure includes: a water supply device used to provide water and a target solution; an oxidant supply device used to provide an oxidant for a supercritical water oxidation reaction; a solid combustibles shredding refiner used to mill solid combustibles to a slurry; a supercritical water oxidation reactor used to receive the slurry obtained by milling the solid combustibles, the oxidant, the water and the target solution, and provide a reaction zone for the supercritical water oxidation reaction; and a separation apparatus used to separate an effluence from the supercritical water oxidation reactor.

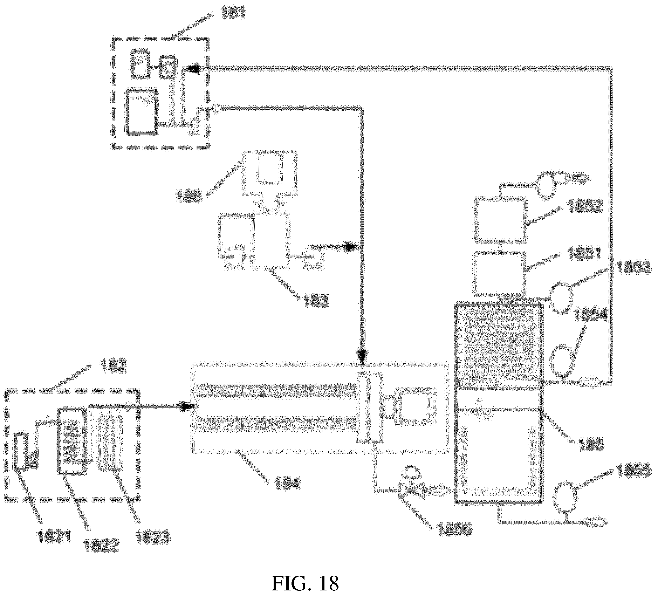

FIG. 18 schematically shows a schematic diagram of the supercritical water oxidation system according to the embodiments of the present disclosure. It should be noted that

FIG. 18 only shows an example of the supercritical water oxidation system according to the embodiments of the present disclosure to help those skilled in the art understand the technical content of the present disclosure, but it should not be used to improperly limit the supercritical water oxidation system of the embodiments of the present disclosure.

As shown in FIG. 18, the supercritical water oxidation system includes a water supply device 181, an oxidant supply device 182, a solid combustibles shredding refiner 183, a supercritical water oxidation reactor 184, and a separation apparatus 185.

The water supply device 181 is used to supply water and a target solution.

The water supply device 181 may include a plurality of containers for containing water and the target solution, respectively. According to the embodiments of the present disclosure, the target solution may be a sucrose solution, and a sucrose solution supply pump may be activated to draw the sucrose solution from the container. The water supply device 181 may further include a high-pressure pump used to transfer water and the target solution to the supercritical water oxidation reactor 184.

The oxidant supply device 182 is used to provide an oxidant for the supercritical water oxidation reaction.

A type of the oxidant is not limited. For example, the oxidant may be liquid oxygen, hydrogen peroxide and so on. The oxidant supply device 182 is connected to the supercritical water oxidation reactor 184, and the oxidant may be fed into the supercritical water oxidation reactor 184 to realize the supercritical water oxidation reaction.

Taking liquid oxygen as an example of the oxidant, the oxidant supply device 182 may include a dewar 1821, a water bath vaporizer 1822, and a high-pressure oxygen cylinder group 1823. The liquid oxygen may be fed from the dewar 1821 to the water bath vaporizer 1822 through a low-temperature and high-pressure liquid oxygen pump, and then enter the high-pressure oxygen cylinder group 1823 from the water bath vaporizer 1822. When solid combustibles need to be treated, a one-way valve may be opened, and oxygen is fed into the supercritical water oxidation reactor 184 from the high-pressure oxygen cylinder group 1823. A material of the liquid oxygen apparatus, the pipeline, the valve and component thereof may contain ultra-cold low-temperature steel.

The solid combustibles shredding refiner 183 is used to mill the solid combustibles to slurry.

The solid combustibles may be stored in a packing box 186, from which the solid combustibles are fed into the solid combustibles shredding refiner 183. In a process that the solid combustibles shredding refiner 183 mills the solid combustibles into slurry, the solid combustibles may firstly enter the roller array to be cut into blocks, then be shredded into pieces by the rotary cutter, and finally be milled to slurry by using the colloid mill, by controlling the speed of the roller, the speed of the rotary cutter and the water volume of the diversion pump, so that the radioactive solid waste may be shredded and milled into slurry.

The solid combustibles shredding refiner 183 may mill the solid combustibles to a certain range of particle size, for example, below 50 µm. When solid combustibles need to be treated, the one-way valve may be opened, and the slurry is fed from the solid combustibles shredding refiner 183 into the supercritical water oxidation reactor 184. According to the embodiments of the present disclosure, a material of the solid combustibles shredding refiner 183 may contain stainless steel.

The supercritical water oxidation reactor 184 is used to receive the slurry obtained by milling the solid combustibles, the oxidant, the water and the target solution, and to provide a reaction zone for the supercritical water oxidation reaction.

The supercritical water oxidation reactor 184 may be charged with an excessive amount of oxidant to ensure that the slurry may be fully oxidized. According to the embodiments of the present disclosure, a reaction temperature of the supercritical water oxidation reactor 184 may be within a range of 600 °C to 800 °C, and a pressure may be within a range of 20 MPa to 30 MPa. After the slurry is fully oxidized in the supercritical water oxidation reactor 184, an oxidation product may be obtained and transported to the separation apparatus 185 through the discharge port.

The separation apparatus 185 is used to separate the effluence from the supercritical water oxidation reactor 184.

The separation apparatus 185 may include an activated carbon filter column 1851 and a high efficiency filter 1852, which are arranged at an exhaust port of the separation apparatus 185.

An online volatile organic compound monitor 1853 is provided at the exhaust port of the separation apparatus 185. According to the embodiments of the present disclosure, a level gauge (not shown in FIG. 18) is provided in an evaporation tank of the separation apparatus 185. According to the embodiments of the present disclosure, an online chemical oxygen demand monitor 1854 is provided at a draining port of the separation apparatus 185. According to the embodiments of the present disclosure, a pH meter 1855 is provided in the evaporation tank of the separation apparatus 185.

In a process of separating the effluence by the separation apparatus 185, a COD value of a discharged liquid matter is monitored by the online chemical oxygen demand monitor 1854 provided on the separation apparatus 185; and/or a VOC value of a discharged gaseous matter is monitored through the online volatile organic compound monitor 1853 provided on the separation apparatus 185; and/or a pH value of the solution in the evaporation tank in the separation apparatus is monitored by the pH meter 1855 provided on the separation apparatus 185; and/or a temperature of the solution in the evaporation tank in the separation apparatus and/or a temperature in the inner cooling barrel are/is monitored by a thermometer and/or thermometers provided on the separation apparatus 185.

The separation apparatus 185 may further include a back pressure valve 1856. An end of the back pressure valve 1856 is connected to a sleeve pipe (not shown in FIG. 18) through a pipeline, and another end of the back pressure valve is connected to the discharge port of the supercritical water oxidation reactor 184 through a pipeline.

The water supply device 181, the oxidant supply device 182, the solid combustibles shredding refiner 183, the supercritical water oxidation reactor 184 and the separation apparatus 185 may have a small size and a large capacity, and may realize a long-distance automatic control, and each part may be a skid-mounted independent unit to facilitate the on-site combination of the overall apparatus. In addition, the high-temperature and high-pressure apparatus and the liquid oxygen cryogenic apparatus may be designed with safety protection measures such as an explosion-proof isolation chamber and an explosion venting channel.

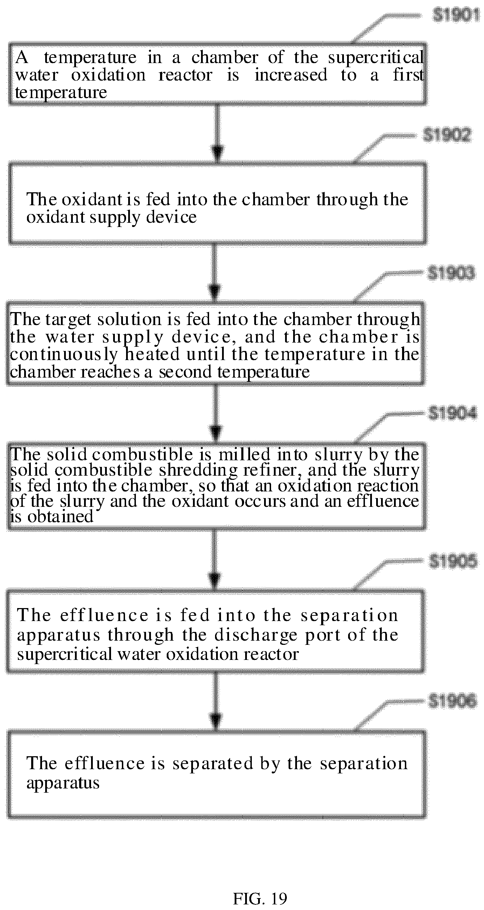

FIG. 19 schematically shows a flowchart of a method of treating a solid combustible by using a supercritical water oxidation system according to the embodiments of the present disclosure.

According to the embodiments of the present disclosure, the supercritical water oxidation system may be used to treat a solid combustible. As shown in FIG. 19, the method may include steps S1901 to S1906.

In step S1901, a temperature in a chamber of the supercritical water oxidation reactor is increased to a first temperature.

The reactor may be preheated by an electric heating device so that the temperature in the chamber of the reactor reaches the first temperature, and the first temperature may be, for example, 300 °C.

In step S1902, the oxidant is fed into the chamber through the oxidant supply device.

In step S1903, the target solution is fed into the chamber through the water supply device, and the chamber is continuously heated until the temperature in the chamber reaches a second temperature.

The target solution may be a sucrose solution. For example, the water supply device may activate a sucrose solution supply pump to feed the sucrose solution into the chamber through a slurry inlet of the supercritical water oxidation reactor. The reactor is heated to the second temperature, and the second temperature is greater than or equal to 600 °C, such as 650°C or higher.

In step S1904, the solid combustible is milled into slurry by the solid combustibles shredding refiner, and the slurry is fed into the chamber, so that an oxidation reaction of the slurry and the oxidant occurs and an effluence is obtained.

Multiple steps of steps S1901 to S1904 may be performed at the same time. For example, the electric heating device of the supercritical water oxidation reactor is firstly activated, and the water supply pump in the water supply device is activated at the same time, then the water supply device is filled with water, and a pump flow rate is adjusted to a low state. After the supercritical water oxidation reactor is heated to a temperature of 300 °C, the sucrose peristaltic pump and the oxidant supply device are activated, and the supercritical water oxidation reactor is continuously heated by a concentrated sucrose solution until the temperature reaches 600 °C or higher. For example, the oxidation temperature of supercritical water is maintained within a range of 650 °C to 750 °C, and the pressure is maintained within a range of 20 MPa to 25 MPa. According to the embodiments of the present disclosure, the solid combustibles shredding refiner may mill the solid combustibles to slurry in advance, and when the slurry needs to be treated, the slurry is fed into the chamber.

In step S1905, the effluence is fed into the separation apparatus through the discharge port of the supercritical water oxidation reactor.

When the supercritical water oxidation reactor is shut down, the feeding of organic matter may be stopped firstly, and the oxygen may be continuously supplied to oxidize the remaining organic matter in the apparatus. After that, the feeding of oxygen is stopped, and water is continuously supplied until the water temperature drops to 300 °C. Then, the water supply pump is stopped, and the outlet back pressure valve is slowly opened, so that the remaining liquid inside the supercritical water oxidation reactor is slowly released to the separation apparatus.

In step S1906, the effluence is separated by the separation apparatus.

According to the embodiments of the present disclosure, the separation apparatus 185 may separate the effluence from the supercritical water oxidation reactor 184 into salt residue, distilled water and purified gas. When the solid combustible is a radioactive solid combustible, it may be oxidized into salt solution and gas, and then separated into radioactive salt residue, distilled water and purified gas through the separation apparatus 185. The radioactive salt residue may be discharged after a period of time. Most of the distilled water may flow back into the solid combustibles shredding refiner 183 for recycling, a small amount of distilled water may be collected or discharged directly, and the purified gas may be collected or discharged directly.

According to the embodiments of the present disclosure, the supercritical water oxidation system of the present disclosure may be used to treat the slurry of solid combustible. Generally speaking, if solids are directly fed into the supercritical water oxidation reactor, they may cause a blockage in the supercritical water oxidation reactor. The present disclosure breaks through the technical bottleneck at home and abroad that the feed may only be liquid or gas. In the present disclosure, solids may be shredded and milled to slurry with a particle size less than 50 µm, and the slurry may be pumped into the supercritical water oxidation reactor, which prevents the deposition of large particles inside the supercritical water reactor.

In the related art, generally, the oxidant and the waste are mixed directly in the supercritical water oxidation reactor, and the reaction may not completely occur until the temperature of the oxidant and the waste reaches a certain temperature. However, due to a large molecular weight and a stable molecular space structure, the organic slurry is difficult to be oxidized in a short period of time. According to the embodiments of the present disclosure, when the temperature in the chamber of the supercritical water oxidation reactor reaches a certain temperature, the oxidant is fed firstly so that a temperature of the oxidant may be increased in advance, and then the slurry is fed into the chamber of the supercritical water oxidation reactor so that the slurry may be fully thermally decomposed in time, which ensures the completeness of the supercritical water oxidation of the organic slurry, so that the reaction efficiency may be improved.

According to the embodiments of the present disclosure, the method of treating the solid combustible by using the supercritical water oxidation system provided by the present disclosure includes shredding and milling of the solid combustible, supercritical water oxidation, and self-evaporation, separation and purification of the effluence. The process flow is short, a pyrolysis pretreatment of the solid combustible is not required, and the solid organic matter is directly oxidized by supercritical water. Further, the reaction temperature of supercritical water in the present disclosure may reach 600 °C, which is higher than that in the related art, so that the reaction rate may be effectively improved.

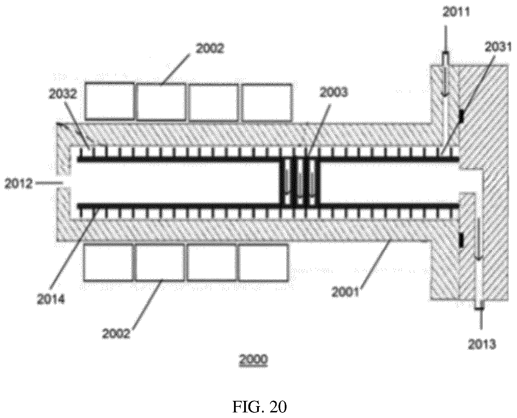

The supercritical water oxidation system shown in FIG. 18 will be further described below with reference to FIG. 20 to FIG. 26 in combination with specific embodiments.

FIG. 20 schematically shows a schematic diagram of a supercritical water oxidation reactor according to the embodiments of the present disclosure.

As shown in FIG. 20, a supercritical water oxidation reactor 2000 includes a first housing 2001, a heating device 2002 and a spiral circulation pipe 2003.

A chamber for providing a reaction zone is formed inside the first housing 2001. The first housing 2001 is provided with at least a slurry inlet 2011, an oxidant inlet 2012, and a discharge port 2013.

The first housing 2001 may include an outer housing and an inner housing (for example, the inner housing may be a liner 2014 in FIG. 20). A shape, a material and a dimension of the outer housing and the inner housing are not limited. For example, a main body of the first housing 2001 may be cylindrical, the outer housing may have an inner diameter of 80 mm to 219 mm and a length of 1000 mm to 9000 mm, and the inner housing may have an inner diameter of 40 mm to 133 mm and a length of 1000 mm to 9000 mm.

The heating device 2002 is used to increase the temperature in the chamber. According to the embodiments of the present disclosure, a type of the heating device 2002 is not limited. For example, the heating device 2002 may be a heating jacket. In the present disclosure, the heating jacket may be sleeved on an outer wall of the housing 2001 to transfer heat to the chamber inside the housing 2001 by means of heat conduction. The heating method is not limited in the present disclosure. According to the embodiments of the present disclosure, the outer housing of the supercritical water oxidation reactor 2000 may be provided with pressure gauges at both ends, the inner housing may be provided with temperature probes at two ends and in the middle, and temperature probes may be provided between the heating jacket and the outer wall of the outer housing.

The heating device 2002 may cover a part of the outer wall of the first housing 2001. For example, the heating device 2002 may be arranged on a part of the outer wall corresponding to a predetermined region where a slurry outlet of the spiral circulation pipe 2003 is located, so as to cover a part of the housing 2001. Specifically, as shown in FIG. 20, the heating device 2002 includes four heating jackets that cover a region between the middle of the first housing 2001 and the slurry outlet of the spiral circulation pipe 2003.

The spiral circulation pipe 2003 is arranged in the chamber and has an end 2031 in communication with the slurry inlet 2011. The spiral circulation pipe 2003 is configured so that after the slurry is introduced into the spiral circulation pipe 2003 from the slurry inlet 2011, the slurry flows along the pipeline of the spiral circulation pipe 2003 and flows out from another end 2032 of the spiral circulation pipe, and is then mixed with the oxidant flowing into the chamber from the oxidant inlet 2012, and an oxidation reaction of the slurry and the oxidant occurs.

According to the embodiments of the present disclosure, the spiral circulation pipe 2003 may allow the organic slurry to flow along the circulation pipe. On the one hand, a degree of flow of the organic slurry is increased, and on the other hand, a flow rate of the organic slurry is increased, so that a pyrolysis efficiency of the organic slurry may be improved.

The spiral circulation pipe 2003 may be arranged close to the inner wall of the housing 2001. Specifically, in a case that the housing 2001 includes an outer housing and an inner housing, the spiral circulation pipe 2003 may be arranged between the outer housing and the inner housing. In order to increase the degree of flow of the organic slurry, the spiral circulation pipe 2003 may be wound around the inner housing.

According to the embodiments of the present disclosure, the supercritical water oxidation reactor 2000 of the present disclosure may be used to treat the slurry of solid combustible. By shredding and milling the solid combustible into slurry and directly introducing the slurry into the spiral circulation pipe 2003, a pyrolysis may be realized in the spiral circulation pipe 2003. After the slurry flows out of the spiral circulation pipe 2003, the supercritical water oxidation reaction may proceed. When an average temperature of supercritical water is 600 °C, the pyrolysis of the organic matter generally takes about 1 second, and when the flow rate of the organic matter is 30 L/h, a residence time of the organic matter is at least 8 seconds, of which the effect is better than that theoretically required.

In the related art, if the organic matter is directly fed, the organic matter may cool the reaction zone and reduce the reaction effect. When the reaction temperature is 600 °C, the pyrolysis of the organic matter takes about 1 second, while when the reaction temperature is 550 °C, the pyrolysis of the organic matter takes 5 min, so that the reaction efficiency is reduced. Therefore, compared with the related art, the present disclosure has a short response time and improves the treatment efficiency.

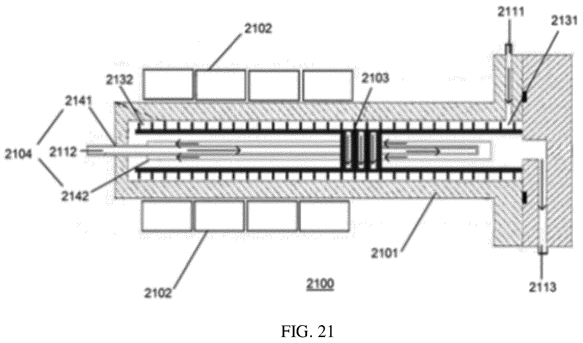

FIG. 21 schematically shows a schematic diagram of a supercritical water oxidation reactor according to another embodiment of the present disclosure.

As shown in FIG. 21, a supercritical water oxidation reactor 2100 includes a first housing 2101, a heating device 2102, a spiral circulation pipe 2103, and a turn-back tube 2104.

The first housing 2101 is provided with a slurry inlet 2111, an oxidant inlet 2112, and a discharge port 2113. The spiral circulation pipe 2103 includes an end 2131 and another end 2132.

It should be noted that the first housing 2101, the heating device 2102 and the spiral circulation pipe 2103 in the embodiment of the present disclosure may refer to the description for FIG. 20 in the present disclosure. For the sake of brevity of the description, the details are not repeated here.

According to the embodiments of the present disclosure, the turn-back tube 2104 is arranged in the chamber. The turn-back tube 2104 includes an inner tube 2141 with both ends open and an outer tube 2142 with one end open. The outer tube 2142 is sleeved outside the inner tube 2141, and the inner tube 2141 is in communication with the oxidant inlet 2112.

After being introduced from the oxidant inlet 2112, the oxidant passes through the inner tube 2141, then enters the outer tube 2142, and finally exits from an opening at an end of the outer tube 2142.

The turn-back tube 2104 is arranged at a central axis of the chamber.

A shape, a material and a dimension of the inner tube 2141 and the outer tube 2142 are not limited. For example, a diameter of the inner tube 2141 may be within a range of φ25 mm to φ42 mm, a wall thickness of the inner tube 2141 may be within a range of 4 mm to 6 mm, and a length of the inner tube 2141 may be within a range of 3000 mm to 6000 mm. A diameter of the outer tube may be within a range of 42 mm or more, a wall thickness of the outer tube may be within a range of 4 mm to 6 mm, and a length of the outer tube may be within a range of 3000 mm to 6000 mm. According to the embodiments of the present disclosure, the turn-back tube 2104 has a moderate size, which may effectively reduce the production cost and is beneficial to market applications.

The turn-back tube may cause the oxidant in the tube to heat up as much as possible, which increases the preheating time. Furthermore, the turn-back tube is arranged at the central axis of the supercritical water reactor, so that the heating temperature may reach the highest.

According to the embodiments of the present disclosure, the supercritical water oxidation reactor may further include a stirrer and a liner.

The stirrer includes a rotating shaft. The rotating shaft penetrates the first housing and extends into the chamber, and/or the rotating shaft passes through the discharge port and extends into the chamber. The liner is arranged in the chamber, and the spiral circulation pipe is wound along the outer wall of the liner. The liner may be equivalent to the inner housing of the supercritical water oxidation reactor.

According to the embodiments of the present disclosure, the liner may be processed by aluminizing, shot peening, and spraying a thermal barrier coating including a plurality of aluminum layers and a plurality of aluminum oxide layers alternately arranged.

After the liner is processed by aluminizing, shot peening, and spraying a thermal barrier coating including a plurality of aluminum layers and a plurality of aluminum oxide layers alternately arranged, it is equivalent to forming an anticorrosive coating on the liner, and under a high temperature effect of supercritical water, a dense gel layer may be formed on an inner wall of the liner to prevent the supercritical water from contacting and corroding a metal of the liner.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2 to 3 mm is formed on the surfaces of the metal. After the thermal barrier coating encounters the supercritical water, the thermal barrier coating may transform into the dense gel layer. The gel layer may prevent the supercritical water from contacting and corroding the metal of the liner.

According to the embodiments of the present disclosure, the supercritical water oxidation reactor further includes a cooling device arranged on the side wall and used to cool the reaction product generated in the chamber. The heating device and the cooling device may be arranged side by side on the side wall, and a distance between the heating device and the first end wall is less than that between the cooling device and the first end wall.

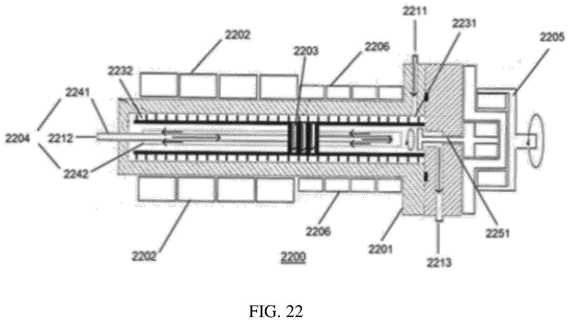

FIG. 22 schematically shows a schematic diagram of a supercritical water oxidation reactor according to another embodiment of the present disclosure.

As shown in FIG. 22, a supercritical water oxidation reactor 2200 includes a first housing 2201, a heating device 2202, a spiral circulation pipe 2203, a turn-back tube 2204, a stirrer 2205, and a cooling device 2206.

The first housing 2201 is provided with a slurry inlet 2211, an oxidant inlet 2212, and a discharge port 2213. The spiral circulation pipe 2203 includes an end 2231 and another end 2232. The turn-back tube 2204 includes an inner tube 2241 with both ends open and an outer tube 2242 with one end open. The stirrer 2205 includes a rotating shaft 2251. According to the embodiments of the present disclosure, positions of the slurry inlet 2211, the oxidant inlet 2212 and the discharge port 2213 are not limited.

It should be noted that the housing 2201, the heating device 2202, the spiral circulation pipe 2203 and the turn-back tube 2204 in the embodiment of the present disclosure may refer to the description for FIG. 20 and FIG. 21 in the present disclosure. For the sake of brevity of the description, the details are not repeated here.

According to the embodiments of the present disclosure, as shown in FIG. 22, the stirrer 2205 includes a rotating shaft 2251. The rotating shaft 2251 penetrates the housing 2201 and extends into the chamber, and/or the rotating shaft 2251 passes through the discharge port 2213 and extends into the chamber.

It should be noted that the stirrer 2205 may further include a rotor, an isolation sleeve, a magnetic block, and other components required by the stirrer (not shown in FIG. 22).

The first housing 2201 includes a first end wall, a side wall, and a second end wall opposite to the first end wall. The slurry inlet 2211 is provided on the side wall, the oxidant inlet 2212 is provided on the first end wall, and the stirrer 2205 and the discharge port 2213 are provided on the second end wall. Optionally, the discharge port 2213 may also be provided on the side wall.

Tthe stirrer 2205 may be a magnetic stirrer. When the supercritical water oxidation reactor 2200 is installed vertically, the stirrer 2205 may be installed at a bottom of the supercritical water oxidation reactor 2200, and mainly used to stir the deposition at the bottom of the reactor, so as to prevent solid particles from depositing, compacting, and blocking the discharge port.

As shown in FIG. 22, a distance between the heating device 2202 and the first end wall is less than that between the cooling device 2206 and the first end wall, that is, the heating device 2202 is closer to the first end wall, and the cooling device 2206 is away from the first end wall. Since the reaction of the slurry and the oxidant occurs at a position close to the first end wall, the heating device 2202 may be arranged close to the first end wall, and the cooling device 2206 may be arranged close to the second end wall.

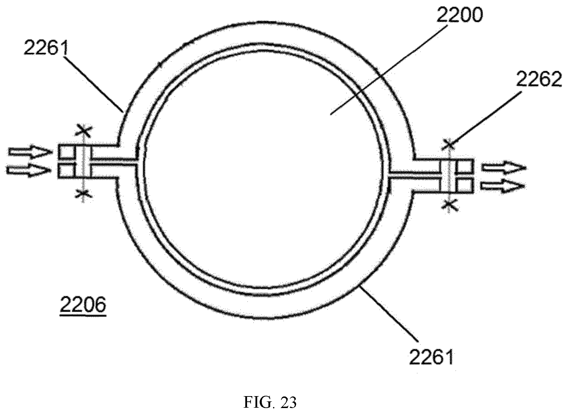

FIG. 23 schematically shows a schematic diagram of a cooling device according to the embodiments of the present disclosure.

As shown in FIG 23, the cooling device 2206 may include sets of cooling jackets that cover the outer wall of the supercritical water oxidation reactor 2200. Each set of cooling jackets includes two semi-cooling jackets 2261 that may be fixed by fixing holes and bolts 2262. The semi-cooling jacket 2261 may be filled with cooling water. For example, as indicated by arrows shown in FIG. 22, water may be filled from an end of the two semi-cooling jackets 2261 and discharged from another end of the two semi-cooling jackets 2261.

It should be noted that when the reaction product generated in the chamber is cooled by the cooling device 2206, a temperature of the reaction product is generally not reduced to a normal temperature. The temperature of the reaction product may be reduced to be higher than the normal temperature, and even higher than the boiling temperature of water, for example, reduced from 500 °C to 300 °C. With such a design, since the discharged reaction product has a high temperature, a cooling burden of the supercritical water reactor may be reduced. In addition, by increasing the temperature of the effluence of the supercritical water oxidation reactor, the heat of the reaction product may be fully utilized to create necessary conditions of spontaneous evaporation for a subsequent reaction product separation apparatus. It should be noted that another function of the cooling device 2206 is to prevent a too high temperature of the chamber, so as to avoid an overheating reaction.

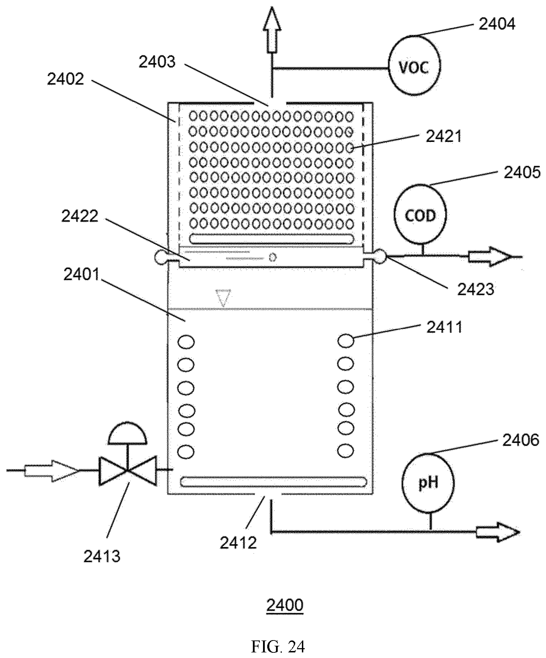

FIG. 24 schematically shows a schematic diagram of a separation apparatus according to the embodiments of the present disclosure.

According to the embodiments of the present disclosure, a separation apparatus 2400 includes an evaporation tank 2401 and an inner cooling barrel 2402.

The evaporation tank 2401 is used to receive the effluence from the supercritical water oxidation reactor. The effluence is a multi-phase mixture. The evaporation tank 2401 is provided with a first cooling coil 2411 and a slag discharge port 2412. The first cooling coil 2411 is used to stabilize a temperature of a solution in the evaporation tank 2401 within a target temperature range after the multi-phase mixture flows into the evaporation tank 2401. The slag discharge port 2412 is used to discharge a solid matter in the multi-phase mixture.

The inner cooling barrel 2402 includes a second cooling coil 2421 and a condensation water tank 2422. The second cooling coil 2421 is used to cool a steam evaporated in the evaporation tank 2401, and the condensation water tank 2422 is used to receive a liquid matter obtained after the steam is cooled by the second cooling coil 2421. The condensation water tank 2422 is provided with a draining port 2423 used to discharge the liquid matter. A plurality of holes are provided on a barrel wall of the inner cooling barrel 2402 to allow the steam evaporated in the evaporation tank 2401 to enter the inner cooling barrel 2402.

The evaporation tank 2401 and the inner cooling barrel 2402 are enclosed in a second housing, and the evaporation tank 2401 is arranged under the inner cooling barrel 2402. An exhaust port 2403 is provided on the top of the second housing to exhaust a gaseous matter in the multi-phase mixture.

A type of the first cooling coil 2411 and the second cooling coil 2421 is not limited. For example, a spiral cooling tube may be used. The arrangement of the first cooling coil 2411 and the second cooling coil 2421 is not limited, as long as the corresponding functions may be achieved.

By encapsulating the evaporation tank 2401 and the inner cooling barrel 2402 in the second housing, the solid-liquid-gas multi-phase matter may be separated in the integrated machine, so that a cooling apparatus, a gas-liquid separation apparatus, a liquid cooling apparatus and a gas cooling apparatus may be omitted, and the treatment flow may be simplified.

The evaporation tank 2401 may receive the effluence from the supercritical water reactor. The effluence may be a multi-phase mixture. The evaporation tank 2401 may evaporate and concentrate the effluence, then the solid matter is recovered, and the steam rises into the inner cooling barrel 2402.

The effluence from the supercritical water reactor may be a high-temperature and high-pressure fluid. For example, a temperature of the effluence after the reaction may be within a range of 150 to 300 °C, and a pressure of the effluence after the reaction may be 25 MPa. In order to enable the high-temperature and high-pressure fluid to evaporate smoothly, a cooling coil may be provided in the evaporation tank 2401 to keep a boiling state of the effluence. That is, the first cooling coil 2411 may stabilize the temperature of the solution in the evaporation tank 2401 within a target temperature range, which may be, for example, about 100 °C, so that the solution in the evaporation tank 2401 may boil stably. The evaporated steam may rise into the inner cooling barrel 2402, and the radioactive metal elements contained in the effluence after the reaction may flow out from the slag discharge port 2412 in a form of inorganic salts and may be recovered.

A sleeve for receiving the multi-phase mixture is provided in the evaporation tank, and a plurality of small apertures are arranged on a wall of the sleeve. The multi-phase mixture is dispersedly discharged into the evaporation tank through the plurality of small apertures on the wall of the sleeve.

An online volatile organic compound monitor 2404 is provided at the exhaust port 2403 of the separation apparatus 2400. According to the embodiments of the present disclosure, an online chemical oxygen demand monitor 2405 is provided at the draining port 2423 of the separation apparatus 2400. According to the embodiments of the present disclosure, a pH meter 2406 is provided in the evaporation tank 2401 of the separation apparatus 2400.

The multi-phase mixture may contain two or more of a solid matter, a liquid matter and a gaseous matter. For example, the multi-phase mixture may contain both solid matter and gaseous matter, or contain solid matter, liquid matter and gaseous matter.

The multi-phase mixture may be a mixture obtained after an organic solvent distillation residue is treated by supercritical water oxidation technology, for example, may be the effluence obtained after the organic solvent distillation residue is treated by using the supercritical water oxidation reactor. Generally, a liquid effluence obtained after the supercritical water oxidation is salty wastewater, or radioactive wastewater, or inorganic brine.

In the related art, after the organic matter is converted into carbon dioxide, water and inorganic salts through the supercritical water oxidation reactor, separation of the carbon dioxide, water and inorganic salts needs the processing of multiple apparatuses such as cooling apparatus, gas-liquid separation apparatus, liquid cooling apparatus, and gas cooling apparatus. This processing method not only needs a long processing flow and a lot of apparatuses, but also has a high cost.

Through the embodiments of the present disclosure, the separation apparatus is used to treat the multi-phase mixture, so that the solid matter in the multi-phase mixture is evaporated and concentrated at the bottom of the evaporation tank, for example, separated in the form of inorganic salt residue, that the liquid matter in the multi-phase mixture is evaporated in the evaporation tank and is cooled by the inner cooling barrel and then may be discharged from the draining port of the condensation water tank, and that the gaseous matter in the multi-phase mixture may be directly exhausted from the top of the separation apparatus. Through the separation apparatus of the present disclosure, the separation of the multi-phase mixture may be realized at the same time, the treatment flow is short, and the one-time investment and the operation cost of the apparatus are effectively reduced, so that a maximum reduction of volume of the multi-phase mixture may be realized.

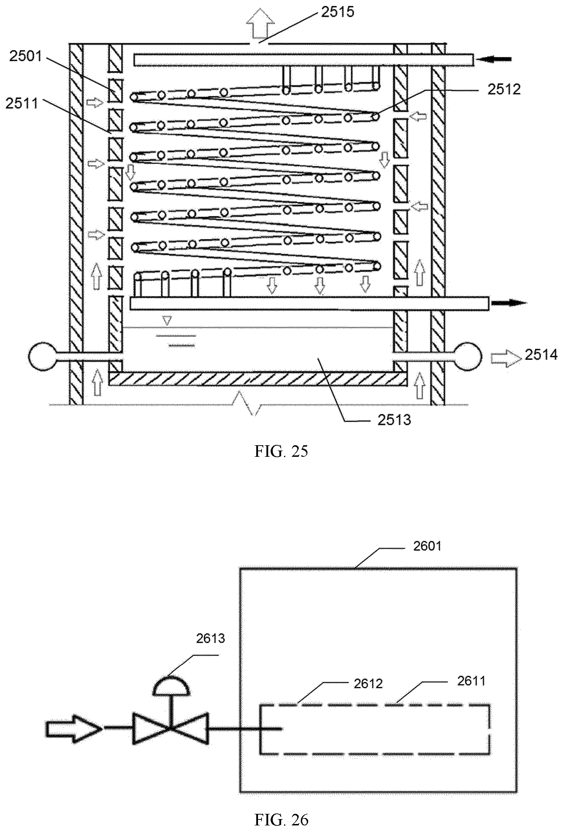

FIG. 25 schematically shows a schematic diagram of an inner cooling barrel according to the embodiments of the present disclosure.

As shown in FIG. 25, a plurality of holes 2511 are provided on a barrel wall of the inner cooling barrel 2501 to allow the steam evaporated in the evaporation tank to enter the inner cooling barrel 2501.

It should be noted that the inner cooling barrel 2501 in the embodiments of the present disclosure may refer to the description for FIG. 24 in the present disclosure, and for the sake of brevity of description, details are not repeated here.

The second cooling coil 2512 in the inner cooling barrel 2501 may be filled with cooling water, so that a temperature in the inner cooling barrel 2501 is lower than that in the evaporation tank. After the second cooling coil 2512 is filled with water, the temperature of the steam may be reduced.

For example, water vapor, oxygen and carbon dioxide evaporated in the evaporation tank may enter the inner cooling barrel 2501 from the plurality of holes 2511 provided on the barrel wall of the inner cooling barrel 2501, in an upward flow direction as shown by arrows in FIG. 25. After encountering cold air, the steam condenses to form water droplets and falls into the condensation water tank 2513, and then is discharged from the draining port 2514. The oxygen and carbon dioxide may be exhausted from the exhaust port 2515 at the top.

A volume of the condensation water tank 2513 is not limited. For example, the volume of the condensation water tank 2513 may be 50L to 500L. The condensation water tank 2513 may be connected to an external annular pipe through a plurality of radiant pipes, and may have a water conduction capacity of 800 kg/h to 8000 kg/h. The condenser coil 2512 may be a horizontally wound spiral cooling tube, and a dimension thereof is not limited.

A plurality of holes 2511 are provided on the barrel wall for gas to pass through. The inner condensate barrel 2501 may cause water steam at 100 °C to condense into water at 60 °C to 90 °C, and may have a condensing capacity of 200 kg/h to 2000 kg/h. A volume of the cooling coil region is not limited. For example, the volume may be 1000L. Most of the condensed water is returned to the water supply tank of the supercritical water oxidation reactor for reuse, and a small amount of the water may be discharged.

FIG. 26 shows a schematic diagram of a sleeve according to the embodiments of the present disclosure.

It should be noted that the evaporation tank 2601 in the embodiments of the present disclosure may refer to the description for FIG. 24 and FIG. 25 in the present disclosure, and for the sake of brevity of description, details are not repeated here.

As shown in FIG. 26, the evaporation tank 2601 is provided with a sleeve 2611 used to receive the multi-phase mixture. A plurality of small apertures 2612 are distributed on a wall of the sleeve 2611, and the multi-phase mixture is dispersedly discharged into the evaporation tank 2601 through the plurality of small apertures 2612.

A dimension of the sleeve 2611 is not limited. For example, a diameter of the sleeve 2611 may be within a range of φ42 mm to φ50 mm and a wall thickness of the sleeve 2611 may be within a range of 4 mm to 6 mm. A dimension of the small aperture 2612 is not limited. For example, a diameter of the small aperture may be within a range of 2 mm to 3 mm. A main function of the small apertures 2612 is to dissolve and disperse a high-speed fluid that passes through the small apertures of the sleeve 2611.

A type of the sleeve 2611 is not limited. For example, the sleeve 2611 may be a straight tube or a spiral tube.

As shown in FIG. 26, the separation apparatus may further include a back pressure valve 2613. An end of the back pressure valve 2613 is connected to the sleeve 2611 through a pipeline, and another end of the back pressure valve 2613 may be connected to the discharge port of the supercritical water oxidation reactor through a pipeline.

The effluence from the supercritical water oxidation reactor flows through the back pressure valve through the pipeline. After the back pressure valve is opened, the effluence may spiral around in the evaporation tank when passing through the evaporation tank through the sleeve, and transfer the heat therein to the water at 100 °C. After that, the effluence may exit the inner cooling barrel through a pipeline and may be connected to the back pressure valve, then return to the evaporation tank after decompression, and the gas-water mixture contained therein may be sprayed into the evaporation tank (100°C, normal pressure).

Taking radioactive organic waste as an example, the oxidation product firstly enters the evaporation tank after being discharged from the discharge port of the supercritical water oxidation reactor, and the oxidation product relies on its own temperature to achieve the purpose of evaporation in the evaporation tank. After evaporation, the effluence may be separated into three parts, including radioactive metal salt residue, distilled water, and purified gas.

The radioactive elements in the effluence are intermittently discharged as salt slags in a form of metal salts. The steam evaporated in the evaporation tank is cooled above the evaporation tank and recycled in a form of distilled water. Oxygen and carbon dioxide in the effluence may be purified after being washed by the evaporation tank and steam condensed water.

Taking radioactive cesium and strontium as examples, after the radioactive cesium is evaporated in the evaporation tank, a decontamination factor may reach 10⁵, a cesium concentration in water steam is less than one hundred thousandth of a cesium concentration in the evaporation tank, and a decontamination factor of strontium by evaporation may reach 10⁹. Therefore, the steam may be deeply purified.

The effluence from the supercritical water oxidation reactor has a temperature much higher than that of a conventional effluence. Generally, when the effluence from the supercritical water oxidation reactor, that is, the oxidation product is discharged from the discharge port, a temperature of the oxidation product at the discharge port may be within a range of 150 °C to 300 °C, while a temperature of the conventional effluence is generally 100 °C. When the separation apparatus of the present disclosure is used to separate the oxidation product, the oxidation product discharged from the supercritical water reactor may have a high temperature, which reduces the cooling burden of the supercritical water reactor. The increase of the temperature of the effluence from the supercritical water oxidation reactor may create necessary conditions for spontaneous evaporation for the subsequent effluence separation apparatus.

The embodiments of the present disclosure provide a supercritical water oxidation system. The system includes a reactor, a protective device, an oxidant supply device and an organic matter supply device. The reactor includes a reactor housing provided with an oxidant feed port, an organic matter feed port and a discharge port. A reaction product is discharged through the discharge port. The protective device includes an outer protective layer, a cooling layer and an inner protective layer. The inner protective layer and the outer protective layer enclose to form a first space and a second space. The cooling layer includes a liquid pipeline used to store a liquid. The liquid pipeline is arranged in the first space, the reactor is arranged in the second space, and the discharge port of the reactor extends to a region of the first space other than the region where the liquid pipeline is located, so that the reaction product discharged from the discharge port may be cooled by the liquid stored in the liquid pipeline. The oxidant supply device is in communication with the oxidant feed port, and the organic matter supply device is in communication with the organic matter feed port.

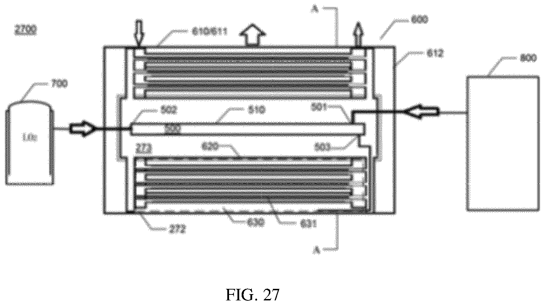

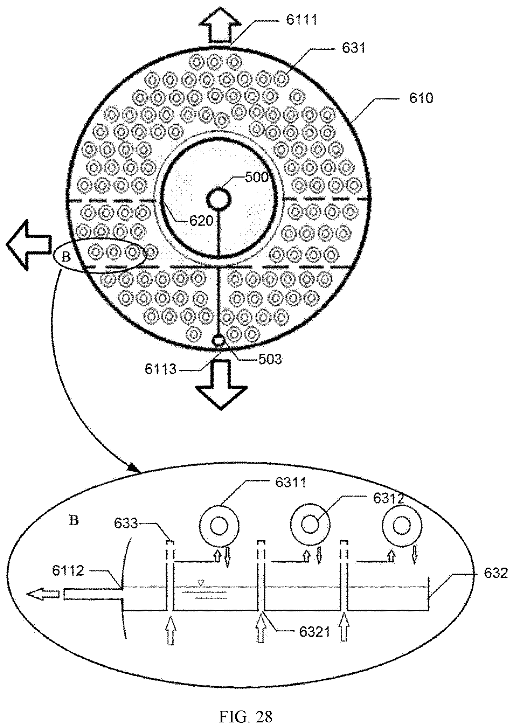

The supercritical water oxidation system provided by the embodiments of the present disclosure will be described below with reference to FIG. 27 and FIG. 28. FIG. 27 schematically shows a structural diagram of a supercritical water oxidation system according to the embodiments of the present disclosure. FIG. 28 schematically shows a cross-sectional view taken along line A-A in FIG. 27.

As shown in FIG. 27, a supercritical water oxidation system 2700 of the embodiments of the present disclosure includes a reactor 500, a protective device 600, an oxidant supply device 700, and an organic matter supply device 800. The oxidant supply device 700 is used to provide an oxidant to the reactor 500, and the organic matter supply device 800 is used to provide an organic matter to the reactor 500.

The reactor 500 includes a reactor housing 510 provided with an organic matter feed port 501, an oxidant feed port 502 and a discharge port 503. The reactor 500 may be specifically a supercritical water reactor or even an ultra-supercritical water reactor.

Supercritical state refers to a state where the temperature exceeds 374 °C and the pressure exceeds 22 MPa. Ultra-supercritical state refers to a supercritical state where the temperature is above 700 °C. When the conditions in the reactor 500 reach the supercritical state, the organic matter may be completely miscible with the oxidant. When the supercritical temperature exceeds 550 °C, the solubility of inorganic salts in the organic matter is zero. By using this property, the organic matter (which may be specifically radioactive organic matter) may be converted into carbon dioxide, water and inorganic salts. Thus, the separation of the organic matter may be realized by using the characteristic of the solubility of inorganic salts above 550°C being zero. The reaction products obtained after the separation may be specifically discharged via the discharge port of the reactor 500.

As shown in FIG. 27 and FIG. 28, the protective device 600 includes an outer protective layer 610, an inner protective layer 620, and a cooling layer 630.

The cooling layer 630 includes a liquid pipeline 631 used to store a liquid, and the inner protective layer 620 and the outer protective layer 610 enclose to form a first space 272 and a second space 273. The liquid pipeline 631 is arranged in the first space 272, and the reactor 500 is arranged in the second space 273. As shown in FIG. 28, the discharge port 503 of the reactor 500 extends to a region of the first space 272 other than the region where the liquid pipeline 631 is located, so that the reaction product discharged from the discharge port 503 may be cooled by the liquid stored in the liquid pipeline 631. According to the embodiments of the present disclosure, the discharge port 503 may extend specifically to a bottom space in the first space 272. In practice, the reactor 500 and the protective device 600 in FIG. 27 may be placed vertically, and the organic matter feed port 501 is at the bottom.

The oxidant supply device 700 is in communication with the oxidant feed port 502, so as to provide the oxidant to a space (reaction chamber) enclosed by the reactor housing 510. The organic matter supply device 800 is in communication with the organic matter feed port 501 to provide the organic matter to the reaction chamber enclosed by the reactor housing 510.

In summary, in the supercritical water oxidation system 2700, the reaction product sprayed from the discharge port 503 may be effectively cooled through the liquid stored in the liquid pipeline 631 in the protective device 600, and thus slags, condensate and waste gases may be obtained. Therefore, the above-mentioned system 2700 has an integrated machine in which the function of realizing supercritical reaction and the function of cooling and separating the reaction product are integrated. During the supercritical water oxidation reaction, there is no need to provide an additional separator, which is conducive to the promotion and application of the supercritical water oxidation technology.

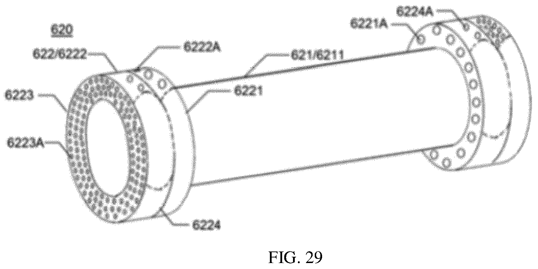

The protective device provided by the embodiments of the present disclosure will be described below with reference to FIG. 27 to FIG. 29. FIG. 29 schematically shows a structural diagram of the inner protective layer in FIG. 27.

As shown in FIG. 27 and FIG. 28, the outer protective layer 610 described above includes an outer casing 611 and a pair of sidewall end plates 612 oppositely arranged. The liquid pipeline 631 may specifically include a plurality of double-layer sleeves. As shown in FIG. 28, the plurality of double-layer sleeves specifically extend in a direction of a connecting line between the pair of sidewall end plates 612, and the plurality of double-layer sleeves are periodically arranged in a radial direction of the outer casing 611 and a circumferential direction of the outer casing 611. Each double-layer sleeve of the plurality of double-layer sleeves includes an outer sleeve 6311 and an inner sleeve 6312.

In the outer protective layer 610, the outer casing 611 may have an inner diameter of, for example, φ1200~1600 mm, and a length of 3000 mm to 6000 mm. A material of the outer casing 611 may contain steel (for example, 304 stainless steel). An environment where the outer casing is located is at a normal pressure and a temperature of 100 °C. The outer casing 611 mainly functions to receive the reaction product discharged from the discharge port 503 and be used as a second protective barrier of the reactor. In the double-layer sleeve, the outer sleeve may have a dimension of φ16*2 mm, and the inner sleeve may have a dimension of φ8*2 mm. The inner sleeve may bear a pressure of, for example, 3 MPa to 5 MPa, and a temperature of 600 °C.

As shown in FIG. 29, the inner protective layer 620 includes a first cylinder 621 and a pair of second cylinders 622 oppositely arranged. The first cylinder 621 is arranged between the pair of second cylinders 622 and is coaxial with the pair of second cylinders 622. The first cylinder 621 includes a first cylinder side wall 6211, and the first cylinder 621 is a structure with both ends open.

As shown in FIG. 29, each second cylinder of the pair of second cylinders 622 includes a first end plate 6221 and a second cylinder side wall 6222. The first end plate 6221 has an annular plate structure with an inner ring dimension matching a dimension of the first cylinder 621. The pair of second cylinders 622 is fixedly connected to the first cylinder 621 through the first end plate 6221. The first cylinder side wall 6211, the first end plate 6221 and the outer casing 611 enclose to form the first space 272, and the first cylinder 621, the second cylinder 622 and the pair of sidewall end plates 612 enclose to form the second space.

As shown in FIG. 29, the first end plate 6221 is provided with a plurality of first interfaces for communicating with the outer sleeves 6311 of the plurality of double-layer sleeves, respectively.

According to the embodiments of the present disclosure, as shown in FIG. 29, the second cylinder side wall 6222 of each second cylinder of the pair of second cylinders 622 includes a first opening 6222A. A first opening is used as a first liquid inlet, and another first opening is used as a first liquid outlet. The protective device in FIG. 27 and FIG. 28 may be configured such that when the reactor provided in the second space is in an operating state, the liquid is cyclically introduced from the first liquid inlet, flows through the outer sleeves 6311 of the plurality of double-layer sleeves, and exits from the first liquid outlet, so as to cool the reaction product discharged from the discharge port 503.

According to the embodiments of the present disclosure, as shown in FIG. 29, each second cylinder of the pair of second cylinders 622 further includes a second end plate 6223 opposite to the first end plate 6221, and a boundary plate 6224 arranged between the first end plate 6221 and the second end plate 6223.

The inner sleeve of each of the plurality of double-layer sleeves has a length greater than that of the outer sleeve of each of the plurality of double-layer sleeves, and the boundary plate 6224 may be provided with a plurality of second interfaces 6224A for communicating with the inner sleeves 6312 of the plurality of double-layer sleeves, respectively. The first opening 6222A described above may be specifically arranged on the second cylinder side wall 6222 between the first end plate 6221 and the boundary plate 6224. Since the first opening is a liquid inlet or a liquid outlet, with the above arrangement, the liquid introduced from the first liquid inlet may only flow into the outer sleeve 6311 without entering the inner sleeve 6312.

As shown in FIG. 29, the second end plate 6223 may be provided with, for example, a plurality of communication holes 6223A for connecting the inner sleeve 6312 with the second space 273 where the reactor 500 is located, so as to form a second barrier of the reactor 500. In a case that the reactor 500 explodes accidentally, the high-temperature and high-pressure released matter from the reactor may flow into the inner sleeve 6312 through the communicating holes 6223A. With this design, the outer sleeve 6311 may achieve two functions when the liquid is introduced. One is to cool the reaction product discharged from the discharge port 503, and another is to cool the released matter introduced by the inner sleeve under abnormal conditions. Since the inner sleeve 6312 and the outer sleeve 6311 are independent spaces not in communication with each other, and the inner sleeve 6312 is isolated from the outer space of the protective device 600 through the outer casing forming the space 273, it is possible to effectively prevent accidental released matter from spraying to the external space.

In summary, the protective device 600 of the embodiments of the present disclosure may cool normal reaction products and may also cool abnormal released matter. On the basis of realizing the separation of products, the protective device has a protective function, so that various hazards caused by high-temperature and high-pressure released matter sprayed into the external space under abnormal conditions may be effectively avoid.

The above-mentioned second end plate 6223 and the boundary plate 6224 may be, for example, an annular plate structure having the same dimension as the first end plate 6221. The side walls and the end plates of the first cylinder and the second cylinder, for example, may include thick walls with an inner diameter of φ500~700 mm, which may bear a pressure of 3 MPa to 5MPa and a temperature of 600 °C. The thick wall may include an outer skin and a main material, the outer skin may be made of 304 stainless steel, and the main material may be 45# carbon steel.

As shown in FIG. 28, the cooling layer 630 may further include, for example, a condensate collecting tray 632 and a plurality of gas pipelines 633 in addition to the plurality of double-layer sleeves described above. The condensate collecting tray 632 is arranged between two adjacent sets of double-layer sleeves periodically arranged in the radial direction of the outer casing in the first space 272. In the two adjacent sets of double-layer sleeves, each set of double-layer sleeves includes a plurality of double-layer sleeves located in a same radial direction.

The condensate collecting tray 632 may be located close to the discharge port 503 as shown in FIG. 28, and the outer protective layer 610 is further provided with a draining port 6112 in communication with the condensate collecting tray 632. The condensate collecting tray 632 includes a first tray surface with a closed structure close to the discharge port 503, and a second tray surface with an open structure away from the discharge port 503. The condensate collecting tray 632 includes a plurality of grooves 6321 periodically arranged in the axial direction of the outer casing 611. The plurality of grooves 6321 extend in a direction perpendicular to a connecting line between the first tray surface and the second tray surface. The plurality of gas pipelines 633 described above extend from the plurality of grooves 6321 in the direction of the connecting line between the first tray surface and the second tray surface. The plurality of gas pipelines 633 includes a first end with an open structure close to the first tray surface, and a second end with a closed structure close to the second tray surface. The second ends of the plurality of gas pipelines 633 are higher than the second tray surface. A plurality of air nozzles are provided on the side walls of the plurality of gas pipelines 633 higher than the second tray surface, so that the mixture of steam and non-condensable gases in the reaction product discharged from the discharge port may be transmitted through the plurality of gas pipelines 633 and sprayed from the air nozzles to a side of the second tray surface of the condensate collecting tray 632 away from the discharge port 503. The steam sprayed to the side of the second tray surface away from the discharge port 503 is cooled to form condensate under the action of the liquid stored in the outer sleeve 6311, then falls into the condensate collecting tray 632, and may be discharged out of the protective device 600 through the draining port 6112.

As shown in FIG. 28, an exhaust port 6111 may be provided on a wall of the outer casing 611 of the outer protective layer 610 away from the discharge port 503, so that a non-condensable gas may be discharged from the protective device 600. And/or, a slag discharge port 6113 may be provided on a wall of the outer casing 611 of the outer protective layer 610 close to the discharge port 503, so that the salt slags in the reaction product discharged from the discharge port 503 may be discharged from the protective device 600 under the action of gravity. It may be understood that part of the steam in the reaction product discharged from the discharge port 503 may have been cooled and become condensate before the other steam is evaporated to the gas pipeline. Therefore, when the salt slags are discharged from the slag discharge port 6113, a part of condensate may be discharged at the same time.

The supercritical water oxidation system may be further provided with an online VOC (volatile organic compound) monitor at a position where the exhaust port 6111 is located, with an online COD (chemical oxygen demand) detector at a position where the draining port 6112 is located, and with an online pH monitor at a position where the slag discharge port 6113 is located, so as to determine whether the reaction product may harm the environment or not.

In summary, with the arrangement of the gas pipelines and the condensate collecting tray described above, the embodiments of the present disclosure may effectively realize the separation of reaction products, and therefore may realize the volume reduction of the organic matter to the utmost extent.

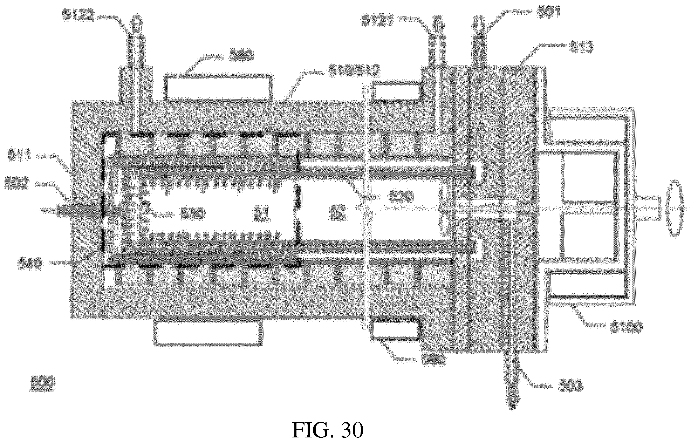

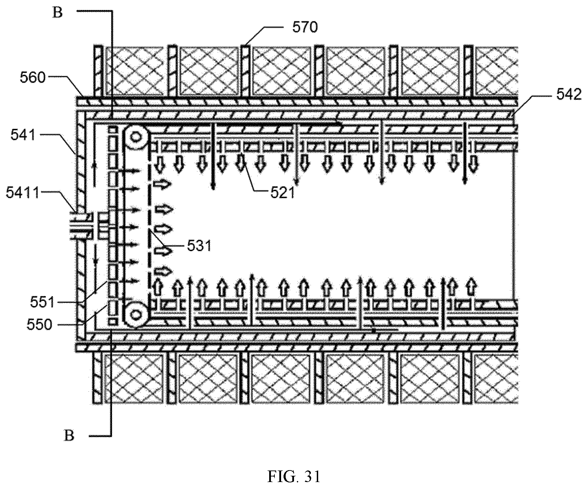

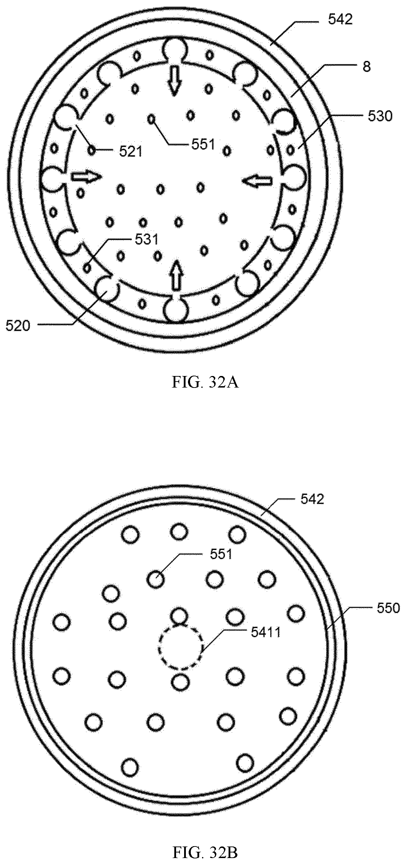

The reactor 500 of the embodiments of the present disclosure will be described below with reference to FIG. 30 to FIG. 32B. FIG. 30 schematically shows a front cross-sectional view of the reactor according to the embodiments of the present disclosure. FIG. 31 schematically shows an enlarged view of a structure of a dashed frame region shown in FIG. 30. FIG. 32A schematically shows a left cross-sectional view taken along line B-B in FIG. 31. FIG. 32B schematically shows a right cross-sectional view taken along line B-B in FIG. 31.

As shown in FIG. 30, the reactor housing 510 of the reactor 500 of the embodiments of the present disclosure may include a first end wall 511, a housing side wall 512, and a second end wall 513 opposite to the first end wall. The oxidant feed port 502 is provided on the first end wall 511, the discharge port 503 is provided on the second end wall, and the organic matter feed port 501 is provided on the housing side wall 512 close to the second end wall 513.

A material of the reactor housing 510 may include, for example, INCONEL 625. The housing side wall 512 may have an inner diameter within a range of about 80 mm to 219 mm, and a length within a range of about 1000 mm to 6000 mm.

The reactor 500 may further include, for example, a plurality of organic matter delivery pipes 520. As shown in FIG. 30, the plurality of organic matter delivery pipes 520 extend in the reactor housing 510 in a direction of a connecting line between the first end wall 511 and the second end wall 513. The plurality of organic matter delivery pipes 520 include a first end and a second end opposite to the first end, and the first end of the organic matter delivery pipe 520 close to the organic matter feed port 501 is in communication with the organic matter feed port 501.

As shown in FIG. 32A to FIG. 32B, the plurality of organic matter delivery pipes may be arranged, for example, at equal intervals around the central axis of the reactor 500. The number of the organic matter delivery pipes may be 12, 6, 4, etc., which is not limited in the present disclosure. As shown in FIG. 30 to FIG. 32B, the reactor 500 may further include an end loop pipe 530 arranged in a region in the reactor housing 510 close to the first end wall 511. The end loop pipe 530 is in communication with the second end of the plurality of organic matter delivery pipes 520, so that the organic matter flowing from the first end of the organic matter delivery pipes may flow into the end loop pipe 530. A plurality of first discharge holes 531 are provided on a side wall of the end loop pipe 530 close to the second end wall 513, and/or a plurality of second discharge holes 521 are provided on the side wall of the plurality of organic matter delivery pipes 520 close to the central axis of the reactor 500 and close to the first end wall 511, so that the delivered organic matter may be evenly sprayed into a center of a region in the reactor 500 close to the first end wall 511 (which may be specifically a central chamber) through the first discharge holes 531 and/or the second discharge holes 521.

As shown in FIG. 30 to FIG. 32B, the reactor 500 may further include a third cylinder 540 and a feed plate 550. The third cylinder 540 is sleeved outside the plurality of organic matter delivery pipes 520 and the end loop pipe 530. The third cylinder 540 includes a third end plate 541 and a third cylinder side wall 542. The third end plate 541 includes a first feed hole 5411 corresponding to the oxidant feed port 502. The feed plate 550 is arranged between the third end plate 541 and the end loop pipe 530. An oxidant transfer passage 8 is formed between the feed plate 550 and the third cylinder 540, and a plurality of second feed holes 551 are provided on the feed plate 550. With the arrangement of the above-mentioned feed plate 550 and the third cylinder 540, a part of the oxidant introduced by the oxidant feed port 502 may be sprayed from the end surface of the reactor 500 into the central chamber through the second feed holes 551 on the feed plate 550, and another part of the oxidant may be transferred through the oxidant transfer channel 8 to between the organic matter delivery pipe 520 and the third cylinder side wall 542, and then sprayed into the central chamber through a gap between two adjacent organic matter delivery pipes 520.

It may be understood that an internal space of the reactor 500 may be divided into two regions shown in FIG. 30 according to the arrangement region of the second discharge hole 521. A first region 51 is close to the oxidant feed port 502. The oxidant and the organic matter may be sprayed uniformly into the first region 51 through the discharge hole and the feed hole described above, so that a supercritical oxidation reaction of the oxidant and the organic matter may occur in the first region. A second region 52 is close to the organic matter feed port 501. Since no organic matter and oxidant are sprayed in the second region and the second region 52 is close to the discharge port 503, the reaction product obtained after the reaction in the first region 51 may be transferred to the second region 52 and discharged out of the reactor 500 through the discharge port 503.

In summary, in the reactor 500 of the embodiments of the present disclosure, with the arrangement of the organic matter delivery pipe 520, the end loop pipe 530, the third cylinder 540 and the feed plate 550, the oxidant and the organic matter may be sprayed into a center of the first region 51 from the ends and sides of the reactor 500. Therefore, the oxidant and the organic matter may be fully contacted and mixed and fully react, thereby promoting a center temperature in the first region of the reactor to reach 700~800 °C, and ensuring a full utilization of the advantages of supercritical water oxidation reaction.

According to the embodiments of the present disclosure, the reactor 500 may further include, for example, a liner 560 and a circulation sleeve 570. The liner 560 is arranged between the housing side wall 512 and the third cylinder side wall 542, and the circulation sleeve 570 is spirally wound on the housing side wall 512 along the liner 560 between the liner 560 and the housing side wall 512. In addition, the housing side wall 512 is further provided with a second liquid inlet 5121 and a second liquid outlet 5122. The circulation sleeve 570 includes a third end and a fourth end oppositely arranged. The third end is in communication with the second liquid inlet 5121, and the fourth end is in communication with the second liquid outlet 5122. The second liquid inlet 5121 is close to the second end wall 513, and the second liquid outlet 5122 is close to the first end wall 511. When the liquid introduced from the second liquid inlet 5121 flows through the circulation sleeve 570 close to the second end wall 513, the heat of the reaction product transferred in the second region 52 may be transferred to the circulation sleeve 570 close to the first end wall 511, so as to heat the sprayed oxidant and organic matter, thereby further increasing the reaction temperature of the organic matter and the oxidant, and ensuring the full utilization of the advantages of the supercritical water oxidation reaction.

The liner 560 and the circulation sleeve 570 may be made of, for example, GH4169. The liner 560 may have an inner diameter of, for example, 40 mm to 133 mm, and a length of 1000 mm to 6000 mm. The circulation sleeve 570 may have a spiral outer diameter, for example, close to the inner diameter of the housing side wall 512, a pitch is 50 mm, and the pitch is filled with a stainless steel mesh (for example, 800 mesh stainless steel mesh), thereby further increasing the heat conduction area of the line 560 and the liquid residence time, ensuring a full absorption of the heat of the second region 52 and a full heating of the organic matter and the oxidant sprayed from the side. In this way, the temperature of the reaction product transferred to the discharge port 503 is not too high, and the reaction temperature of the organic matter and the oxidant may reach the ultra-supercritical condition.

In order to quickly increase the temperature inside the reactor housing 510, and cause the temperature of the oxidant and the organic matter sprayed into the first region 51 to meet the supercritical condition, the above-mentioned reactor 500 may further include a heating assembly 580. The heating assembly 580 is arranged outside the first region 51 to increase the temperature in the reactor housing and thus heat the transferred oxidant and organic matter. According to the embodiments of the present disclosure, before the organic matter and the oxidant are introduced into the reactor 500, the reactor may be preheated, for example, to 300 °C, by using the heating assembly 580.

In order to prevent the reaction product discharged via the discharge port 503 from damaging the protective device 600 due to excessively high temperature, the reactor 500 described above may further include a cooling assembly 590. The cooling assembly 590 is arranged outside the second region 52 to cool the reaction product of the organic matter and the oxidant. Then, after double cooling of the circulation sleeve 570 and the cooling assembly 590, the temperature of the reaction product of the organic matter and the oxidant may be effectively reduced, for example, to 120°C-300°C. It may be understood that the temperature of the reaction product discharged via the discharge port 503 may not be too low, and a sufficient temperature may be ensured so that the water in the reaction product may evaporate in the form of steam.

In order to prevent the salt residues in the reaction product passing through the second region 52 from blocking the discharge port 503 due to deposition and compaction in the region close to the second end wall 513, the reactor 500 described above may further include a stirring assembly 5100. The stirring assembly 5100 includes a rotating shaft that penetrates the reactor housing and passes through the discharge port and extends into the second region. By a rotation of the rotating shaft, the reaction product may be stirred and prevented from blocking the discharge port 503. The stirring assembly 5100 may be a magnetic stirrer in which a reactor standard force stirring technology is used, for example, it may be a magnetic stirrer of model CY-2, which is not limited in the present disclosure.

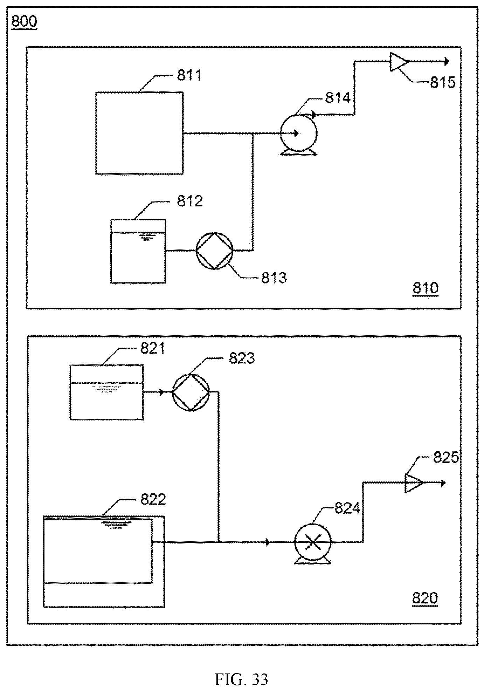

FIG. 33 schematically shows a structural diagram of an organic matter supply device according to the embodiments of the present disclosure.

As shown in FIG. 33, an organic matter supply device 800 of the embodiments of the present disclosure may include a first device 810 and a second device 820.

The first device 810 includes an organic matter supply assembly 811, a lye container 812, a first peristaltic pump 813, a first high-pressure pump 814, and a first one-way valve 815. The first peristaltic pump 813 is in communication with the lye container 812, the first high-pressure pump 814 is in communication with the lye container 812 and the first peristaltic pump 813, and the first one-way valve 815 is arranged between the first high-pressure pump 814 and the organic material feed port 501. The first device 810 is used to provide the organic matter for reaction with the oxidant. The organic matter slurry and lye are mixed in a certain proportion (the lye liquor accounts for 30% to 100% of the weight of the organic matter) and then transferred to the organic matter delivery pipe, so that with the increase of temperature, the organic matter may be dissolved and alkaline hydrolyzed, and then deeply pyrolyzed into small molecules and sprayed into the first region 51 from the discharge hole, so as to realize the rapid oxidation of the organic matter and the oxidant, and also release a large amount of heat. In this way, it may be ensured that the center temperature in the first region 51 may meet the ultra-supercritical requirements. In addition, because the alkaline hydrolysis of organic matter is an endothermic reaction, when the organic matter is transferred in the organic matter delivery pipe, the alkaline hydrolysis of the organic matter may absorb the heat in the outer space of the first region, thereby effectively reducing the temperature in the region close to the reactor housing 510 and reducing the requirements for the high temperature resistance of the material of the reactor housing.

The second device 820 includes a sucrose solution container 821, a water container 822, a second peristaltic pump 823, a second high-pressure pump 824, and a second one-way valve 825. The second peristaltic pump 823 is in communication with the sucrose solution container 821, the second high-pressure pump 824 is in communication with the water container 822 and the second peristaltic pump 823, and the second one-way valve 825 is arranged between the second high-pressure pump 824 and the organic matter feed port 501.

When the supercritical water oxidation system provided by the present disclosure is used to perform supercritical oxidation of the organic matter, the reactor 500 may be preheated by the heating assembly 580 shown in FIG. 30. After the reactor is preheated to 300 °C, the second device 820 is communicated with the organic matter feed port 501, and the sucrose solution is introduced into the organic matter delivery pipe 520. Since the reactor 500 has been preheated to 300 °C, the sucrose solution at the temperature of 300 °C may generate a lot of heat due to pyrolysis, and the reactor may be further heated. After the reactor is heated to 650 °C, the first device 810 is communicated with the organic matter feed port 501, the organic matter to be oxidized is introduced into the organic matter delivery pipe 520, and the oxidant is introduced through the oxidant feed port 502. A supercritical water oxidation reaction of the organic matter and the oxidant evenly sprayed into the first region 51 occurs instantly at the temperature of 650 °C, and a large amount of heat is released, so that the temperature in the central region of the first region 51 reaches 700~800 °C, which meets the ultra-supercritical condition. Then, an ultra-supercritical water oxidation reaction of the subsequently sprayed organic matter and the oxidant may occur, so that the organic matter is completely pyrolyzed and gasified, which ensures a full utilization of the advantages of the supercritical water oxidation reaction.

The organic matter supply assembly 811 described above may be specifically selected according to the type of the organic matter to be oxidized. For example, when the organic matter is an organic waste liquid, the liquid container may be used as the organic matter supply assembly 811. When the organic matter is a solid organic matter, an apparatus capable of shredding and milling the solid organic matter into a slurry may be used as the organic matter supply assembly 811.

The oxidant supply device 700 described above may include, for example, a liquid oxygen dewar, a liquid oxygen pump, a one-way valve, a liquid oxygen vaporizer, and a high-pressure oxygen cylinder group so as to provide oxidant to the reactor 500.

The supercritical water oxidation system described above may further include, for example, a monitoring assembly, and the monitoring assembly may include at least one of temperature sensors arranged on the reactor housing 510, at the discharge port 503 and on the condensate collecting tray 632, or pressure sensors provided in the reactor housing 510, etc. With the arrangement of the monitoring assembly, a pressure and/or a flow rate of the oxidant feed, a pressure and/or a flow rate of the organic matter feed, and a temperature and a pressure of the reactor 500 may be controlled.

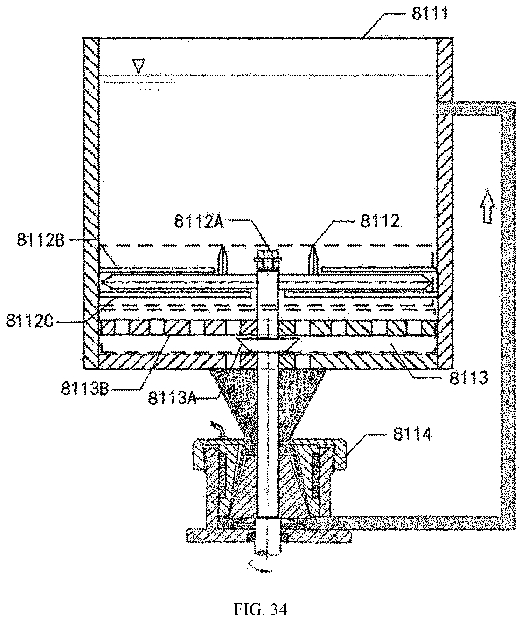

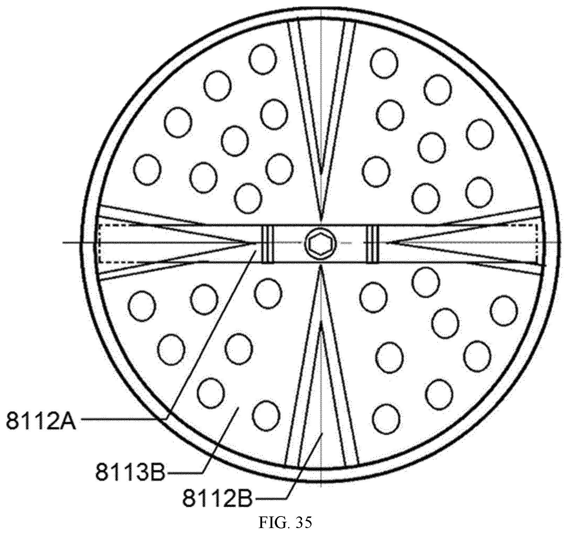

FIG. 34 schematically shows a structural diagram of a rotary cutting refiner according to the embodiments of the present disclosure. FIG. 35 schematically shows a top view of the rotary cutting refiner shown in FIG. 34.

If the organic matter is a solid organic matter, for example, a rotary cutting refiner 811 shown in FIG. 34 and FIG. 35 may be used as the organic matter supply assembly to shred and mill the solid organic matter into slurry.

As shown in FIG. 34 and FIG. 35, the rotary cutting refiner 811 includes a material introduction box 8111, a shear cutter, and a colloid mill 8114 that are interconnected and that are arranged in sequence. The material introduction box 8111 is used to introduce the solid organic matter and liquid (the liquid here may be, for example, the condensate flowing out of the condensate collecting tray 632 shown in FIG. 28, so as to realize the recovery and utilization of the liquid), and a diversion hole is provided at a bottom of the material introduction box 8111. The shear cutter is arranged above the diversion hole at the bottom of the material introduction box 8111, and is used to cut the falling solid organic matter into pieces of 1 to 5 mm. The colloid mill 8114 is used to mill the pieces flowing out from the diversion hole into slurry. The shear cutter is coaxial with the colloid mill to rotate synchronously under the action of external force.

The shear cutter described above may include a primary shear cutter 8112 and a secondary shear cutter 8113. The primary shear cutter 8112 is used to cut the solid organic matter into blocks of 10~50 mm, and the secondary shear cutter 8113 is used to cut the blocks into pieces of 1~5 mm. The secondary shear cutter 8113 is arranged under the primary shear cutter 8112.

As shown in FIG. 34 and FIG. 35, the primary shear cutter 8112 may mainly include a primary rotary cutter 8112A, a primary stationary upper cutter 8112B, and a primary stationary lower cutter 8112C. Four primary stationary upper cutters 8112B are evenly fixed on the inner wall of the material introduction box 8111, at a position of about the lower third of the material introduction box 8111. The primary stationary upper cutter 8112B is a triangle, of which a top is distanced from the side wall of the material introduction box 8111 by about 190 mm. The primary stationary lower cutter 8112C is located directly below the primary stationary upper cutter 8112B, and a distance between the two just accommodates the primary rotary cutter 8112A. The primary stationary lower cutter 8112C is also a triangle, of which a top is distanced from the side wall of the material introduction box 8111 by about 250 mm. A main body of the primary rotary cutter 8112A is a narrow bar plate with a length of about 570 mm, a width of about 100 mm, and a thickness of about 5 mm. Two upward blades are welded on both sides of the axis. The blade has a height of about 50 mm and is distanced from the axis by about 100 mm. All blades are sharpened with sharp corners. The primary rotary cutter 8112A is provided to cut the radioactive solid waste at a high speed in the vertical direction and the horizontal direction.

As shown in FIG. 34 and FIG. 35, the secondary shear cutter 8113 may include a secondary rotary cutter 8113A and a secondary stationary plate 8113B. The secondary rotary cutter 8113A is a narrow bar plate with a length of about 570 mm, a width of about 100 mm and a thickness of about 5 mm. A distance between the secondary stationary plate 8113B and the secondary rotary cutter 8113A is as small as possible. The secondary stationary plate 8113B is evenly distributed with holes with a diameter of φ20~50 mm, and the pieces are further cut by the secondary rotary cutter 8113 when passing through the holes. The pieces obtained after cutting of the secondary shear cutter 8113 flow into the colloid mill 8114 through the diversion hole under the barrel, and are further milled to 50 µm in the colloid mill 8114.

In summary, in the supercritical water oxidation system described with reference to FIG. 27 to FIG. 35, the temperature of the supercritical water reaction may reach 700 °C to 800 °C, which solves the problem that difficult-to-treat wastes (such as amines, anion exchange resins, etc.) may not be fully oxidized. In addition, the supercritical water oxidation system of the present disclosure may integrate the functions of organic matter oxidation, effluence separation and apparatus protection, which brings great convenience to engineering applications. The supercritical water oxidation system of the embodiments of the present disclosure may have a treatment capacity of 20~200 kg/h, which may meet the requirements of reducing volume and harmfulness of solid combustibles produced by uranium ore purification, nuclear fuel pretreatment plants, nuclear fuel manufacturing plants, spent fuel reprocessing plants, etc.

Those skilled in the art may understand that the various embodiments of the present disclosure and/or the features described in the claims may be combined in various ways, even if such combinations are not explicitly described in the present disclosure. In particular, without departing from the present disclosure, the various embodiments of the present disclosure and/or the features described in the claims may be combined in various ways. All these combinations fall within the scope of the present disclosure.

The embodiments of the present disclosure have been described above. Although the embodiments have been described separately above, this does not mean that measures in the respective embodiments cannot be used in combination advantageously. The scope of the present disclosure is defined by the appended claims and their equivalents. Without departing from the scope of the present disclosure, those skilled in the art may make various substitutions and modifications, and these substitutions and modifications should all fall within the scope of the present disclosure.

The invention is defined in the appended claims.

## Claims

1. A supercritical water oxidation reactor (100, 200, 300, 400, 500, 184, 2000, 2100, 2200), comprising:
a housing (101, 201, 301, 401) provided with at least a slurry inlet (1011, 2011, 3011, 4011), an oxidant inlet (1012, 2012, 3012, 4012) and a discharge port (1013, 2013, 3013, 4013), wherein a chamber for providing a reaction zone is formed inside the housing;
a heating device (102, 202, 302, 402) configured to increase a temperature in the chamber; and
a spiral circulation pipe (103, 203, 303, 403) arranged in the chamber and has an end connected to the slurry inlet (1011, 2011, 3011, 4011), wherein a slurry is introduced into the spiral circulation pipe (103, 203, 303, 403) from the slurry inlet (1011, 2011, 3011, 4011), flows along a pipeline of the spiral circulation pipe (103, 203, 303, 403), and flows out from another end of the spiral circulation pipe (103, 203, 303, 403),
wherein after flowing out from the another end of the spiral circulation pipe (103, 203, 303, 403), the slurry is mixed with an oxidant flowing into the chamber from the oxidant inlet, and an oxidation reaction of the slurry and the oxidant occurs,
the reactor further comprising:
a turn-back tube (204, 304, 404) provided inside the chamber, wherein the turn-back tube (204, 304, 404) comprises an inner tube (2041, 3041, 4041) with both ends open and an outer tube (2042, 3042, 4042) with one end open, the outer tube (2042, 3042, 4042) is sleeved outside the inner tube (2041, 3041, 4041), and the inner tube (2041, 3041, 4041) is in communication with the oxidant inlet (1012, 2012, 3012, 4012),
wherein the turn-back tube (204, 304, 404) is arranged at a central axis of the chamber,
the reactor further comprising:
a stirrer (305, 405) comprising a rotating shaft (3051, 4051), wherein the rotating shaft (3051, 4051) penetrates the housing (101, 201, 301, 401) and extends into the chamber, and/or the rotating shaft (3051, 4051) passes through the discharge port (1013, 2013, 3013, 4013) and extends into the chamber.

2. The reactor according to claim 1, wherein the housing (101, 201, 301, 401) comprises a first end wall, a side wall, and a second end wall opposite to the first end wall, and
wherein the slurry inlet (1011, 2011, 3011, 4011) is arranged on the side wall, the oxidant inlet (1012, 2012, 3012, 4012) is arranged on the first end wall, and the stirrer (305, 405) and the discharge port (1013, 2013, 3013, 4013) are arranged on the second end wall.

3. The reactor (100, 200, 300, 400, 500, 184, 2000, 2100, 2200) according to claim 2, further comprising:
a liner (1014) provided in the chamber, wherein the spiral circulation pipe (103, 203, 303, 403) is wound along an outer wall of the liner (1014), the liner (1014) is processed by aluminizing, shot peening, and spraying a thermal barrier coating comprising a plurality of aluminum layers and a plurality of aluminum oxide layers alternately arranged; or
further comprising:
a cooling device (406, 2206) provided on the side wall and configured to cool a reaction product generated in the chamber,
wherein the heating device (102, 202, 302, 402) and the cooling device (406, 2206) are arranged side by side on the side wall, and a distance between the heating device (102, 202, 302, 402) and the first end wall is less than a distance between the cooling device (406, 2206) and the first end wall.

4. A supercritical water oxidation system, comprising:
a water supply device (181) configured to provide water and a target solution;
an oxidant supply device (182) configured to provide an oxidant for a supercritical water oxidation reaction;
a solid combustibles shredding refiner (183) configured to mill a solid combustible to a slurry;
a supercritical water oxidation reactor (100, 200, 300, 400, 500, 184, 2000, 2100, 2200) according to any one of claims 1-3, configured to receive the slurry obtained by milling the solid combustible, the oxidant, the water and the target solution, and provide a reaction zone for the supercritical water oxidation reaction; and
a separation apparatus (185, 2400) configured to separate an effluence from the supercritical water oxidation reactor.

5. The supercritical water oxidation system according to claim 4, wherein the separation apparatus (185, 2400) comprises:
an evaporation tank (2401) configured to receive an effluence from the supercritical water oxidation reactor (100, 200, 300, 400, 500, 184, 2000, 2100, 2200), wherein the effluence is a multi-phase mixture, wherein a first cooling coil (2411) and a slag discharge port (2412) are provided in the evaporation tank (2401), the first cooling coil (2411) is configured to stabilize a temperature of a solution in the evaporation tank (2401) within a target temperature range after the multi-phase mixture flows into the evaporation tank (2401), and the slag discharge port (2412) is configured to discharge a solid matter in the multi-phase mixture; and
an inner cooling barrel (2402) comprising a second cooling coil (2421) and a condensation water tank (2422), wherein the second cooling coil (2421) is configured to cool a steam evaporated in the evaporation tank (2401), and the condensation water tank (2422) is configured to receive a liquid matter obtained after the steam is cooled by the second cooling coil (2421), the condensation water tank (2422) is provided with a draining port for draining the liquid matter, wherein a plurality of holes are provided on a barrel wall of the inner cooling barrel (2402) to allow the steam evaporated in the evaporation tank (2401) to enter the inner cooling barrel (2402),
wherein the evaporation tank (2401) and the inner cooling barrel (2402) are enclosed in a second housing, the evaporation tank (2401) is arranged below the inner cooling barrel (2402), and an exhaust port is provided on a top of the second housing to exhaust a gaseous matter in the multi-phase mixture.

6. A supercritical water oxidation system, comprising:
a supercritical water oxidation reactor (100, 200, 300, 400, 500, 184, 2000, 2100, 2200) according to any one of claims 1-3, comprising a reactor housing (510) provided with an oxidant feed port (502), an organic matter feed port (501) and a discharge port (503), wherein a reaction product is discharged via the discharge port (503) of the reactor (100, 200, 300, 400, 500, 184, 2000, 2100, 2200);
a protective device (600) comprising an outer protective layer (610), a cooling layer (630) and an inner protective layer (620), wherein:
the inner protective layer (620) and the outer protective layer (610) enclose to form a first space and a second space wherein the first space and the second space is separated by the inner protective layer (620) and the first space is a space outside the second space;
the cooling layer (630) comprises a liquid pipeline (631) allowed to store a liquid, and the liquid pipeline (631) is arranged in the first space;
the reactor (100, 200, 300, 400, 500, 184, 2000, 2100, 2200) is arranged in the second space, and the discharge port (503) of the reactor (100, 200, 300, 400, 500, 184, 2000, 2100, 2200) extends to a region in the first space other than a region where the liquid pipeline (631) is located, so that the reaction product discharged from the discharge port (503) is cooled by the liquid stored in the liquid pipeline (631);
an oxidant supply device (700) in communication with the oxidant feed port (502); and
an organic matter feed device (800) in communication with the organic matter feed port (501).

7. A method of treating a radioactive organic waste implemented by the supercritical water oxidation reactor (100, 200, 300, 400, 500, 184, 2000, 2100, 2200) according to any one of claims 1 to 3, comprising: preheating the chamber by using the heating device (102, 202, 302, 402); feeding a target solution into the chamber through the slurry inlet (1011, 2011, 3011, 4011) in response to a temperature in the chamber reaching a first temperature, and continuously heating the chamber until the temperature in the chamber reaches a second temperature; feeding a slurry of the radioactive organic waste into the spiral circulation pipe (103, 203, 303, 403) through the slurry inlet (1011, 2011, 3011, 4011), so that the slurry of the radioactive organic waste flows along the pipeline of the spiral circulation pipe (103, 203, 303, 403) and flows out from another end of the spiral circulation pipe (103, 203, 303, 403); and in response to the slurry of the radioactive organic waste flowing out from the another end of the spiral circulation pipe (103, 203, 303, 403), mixing the slurry of the radioactive organic waste with the oxidant entering the chamber from the oxidant inlet (1012, 2012, 3012, 4012) so that an oxidation reaction of the slurry of the radioactive organic waste and the oxidant occurs.

8. A method of treating a solid combustible implemented by the supercritical water oxidation system of any one of claims 4 and 5, comprising:
increasing a temperature in a chamber of the supercritical water oxidation reactor (100, 200, 300, 400, 500, 184, 2000, 2100, 2200) to a first temperature;
feeding an oxidant into the chamber through the oxidant supply device (182);
feeding a target solution into the chamber through the water supply device (181), and continuously heating the chamber until the temperature in the chamber reaches a second temperature;
milling the solid combustible into a slurry by using the solid combustibles shredding refiner (183), and feeding the slurry into the chamber so that an oxidation reaction of the slurry and the oxidant occurs and an effluence is obtained;
feeding the effluence into the separation apparatus (185) through the discharge port (1013, 2013, 3013, 4013) of the supercritical water oxidation reactor (100, 200, 300, 400, 500, 184, 2000, 2100, 2200); and
separating the effluence by using the separation apparatus (185).

## Patentansprüche

1. Reaktor zur Oxidation in überkritischem Wasser (100, 200, 300, 400, 500, 184, 2000, 2100, 2200), umfassend:
ein Gehäuse (101, 201, 301, 401), versehen mit mindestens einem Schlammeinlass (1011, 2011, 3011, 4011), einem Oxidationsmitteleinlass (1012, 2012, 3012, 4012) und einer Austragsöffnung (1013, 2013, 3013, 4013), wobei eine Kammer zum Bereitstellen einer Reaktionszone im Inneren des Gehäuses ausgebildet ist;
eine Heizvorrichtung (102, 202, 302, 402), konfiguriert zum Erhöhen einer Temperatur in der Kammer; und
eine gewundene Zirkulationsleitung (103, 203, 303, 403), angeordnet in der Kammer und ein mit dem Schlammeinlass (1011, 2011, 3011, 4011) verbundenes Ende aufweisend, wobei ein Schlamm von dem Schlammeinlass (1011, 2011, 3011, 4011) in die gewundene Zirkulationsleitung (103, 203, 303, 403) eingebracht wird, entlang einer Rohrleitung der gewundenen Zirkulationsleitung (103, 203, 303, 403) fließt und aus einem anderen Ende der gewundenen Zirkulationsleitung (103, 203, 303, 403) herausfließt,
wobei nach dem Herausfließen aus dem anderen Ende der gewundenen Zirkulationsleitung (103, 203, 303, 403) der Schlamm mit einem Oxidationsmittel, das von dem Oxidationsmitteleinlass in die Kammer fließt, gemischt wird, und eine Oxidationsreaktion des Schlamms und des Oxidationsmittels stattfindet,
wobei der Reaktor weiterhin umfasst:
ein Umkehrrohr (204, 304, 404), vorgesehen im Inneren der Kammer, wobei das Umkehrrohr (204, 304, 404) ein Innenrohr (2041, 3041, 4041), wobei beide Enden offen sind, und ein Außenrohr (2042, 3042, 4042), wobei ein Ende offen ist, umfasst, das Außenrohr (2042, 3042, 4042) außerhalb des Innenrohrs (2041, 3041, 4041) gemantelt ist, und das Innenrohr (2041, 3041, 4041) in Verbindung mit dem Oxidationsmitteleinlass (1012, 2012, 3012, 4012) ist,
wobei das Umkehrrohr (204, 304, 404) an einer zentralen Achse der Kammer angeordnet ist,
wobei der Reaktor weiterhin umfasst:
ein Rührwerk (305, 405), umfassend eine rotierende Welle (3051, 4051), wobei die rotierende Welle (3051, 4051) das Gehäuse (101, 201, 301, 401) durchdringt und sich in die Kammer erstreckt, und/oder die rotierende Welle (3051, 4051) durch die Austragsöffnung (1013, 2013, 3013, 4013) verläuft und sich in die Kammer erstreckt.

2. Reaktor nach Anspruch 1, wobei das Gehäuse (101, 201, 301, 401) eine erste Endwand, eine Seitenwand, und eine zweite Endwand gegenüber der ersten Endwand umfasst, und
wobei der Schlammeinlass (1011, 2011, 3011, 4011) an der Seitenwand angeordnet ist, der Oxidationsmitteleinlass (1012, 2012, 3012, 4012) an der ersten Endwand angeordnet ist, und das Rührwerk (305, 405) und die Austragsöffnung (1013, 2013, 3013, 4013) an der zweiten Endwand angeordnet sind.

3. Reaktor (100, 200, 300, 400, 500, 184, 2000, 2100, 2200) nach Anspruch 2, weiterhin umfassend:
eine Auskleidung (1014), vorgesehen in der Kammer, wobei die gewundene Zirkulationsleitung (103, 203, 303, 403) entlang einer Außenwand der Auskleidung (1014) gewunden ist, die Auskleidung (1014) bearbeitet ist durch Aluminieren, Verfestigungsstrahlen und Aufspritzen einer Wärmedämmbeschichtung, die eine Mehrzahl von Aluminiumschichten und eine Mehrzahl von Aluminiumoxidschichten, abwechselnd angeordnet, umfasst; oder
weiterhin umfassend:
eine Kühlvorrichtung (406, 2206), vorgesehen an der Seitenwand und konfiguriert zum Kühlen eines in der Kammer erzeugten Reaktionsprodukts,
wobei die Heizvorrichtung (102, 202, 302, 402) und die Kühlvorrichtung (406, 2206) nebeneinander an der Seitenwand angeordnet sind, und ein Abstand zwischen der Heizvorrichtung (102, 202, 302, 402) und der ersten Endwand kleiner als ein Abstand zwischen der Kühlvorrichtung (406, 2206) und der ersten Endwand ist.

4. System zur Oxidation in überkritischem Wasser, umfassend:
eine Vorrichtung zur Zuführung von Wasser (181), konfiguriert zum Bereitstellen von Wasser und einer Targetlösung;
eine Vorrichtung zur Zuführung von Oxidationsmittel (182), konfiguriert zum Bereitstellen eines Oxidationsmittels für eine Oxidationsreaktion in überkritischem Wasser;
einen Mahlzerkleinerer für feste brennbare Stoffe (183), konfiguriert zum Zermahlen eines festen brennbaren Stoffs zu einem Schlamm;
einen Reaktor zur Oxidation in überkritischem Wasser (100, 200, 300, 400, 500, 184, 2000, 2100, 2200) nach einem der Ansprüche 1-3, konfiguriert zum Aufnehmen des durch Zermahlen des festen brennbaren Stoffs erhaltenen Schlamms, des Oxidationsmittels, des Wassers und der Targetlösung, und zum Bereitstellen einer Reaktionszone für die Oxidationsreaktion in überkritischem Wasser; und
eine Trennungsvorrichtung (185, 2400), konfiguriert zum Trennen eines Abflusses aus dem Reaktor zur Oxidation in überkritischem Wasser.

5. System zur Oxidation in überkritischem Wasser nach Anspruch 4, wobei die Trennungsvorrichtung (185, 2400) umfasst:
einen Verdampfungsbehälter (2401), konfiguriert zum Aufnehmen eines Abflusses aus dem Reaktor zur Oxidation in überkritischem Wasser (100, 200, 300, 400, 500, 184, 2000, 2100, 2200), wobei der Abfluss ein mehrphasiges Gemisch ist, wobei eine erste Kühlschlange (2411) und eine Schlackeaustragsöffnung (2412) in dem Verdampfungsbehälter (2401) vorgesehen sind, die erste Kühlschlange (2411) so konfiguriert ist, dass eine Temperatur einer Lösung in dem Verdampfungsbehälter (2401) innerhalb eines Zieltemperaturbereichs stabilisiert wird, nachdem das mehrphasige Gemisch in den Verdampfungsbehälter (2401) fließt, und die Schlackeaustragsöffnung (2412) zum Ausbringen eines festen Stoffs in dem mehrphasigen Gemisch konfiguriert ist; und
einen Innenkühlzylinder (2402), umfassend eine zweite Kühlschlange (2421) und einen Kondensationswasserbehälter (2422), wobei die zweite Kühlschlange (2421) zum Kühlen eines in dem Verdampfungsbehälter (2401) verdampften Wasserdampfes konfiguriert ist, und der Kondensationswasserbehälter (2422) konfiguriert ist zum Aufnehmen eines flüssigen Stoffs, der erhalten wird, nachdem der Wasserdampf durch die zweite Kühlschlange (2421) abgekühlt ist, der Kondensationswasserbehälter (2422) mit einer Ablauföffnung zum Ablaufen des flüssigen Stoffs versehen ist, wobei eine Mehrzahl von Löchern in einer Zylinderwand des Innenkühlzylinders (2402) vorgesehen sind, um den in dem Verdampfungsbehälter (2401) verdampften Wasserdampf in den Innenkühlzylinder (2402) eintreten zu lassen,
wobei der Verdampfungsbehälter (2401) und der Innenkühlzylinder (2402) in einem zweiten Gehäuse eingeschlossen sind, der Verdampfungsbehälter (2401) unter dem Innenkühlzylinder (2402) angeordnet ist, und eine Abgasöffnung an einer Oberseite des zweiten Gehäuses zum Ablassen eines gasförmigen Stoffs in dem mehrphasigen Gemisch vorgesehen ist.

6. System zur Oxidation in überkritischem Wasser, umfassend:
einen Reaktor zur Oxidation in überkritischem Wasser (100, 200, 300, 400, 500, 184, 2000, 2100, 2200) nach einem der Ansprüche 1-3, umfassend ein Reaktorgehäuse (510), versehen mit einer Öffnung zur Zuführung von Oxidationsmittel (502), einer Öffnung zur Zuführung von organischem Material (501) und einer Austragsöffnung (503), wobei ein Reaktionsprodukt über die Austragsöffnung (503) des Reaktors (100, 200, 300, 400, 500, 184, 2000, 2100, 2200) ausgebracht wird;
eine Schutzvorrichtung (600), umfassend eine äußere Schutzschicht (610), eine Kühlschicht (630) und eine innere Schutzschicht (620), wobei:
die innere Schutzschicht (620) und die äußere Schutzschicht (610) sich umschließen, um einen ersten Raum und einen zweiten Raum zu bilden, wobei der erste Raum und der zweite Raum durch die innere Schutzschicht (620) getrennt sind und der erste Raum ein Raum außerhalb des zweiten Raums ist;
die Kühlschicht (630) eine Flüssigkeitsleitung (631) umfasst, die befähigt ist, eine Flüssigkeit zu speichern, und die Flüssigkeitsleitung (631) in dem ersten Raum angeordnet ist;
der Reaktor (100, 200, 300, 400, 500, 184, 2000, 2100, 2200) in dem zweiten Raum angeordnet ist, und sich die Austragsöffnung (503) des Reaktors (100, 200, 300, 400, 500, 184, 2000, 2100, 2200) zu einem anderen Bereich in dem ersten Raum als dem Bereich, wo sich die Flüssigkeitsleitung (631) befindet, erstreckt, sodass das aus der Austragsöffnung (503) ausgebrachte Reaktionsprodukt durch die in der Flüssigkeitsleitung (631) gespeicherte Flüssigkeit gekühlt wird;
eine Vorrichtung zur Zuführung von Oxidationsmittel (700), die in Verbindung mit der Öffnung zur Zuführung von Oxidationsmittel (502) ist; und
eine Vorrichtung zur Zuführung von organischem Material (800), die in Verbindung mit der Öffnung zur Zuführung von organischem Material (501) ist.

7. Verfahren zur Behandlung eines radioaktiven organischen Abfalls, durchgeführt mit dem Reaktor zur Oxidation in überkritischem Wasser (100, 200, 300, 400, 500, 184, 2000, 2100, 2200) nach einem der Ansprüche 1-3, umfassend:
Vorheizen der Kammer durch Verwendung der Heizvorrichtung (102, 202, 302, 402); Zuführen einer Targetlösung durch den Schlammeinlass (1011, 2011, 3011, 4011) in die Kammer als Reaktion darauf, dass eine Temperatur in der Kammer eine erste Temperatur erreicht, und kontinuierliches Erwärmen der Kammer, bis die Temperatur in der Kammer eine zweite Temperatur erreicht; Zuführen eines Schlamms von dem radioaktiven organischen Abfall durch den Schlammeinlass (1011, 2011, 3011, 4011) in die gewundene Zirkulationsleitung (103, 203, 303, 403), sodass der Schlamm von dem radioaktiven organischen Abfall entlang der Rohrleitung der gewundenen Zirkulationsleitung (103, 203, 303, 403) fließt und aus einem anderen Ende der gewundenen Zirkulationsleitung (103, 203, 303, 403) herausfließt; und, als Reaktion darauf, dass der Schlamm von dem radioaktiven organischen Abfall aus dem anderen Ende der gewundenen Zirkulationsleitung (103, 203, 303, 403) herausfließt, Mischen des Schlamms von dem radioaktiven organischen Abfall mit dem Oxidationsmittel, das von dem Oxidationsmitteleinlass (1012, 2012, 3012, 4012) in die Kammer eintritt, sodass eine Oxidationsreaktion des Schlamms von dem radioaktiven organischen Abfall und des Oxidationsmittels stattfindet.

8. Verfahren zur Behandlung eines festen brennbaren Stoffs, realisiert mit dem System zur Oxidation in überkritischem Wasser nach einem der Ansprüche 4 und 5, umfassend:
Erhöhen einer Temperatur in einer Kammer des Reaktors zur Oxidation in überkritischem Wasser (100, 200, 300, 400, 500, 184, 2000, 2100, 2200) auf eine erste Temperatur;
Zuführen eines Oxidationsmittels in die Kammer durch die Vorrichtung zur Zuführung von Oxidationsmittel (182);
Zuführen einer Targetlösung in die Kammer durch die Vorrichtung zur Zuführung von Wasser (181) und kontinuierliches Erwärmen der Kammer, bis die Temperatur in der Kammer eine zweite Temperatur erreicht;
Zermahlen des festen brennbaren Stoffs zu einem Schlamm durch Verwendung des Mahlzerkleinerers für feste brennbare Stoffe (183) und Zuführen des Schlamms in die Kammer, sodass eine Oxidationsreaktion des Schlamms und des Oxidationsmittels stattfindet und ein Abfluss erhalten wird;
Zuführen des Abflusses in die Trennungsvorrichtung (185) durch die Austragsöffnung (1013, 2013, 3013, 4013) des Reaktors zur Oxidation in überkritischem Wasser (100, 200, 300, 400, 500, 184, 2000, 2100, 2200); und
Trennen des Abflusses durch Verwendung der Trennungsvorrichtung (185).

## Revendications

1. Réacteur d'oxydation en eau supercritique (100, 200, 300, 400, 500, 184, 2000, 2100, 2200), comprenant :
un carter (101, 201, 301, 401) équipé d'au moins une entrée de boue (1011, 2011, 3011, 4011), d'une entrée d'oxydant (1012, 2012, 3012, 4012) et d'un orifice de décharge (1013, 2013, 3013, 4013), une chambre pour fournir une zone de réaction étant formée à l'intérieur du carter;
un dispositif de chauffage (102, 202, 302, 402) configuré pour augmenter une température dans la chambre ; et
un tuyau de circulation en spirale (103, 203, 303, 403) disposé dans la chambre et ayant une extrémité connectée à l'entrée de boue (1011, 2011, 3011, 4011), une boue étant introduite dans le tuyau de circulation en spirale (103, 203, 303, 403) à partir de l'entrée de boue (1011, 2011, 3011, 4011) s'écoulant le long d'un conduit du tuyau de circulation en spirale (103, 203, 303, 403) et s'écoulant hors d'une autre extrémité du tuyau de circulation en spirale (103, 203, 303, 403),
dans lequel, après l'écoulement hors de l'autre extrémité du tuyau de circulation en spirale (103, 203, 303, 403), la boue est mélangée avec un oxydant s'écoulant dans la chambre de la sortie d'oxydant et une réaction d'oxydation de la boue et de l'oxydant se produit,
le réacteur comprenant en outre :
un tube de retour à tournant (204, 304, 404) prévu à l'intérieur de la chambre, le tube de retour à tournant (204, 304, 404) comprenant un tube interne (2041, 3041, 4041) avec les deux extrémités ouvertes et un tube externe (2042, 3042, 4042) avec une extrémité ouverte, le tube externe (2042, 3042, 4042) étant mis en chemise à l'extérieur du tube interne (2041, 3041, 4041) et le tube interne (2041, 3041, 4041) étant en communication avec l'entrée d'oxydant (1012, 2012, 3012, 4012),
dans lequel le tube en retour à tournant (204, 304, 404) est disposé à un axe central de la chambre,
le réacteur comprenant en outre :
un agitateur (305, 405) comprenant un arbre de rotation (3051, 4051), l'arbre de rotation (3051, 4051) pénétrant le carter (101, 201, 301, 401) et s'étendant dans la chambre et/ou l'arbre de rotation (3051, 4051) passant à travers l'orifice de décharge (1013, 2013, 3013, 4013) et s'étendant dans la chambre.

2. Réacteur selon la revendication 1, dans lequel le carter (101, 201, 301, 401) comprend une première paroi d'extrémité, une paroi latérale et une seconde paroi d'extrémité opposée à la première paroi d'extrémité et dans lequel l'entrée de boue (1011, 2011, 3011, 4011) est disposée sur la paroi latérale, l'entrée d'oxydant (1012, 2012, 3012, 4012) est disposée sur la première paroi d'extrémité et l'agitateur (305, 405) et l'orifice de décharge (1013, 2013, 3013, 4013) sont disposés sur la seconde paroi d'extrémité.

3. Réacteur (100, 200, 300, 400, 500, 184, 2000, 2100, 2200) selon la revendication 2, comprenant en outre :
une gaine (1014) prévue dans la chambre, le tuyau de circulation en spirale (103, 203, 303, 403) étant enroulé le long d'une paroi externe de la gaine (1014), la gaine (1014) étant traitée par aluminisation, granulage par impact et pulvérisation d'un revêtement de barrière thermique comprenant une pluralité de couches d'aluminium et une pluralité de couches d'oxyde d'aluminium disposées en alternance ; ou
comprenant en outre :
un dispositif de refroidissement (406, 2206) prévu sur la paroi latérale et configuré pour refroidir un produit de réaction produit dans la chambre,
dans lequel le dispositif de chauffage (102, 202, 302, 402) et le dispositif de refroidissement (406, 2206) sont disposés côte à côte sur la paroi latérale et une distance entre le dispositif de chauffage (102, 202, 302, 402) et la première paroi d'extrémité est inférieure à une distance entre le dispositif de refroidissement (406, 2206) et la première paroi d'extrémité.

4. Système d'oxydation en eau supercritique, comprenant :
un dispositif d'apport d'eau (181) configuré pour fournir de l'eau et une solution cible ;
un dispositif d'apport d'oxydant (182) configuré pour fournir un oxydant pour une réaction d'oxydation en eau supercritique ;
un raffineur de déchiquetage de combustibles solides (183) configuré pour broyer un combustible solide en une boue ;
un réacteur d'oxydation en eau supercritique (100, 200, 300, 400, 500, 184, 2000, 2100, 2200) selon l'une quelconque des revendications 1 à 3, configuré pour recevoir la boue obtenue par broyage du combustible solide, l'oxydant, l'eau et la solution cible et pour fournir une zone de réaction pour la réaction d'oxydation en eau supercritique ; et
un appareil de séparation (185, 2400) configuré pour séparer une effluence du réacteur d'oxydation en eau supercritique.

5. Système d'oxydation en eau supercritique selon la revendication 4, dans lequel l'appareil de séparation (185, 2400) comprend :
un réservoir d'évaporation (2401) configuré pour recevoir une effluence du réacteur d'oxydation en eau supercritique (100, 200, 300, 400, 500, 184, 2000, 2100, 2200), l'effluence étant un mélange multi-phases, une première spire de refroidissement (2411) et un orifice de décharge de scories (2412) étant prévues dans le réservoir d'évaporation (2401), la première spire de refroidissement (2411) étant configurée pour stabiliser une température d'une solution dans le réservoir d'évaporation (2401) dans une plage de température cible après que le mélange multi-phases s'écoule dans le réservoir d'évaporation (2401) et l'orifice de décharge de scories étant configuré pour décharger une matière solide dans le mélange multi-phases ; et
un cylindre de refroidissement interne (2402) comprenant une seconde spire de refroidissement (2421) et un réservoir d'eau de condensation (2422), la seconde spire de refroidissement (2421) étant configurée pour refroidir une vapeur évaporée dans le réservoir d'évaporation (2401) et le réservoir d'eau de condensation (2422) étant configuré pour recevoir une matière liquide obtenue après que la vapeur est refroidie par la seconde spire de refroidissement (2421), le réservoir d'eau de condensation (2422) étant équipé d'un orifice de drainage pour drainer la matière liquide, une pluralité de trous étant prévus dans une paroi de cylindre du cylindre de refroidissement interne (2402) pour permettre à la vapeur évaporée dans le réservoir d'évaporation (2401) d'entrer dans le cylindre de refroidissement interne (2402),
dans lequel le réservoir d'évaporation (2401) et le cylindre de refroidissement interne (2402) sont enfermés dans un second carter, le réservoir d'évaporation (2401) est disposé au-dessous du cylindre de refroidissement interne (2402), et un orifice d'échappement est prévu sur une partie supérieure du second carter pour faire s'échapper une matière gazeuse dans le mélange multi-phases.

6. Système d'oxydation en eau supercritique, comprenant :
un réacteur d'oxydation en eau supercritique (100, 200, 300, 400, 500, 184, 2000, 2100, 2200) selon l'une quelconque des revendications 1 à 3, comprenant un carter de réacteur (510) équipé d'un orifice d'alimentation d'oxydant (502), d'un orifice d'alimentation de matière organique (501) et d'un orifice de décharge (503), un produit de réaction étant déchargé via l'orifice de décharge (503) du réacteur (100, 200, 300, 400, 500, 184, 2000, 2100, 2200),
un dispositif protecteur (600) comprenant une couche protectrice externe (610), une couche de refroidissement (630) et une couche protectrice interne (620), dans lequel :
la couche protectrice interne (620) et la couche protectrice externe (610) enferment pour former un premier espace et un second espace, le premier espace et le second espace sont séparés par la couche protectrice interne (620) et le premier espace sont un espace à l'extérieur du second espace ;
la couche de refroidissement (630) comprend un tuyau de liquide (631) autorisé à stocker un liquide et le tuyau de liquide (631) est disposé dans le premier espace ;
le réacteur (100, 200, 300, 400, 500, 184, 2000, 2100, 2200) est disposé dans le second espace et l'orifice de décharge (503) du réacteur (100, 200, 300, 400, 500, 184, 2000, 2100, 2200) s'étend à une région dans le premier espace différente d'une région où le tuyau de liquide (631) est situé, de sorte que le produit de réaction déchargé de l'orifice de décharge (503) est refroidi par le liquide stocké dans le tuyau de liquide (631) ;
un dispositif d'apport d'oxydant (700) en communication avec l'orifice d'alimentation d'oxydant (502) ;
et
un dispositif d'alimentation de matière organique (800) en communication avec l'orifice d'alimentation de matière organique (501).

7. Procédé de traitement d'un déchet organique radioactif mis en œuvre par le réacteur d'oxydation en eau supercritique (100, 200, 300, 400, 500, 184, 2000, 2100, 2200) selon l'une quelconque des revendications 1 à 3, comprenant :
le préchauffage de la chambre en utilisant le dispositif de chauffage (102, 202, 302, 402) ; l'alimentation d'une solution cible dans la chambre par l'entrée de boue (1011, 2011, 3011, 4011) en réponse à une température dans la chambre atteignant une première température et le chauffage en continu de la chambre jusqu'à ce que la température dans la chambre atteigne une seconde température ; l'alimentation d'une boue du déchet organique radioactif dans le tube de circulation en spirale (103, 203, 303, 403) par l'entrée de boue (1011, 2011, 3011, 4011), de sorte que la boue du déchet organique radioactif s'écoule le long du conduit du tuyau de circulation en spirale (103, 203, 303, 403) et s'écoule hors d'une autre extrémité du tuyau de circulation en spirale (103, 203, 303, 403) ; et, en réponse à la boue de déchet organique radioactif s'écoulant hors d'une autre extrémité du tuyau de circulation en spirale (103, 203, 303, 403), le mélange de la boue du déchet organique radioactif avec l'oxydant entrant dans la chambre de l'entrée d'oxydant (1012, 2012, 3012, 4012) de sorte qu'une réaction d'oxydation de la boue du déchet organique radioactif et de l'oxydant se produit.

8. Procédé de traitement d'un combustible solide mis en œuvre par le système d'oxydation en eau supercritique selon l'une quelconque des revendications 4 et 5, comprenant :
l'augmentation d'une température dans une chambre du réacteur d'oxydation en eau supercritique (100, 200, 300, 400, 500, 184, 2000, 2100, 2200) à une première température ;
l'alimentation d'un oxydant dans la chambre par le dispositif d'apport d'oxydant (182) ;
l'alimentation d'une solution cible dans la chambre par le dispositif d'apport d'eau (181) et le chauffage en continu de la chambre jusqu'à ce que la température dans la chambre atteigne une seconde température ;
le broyage du combustible solide en une boue en utilisant le raffineur de déchiquetage de combustibles solides (183) et l'alimentation de la boue dans la chambre de sorte qu'une réaction d'oxydation de la boue et de l'oxydant se produit et qu'une effluence est obtenue ;
l'alimentation de l'effluence dans l'appareil de séparation (185) par l'orifice de décharge (1013, 2013, 3013, 4013) du réacteur d'oxydation en eau supercritique (100, 200, 300, 400, 500, 184, 2000, 2100, 2200) ; et
la séparation de l'effluence en utilisant l'appareil de séparation (185).
